(19) Europäisches Patentamt
European Patent Office
Office européen des brevets

(11) Veröffentlichungsnummer: **0 229 339 B1**

# (12) EUROPÄISCHE PATENTSCHRIFT

(45) Veröffentlichungstag der Patentschrift: **16.05.90**

(51) Int. Cl.[5]: **D06P 1/38,** C09B 62/002, C07C 317/26, C07C 317/14, C07C 317/34

(21) Anmeldenummer: **86117375.5**

(22) Anmeldetag: **13.12.86**

(54) **Wasserlösliche Triphendioxazin-Verbindungen, deren sulfonylgruppenhaltigen Vorprodukte, Verfahren zu ihrer Herstellung und Verwendung der Triphendioxazine als Farbstoffe.**

(30) Priorität: **19.12.85 DE 3544982**

(43) Veröffentlichungstag der Anmeldung: **22.07.87 Patentblatt 87/30**

(45) Bekanntmachung des Hinweises auf die Patenterteilung: **16.05.90 Patentblatt 90/20**

(84) Benannte Vertragsstaaten: **BE CH DE FR GB IT LI**

(56) Entgegenhaltungen:
**EP-A- 0 199 036**
**DE-A- 3 439 755**

(73) Patentinhaber: **HOECHST AKTIENGESELLSCHAFT, Postfach 80 03 20, D-6230 Frankfurt am Main 80(DE)**

(72) Erfinder: **Springer, Hartmut, Dr., Am Erdbeerstein 27, D-6240 Königstein/Taunus(DE)**
Erfinder: **Schwaiger, Günther, Dr., Johannesallee 41, D-6230 Frankfurt am Main 80(DE)**
Erfinder: **Helmling, Walter, Dr., Fichtestrasse 29, D-6238 Hofheim am Taunus(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die vorliegende Erfindung liegt auf dem Gebiet der faserreaktiven Farbstoffe.

Aus der britischen Patentschrift 1 368 158, der japanischen Patentbekanntmachung Sho-60-18359 und der europäischen Patentanmeldungs-Veröffentlichung Nr. 0 101 665A sind faserreaktive Triphendioxazinverbindungen bekannt. Es bestand das technische Bedürfnis, faserreaktive Triphendioxazinverbindungen mit besseren Farbstoffeigenschaften zu finden.

Desweiteren werden in der nicht vorveröffentlichten (Art. 54(3) EPÜ) Europäischen Patentanmeldungs-Veröffentlichung Nr. 0 199 036 A2 faserreaktive Triphendioxazinfarbstoffe beschrieben, welche an den Phenresten jeweils einen nicht-faserreaktiven Sulfonylrest und desweiteren über ein mit einer Aminogruppe verbundenes Brückenglied einen faserreaktiven Rest enthalten, wobei der faserreaktive Rest beispielsweise ein solcher aus der halogensubstituierten heterocyclischen Reihe ist, an den auch eine (ß-Sulfatoethylsulfonyl)-phenylamino-Gruppe gebunden sein kann.

Es wurden nun neue wasserlösliche Triphendioxazin-Verbindungen entsprechend der allgemeinen Formel (1)

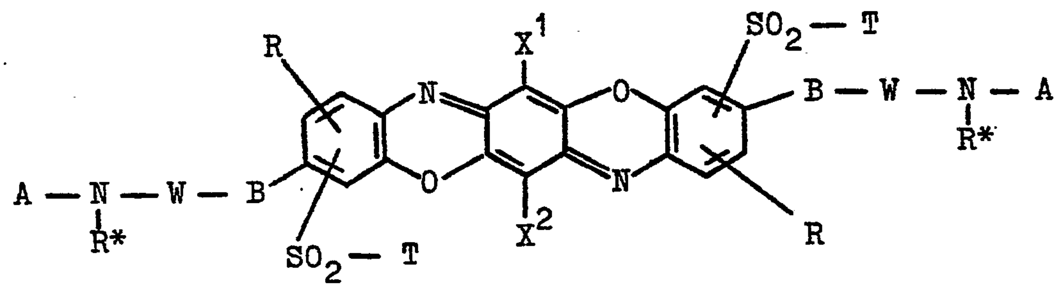

(1)

gefunden, die wertvolle faserreaktive Farbstoffeigenschaften besitzen.

In dieser Formel (1) bedeuten:

T ist eine gegebenenfalls substituierte Alkylgruppe von 1 bis 6 C-Atomen, bevorzugt von 1 bis 4 C-Atomen, ausgenommen eine in β-Stellung durch einen alkalisch eliminierbaren Substituenten substituierte Ethylgruppe, wobei die Alkylgruppe noch durch Heterogruppen, bevorzugt 1 oder 2 Heterogruppen, unterbrochen sein kann, die aus Gruppen der Formeln -O- , -S- , -NH- und -N(R')- ,

worin

R' eine Alkylgruppe von 1 bis 6 C-Atomen, bevorzugt von 1 bis 4 C-Atomen, wie insbesondere die Methyl- oder Ethylgruppe, ist, die substituiert sein kann, ausgewählt sind, oder

T ist eine gegebenenfalls substituierte Arylgruppe;

B ist ein Sauerstoff- oder Schwefelatom oder eine Aminogruppe der Formel -NH- oder -N(R'')- ,

in welcher

R'' eine Alkylgruppe von 1 bis 6 C-Atomen, bevorzugt von 1 bis 4 C-Atomen, wie insbesondere die Methyl- oder Ethylgruppe, ist, die substituiert sein kann, oder

B bildet zusammen mit W eine direkte Bindung;

W bildet zusammen mit B eine direkte Bindung oder

W ist ein bivalenter, gegebenenfalls substituierter aliphatischer, araliphatischer, heterocyclischer oder aromatisch-carbocyclischer Rest, wobei die aliphatischen Reste in W durch Heterogruppen, bevorzugt 1 oder 2 Heterogruppen, unterbrochen sein können und diese Heterogruppen aus Gruppen der Formeln -O-, -S-, $-SO_2-$, -NH- , $-N(R^o)-$ und einem bivalenten heterocyclischen Rest ausgewählt sind,

worin

$R^o$ eine Alkylgruppe von 1 bis 6 C-Atomen, bevorzugt von 1 bis 4 C-Atomen, wie insbesondere die Methyl- oder Ethylgruppe, ist, die substituiert sein kann,

und/oder wobei die aliphatischen Reste und Arylreste durch eine solche Heterogruppe miteinander verbunden sein können;

R ist ein Wasserstoffatom oder ein Alkyl von 1 bis 4 C-Atomen, wie insbesondere hiervon Methyl und Ethyl, das substituiert sein kann, oder ein Alkoxy von 1 bis 4 C-Atomen, wie insbesondere hiervon Methoxy und Ethoxy, das substituiert sein kann, oder ein Halogen, wie Fluor und Brom und insbesondere Chlor;

R* ist ein Wasserstoffatom oder eine Alkylgruppe von 1 bis 4 C-Atomen, die substituiert sein kann, oder eine Cycloalkylgruppe von 5 bis 8 C-Atomen, oder

R* und $R^o$ bilden zusammen mit den beiden Stickstoffatomen und dem bivalenten Rest W oder einem Teil des Restes W den Rest eines fünf- oder sechs-gliedrigen Heterocyclus (vorzugsweise gesättigten Heterocyclus);

A ist eine nicht-heterocyclische faserreaktive Gruppe, bevorzugt aus der aliphatischen Reihe, oder

A ist ein Rest der allgemeinen Formel (2)

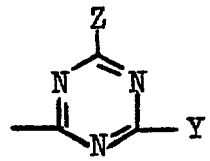

(2)

in welcher
Z ein Fluor-, Brom- oder Chloratom ist, bevorzugt ein Chloratom bedeutet, und
Y eine der Bedeutungen von Z besitzt, bevorzugt hiervon die gleiche Bedeutung, oder eine Aminogruppe der allgemeinen Formel (3a)

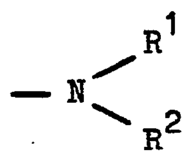

(3a)

ist, in welcher
$R^1$ ein Wasserstoffatom oder eine gegebenenfalls substituierte Alkylgruppe von 1 bis 6 C-Atomen, bevorzugt von 1 bis 4 C-Atomen, ist, wobei einer dieser Substituenten auch eine faserreaktive Gruppe sein kann, oder $R^1$ eine Cycloalkylgruppe mit 5 bis 8 C-Atomen ist und
$R^2$ ein Wasserstoffatom oder eine Alkylgruppe von 1 bis 6 C-Atomen, vorzugsweise von 1 bis 4 C-Atomen, ist, wobei die Alkylgruppe substituiert sein kann und wobei einer dieser Substituenten auch eine faserreaktive Gruppe sein kann, oder $R^2$ eine Cycloalkylgruppe mit 5 bis 8 C-Atomen ist oder eine Arylgruppe ist, die substituiert sein kann, wobei einer oder zwei dieser Substituenten im Arylrest auch eine faserreaktive Gruppe sein kann, oder $R^2$ ein heterocyclischer Rest ist oder
$R^1$ und $R^2$ zusammen mit dem N-Atom und gegebenenfalls einem weiteren Heteroatom, wie -O-, -S-, -NH- oder =N- , einen heterocyclischen, bevorzugt gesättigt-heterocyclischen, Rest, wie den Morpholino-, Piperidino- oder Piperazino-Rest, bilden, oder
Y ist ein Rest der Formel (3b)

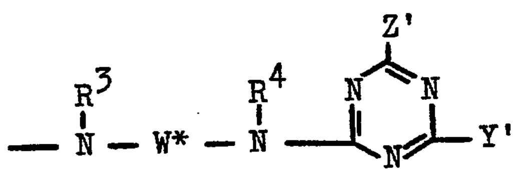

(3b)

in welcher $R^3$ und $R^4$ jedes ein Wasserstoffatom oder eine Alkylgruppe von 1 bis 4 C-Atomen, wie die Methyl- oder Ethylgruppe, bedeutet, Z′ ein Fluor- oder Bromatom oder bevorzugt ein Chloratom ist, Y′ eine der Bedeutungen von Y, ausgenommen die Bedeutung einer Gruppe der Formel (3b), besitzt und W* eine der Bedeutungen von W hat;
$X^1$ ist ein Wasserstoffatom oder ein Halogenatom, wie Fluor, insbesondere ein Chlor- oder Bromatom, eine Cycloalkylgruppe von 5 bis 8 C-Atomen, wie die Cyclohexylgruppe, eine Aralkyloxygruppe, eine Alkoxygruppe von 1 bis 4 C-Atomen, wie die Methoxygruppe, eine Aryloxygruppe, eine Alkylgruppe von 1 bis 4 C-Atomen, wie die Methylgruppe, eine Arylgruppe, eine Aralkylgruppe, eine Cyangruppe, eine Carboxygruppe, eine Carbalkoxygruppe von 2 bis 5 C-Atomen, wie die Carbomethoxy- oder Carbethoxygruppe, eine Arylaminogruppe, eine Carbamoylgruppe, eine N-Alkyl-carbamoyl-Gruppe oder N,N-Dialkylcarbamoyl-Gruppe mit Alkylresten von jeweils 1 bis 4 C-Atomen, eine N-Aryl-carbamoyl-Gruppe, eine Alkanoylaminogruppe von 2 bis 5 C-Atomen, wie die Acetylaminogruppe, oder eine Aroylaminogruppe, wie die Benzoylaminogruppe, wobei die Arylreste in diesen genannten Gruppen bevorzugt Phenylreste sind, die noch durch 1 oder 2 Substituenten aus der Gruppe Halogen, wie Chlor, Nitro, Alkyl von 1 bis 4 C-Atomen, Alkoxy von 1 bis 4 C-Atomen, Carboxy und Sulfo substituiert sein können und wobei $X^1$ bevorzugt ein Wasserstoffatom, eine Alkanoylaminogruppe von 2 bis 5 C-Atomen, eine Phenoxygruppe, die substituiert sein kann, eine Alkoxygruppe von 1 bis 4 C-Atomen, eine Alkylgruppe von 1 bis 4 C-Atomen und insbesondere bevorzugt ein Chloratom oder Bromatom ist;
$X^2$ ist mit $X^1$ gleich oder von $X^1$ verschieden und hat eine der für $X^1$ angegebenen Bedeutungen;
die Gruppe $-SO_2-T$ steht bevorzugt in ortho-Stellung zur Gruppe -B-W-N(R*)-A gebunden;
von den Sulfo- und Sulfatogruppen, die im Molekül (1) enthalten sein können, enthält das Molekül (1) zwingend mindestens eine, bevorzugt mindestens zwei davon.

Die einzelnen, auch die zweifach erscheinenden Formelglieder können zueinander gleiche oder voneinander verschiedene Bedeutungen besitzen. Bevorzugt besitzen die zweifach erscheinenden Formelglieder die gleich Bedeutung.

Arylreste in den obengenannten oder nachstehend genannten Gruppen sind insbesondere die Phenyl- und Naphthylreste; sie können substituierte sein, wie beispielsweise durch Substituenten aus der Gruppe Alkyl von 1 bis 4 C-Atomen, wie Methyl und Ethyl, Alkoxy von 1 bis 4 C-Atomen, wie Methoxy und Ethoxy, Halogen, wie Chlor und Brom, Sulfo, Carboxy, Sulfamoyl, Carbamoyl, durch Phenyl, Alkyl von 1 bis 4 C-Atomen, Phenylalkyl mit einem Alkylrest von 1 bis 4 C-Atomen und/oder Cycloalkyl von 5 bis 8 C-Atomen mono- oder disubstituiertes Carbamoyl, durch Phenyl, Alkyl von 1 bis 4 C-Atomen, Phenylalkyl mit einem Alkylrest von 1 bis 4 C-Atomen und/oder cycloalkyl von 5 bis 8 C-Atomen mono- oder disubstituiertes Sulfamoyl, Trifluormethyl, Alkanoylamino von 2 bis 5 C-Atomen, Nitro, Amino und gegebenenfalls mono- oder disubstituiertes Amino, wobei dessen Substituenten gegebenenfalls substituiertes aliphatische (einschließlich araliphatische), gegebenenfalls substituierte Aryl- und ($C_5$-$C_8$)-Cycloalkyl-Reste sind.

Arylreste in den araliphatischen Resten sind insbesondere Phenylen- und Naphthylenreste; sie können substituiert sein, wie beispielsweise durch Substituenten aus der Gruppe Alkyl von 1 bis 4 C-Atomen, wie Methyl und Ethyl, Alkoxy von 1 bis 4 C-Atomen, wie Methoxy und Ethoxy, Halogen, wie Chlor und Brom, Sulfo, Carboxy, Sulfamoyl, Carbamoyl, durch Phenyl, Alkyl von 1 bis 4 C-Atomen, Phenylalkyl mit einem Alkylrest von 1 bis 4 C-Atomen und/oder Cycloalkyl von 5 bis 8 C-Atomen mono- oder disubstituiertes Carbamoyl, durch Phenyl, Alkyl von 1 bis 4 C-Atomen, Phenylalkyl mit einem Alkylrest von 1 bis 4 C-Atomen und/oder Cycloalkyl von 5 bis 8 C-Atomen mono- oder disubstituiertes Sulfamoyl, Trilfuormethyl, Alkanoylamino von 2 bis 5 C-Atomen, Nitro, Amino und gegebenenfalls mono- oder disubstituiertes Amino, wobei dessen Substituenten gegebenenfalls substituierte aliphatische (einschließlich araliphatische), gegebenenfalls substituierte Aryl- und ($C_5$-$C_8$)-Cycloalkyl-Reste sind.

Aromatisch carbocyclische Reste sind beispielsweise Phenylen- und Naphthylen- bzw. Phenyl- und Naphthylreste, die substituiert sein können, wie beispielsweise durch Substituenten aus der Gruppe Alkyl von 1 bis 4 C-Atomen, wie Methyl und Ethyl, Alkoxy von 1 bis 4 C-Atomen, wie Methoxy und Ethoxy, Halogen, wie Chlor und Brom, Sulfo, Carboxy, Sulfamoyl, Carbamoyl, durch Phenyl, Alkyl von 1 bis 4 C-Atomen, Phenylalkyl mit einem Alkylrest von 1 bis 4 C-Atomen und/oder Cycloalkyl von 5 bis 8 C-Atomen mono- oder disubstituiertes Carbamoyl, durch Phenyl, Alkyl von 1 bis 4 C-Atomen, Phenylalkyl mit einem Alkylrest von 1 bis 4 C-Atomen und/oder Cycloalkyl von 5 bis 8 C-Atomen mono- oder disubstituiertes Sulfamoyl, Trifluormethyl, Alkanoylamino von 2 bis 5 C-Atomen, Nitro, Amino und gegebenenfalls mono- oder disubstituiertes Amino, wobei dessen Substituenten gegebenenfalls substituierte aliphatische (einschließlich araliphatische), gegebenenfalls substituierte Aryl- und ($C_5$-$C_8$)-Cycloalkyl-Reste sind. Hiervon bevorzugt sind insbesondere solche Phenylen- oder Phenylreste, die durch Substituenten aus der Gruppe Alkyl von 1 bis 4 C-Atomen, Alkoxy von 1 bis 4 C-Atomen und Sulfo und/oder durch eine gegebenenfalls mono- oder disubstituierte Aminogruppe substituiert sein können.

Aliphatische Reste schließen geradkettige, verzweigte und cyclische Aliphaten oder eine Kombination hiervon ein. So sind aliphatische Reste beispielsweise Alkylgruppen oder Alkylengruppen von jeweils 1 bis 6 C-Atomen, bevorzugt 1 bis 4 C-Atomen, die substituiert sein können. Substituierte Alkyl- und Alkylengruppen, einschließlich der substituierten Alkylgruppen des Formelrestes T, sind beispielsweise solche, die durch 1 oder 2 Substituenten aus der Gruppe Chlor, Alkoxy von 1 bis 4 C-Atomen, Alkanoylamino von 2 bis 5 C-Atomen, Cyano, Sulfato, Phosphato, Acetyloxy, Sulfo, Carboyx oder gegebenenfalls substituierten Aryl substituiert sein können (bevorzugte Substituenten sind hiervon die Carboxy- und Sulfogruppen), oder Reste von Cycloalkylgruppen mit 5 bis 8 C-Atomen, wie bspw. Cyclopentan- und Cyclohexanreste, die Methyl- und Ethylgruppen als Substituenten enthalten können.

Im vorstehenden und nachfolgenden sind Sulfogruppen Gruppen entsprechend der allgemeinen Formel $-SO_3M$ , Carboxygruppen Gruppen entsprechend der allgemeinen Formel -COOM , Sulfatogruppen Gruppen entsprechend der allgemeinen Formel $-OSO_3M$ , Thiosulfatogruppen Gruppen entsprechend der allgemeinen Formel $-S-SO_3M$ und Phosphatogruppen Gruppen entsprechend der allgemeinen Formel $-OPO_3M_2$ ,

wobei M hier, wie auch später, die folgende Bedeutung besitzt:

M ist ein Wasserstoffatom oder ein Alkalimetall, wie Natrium, Kalium und Lithium, oder das Äquivalent eines Erdalkalimetalls, wie beispeilsweise des Calciums, insbesondere jedoch ein Alkalimetall.

Die Formelglieder W sind beispielsweise Cycloalkylengruppen von 5 oder 6 C-Atomen mit 1 bis 3 Methylgruppen als Substituenten oder sind Alkylengruppen von 2 bis 6 C-Atomen, insbesondere von 2 bis 4 C-Atomen, wobei deren Alkylenkette durch eine oder zwei cycloaliphatische Reste oder durch 1 oder 2 Heterogruppen unterbrochen sein kann, die bevorzugt aus den Gruppen -O-, -NH- , -N($R^o$)- mit $R^o$ der obigen Bedeutung und einem heterocyclischen Rest, bevorzugten hiervon gesättigten heterocyclischen Rest, wie bspw. dem bivalenten N,N-Piperidinorest, ausgewählt sind, oder sind ein Alkylen-phenylen-, ein Phenylen-alkylen-, ein Phenylenalkylen-phenylen- oder Alkylen-phenylen-alkylen-Rest, wobei in diesen araliphatischen Resten die Alkylenreste solche von 1 bis 6, bevorzugt 1 bis 4 C-Atomen sind und gegebenenfalls durch die angegebenen Substituenten substituiert und/oder durch eine oder zwei der genannten Heterogruppen unterbrochen sein können und die Benzolkerne jeweils noch durch 1 oder 2 Substituenten substituiert sein können, die aus der Gruppe der Substituenten von Sulfo, Carboxy, Sulfamoyl, Carbamoyl, Methyl, Ethyl, Methoxy, Ethoxy, Nitro, Amino, durch gegebenenfalls substituierte aliphatische und/oder gegebenenfalls substituierte Arylreste substituiertes Amino und Chlor ausgewählt sind, wobei im Falle, daß eine Alkylengruppe durch Heterogruppen unterbrochen ist, deren Alkylenanteile darin bevorzugt solche von 2 oder 3 C-Atomen sind, und wobei die aliphatischen Arylreste noch durch ein Sauerstoffatom oder eine Gruppe -NH- verbunden sein können. Die Formglieder W sind weiterhin bevorzugt ein Phenylenrest, insbesondere ein meta- oder para-Phenylenrest, der noch durch 1 oder 2 Substituenten aus der Gruppe Sulfo, Carboxy, Sulfamoyl, Carbamoyl, Methyl, Ethyl, Methoxy, Ethoxy, Amino, durch gegebenenfalls substituierte aliphatische und/oder gegebenenfalls substituierte Arylreste substituiertes Amino und Chlor, bevorzugt jedoch durch Sulfo, substituiert sein kann, oder eine gegebenenfalls durch Sulfo substituierter Naphthylenrest.
Bevorzugt ist W ein Alkylenrest von 2 bis 4 C-Atomen oder ein Phenylrest, der durch 1 oder 2 Substituenten aus der Gruppe Sulfo, Carboxy, Methyl, Methoxy, Ethoxy und Chlor substituiert sein kann, oder ein Alkylenphenylen-Rest aus diesen Resten, wobei diese auch durch ein Sauerstoffatom, eine Cyclohexylen-, eine Monomethyl-, oder Dimethylcyclohexylen-Gruppe oder eine Gruppe -NH- , $-N(CH_3)-$ oder Piperidin-Gruppe miteinander verbunden sein können..

Ein Rest W ist beispielsweise der meta- oder para-Phenylenrest, der 1,2-Ethylen- oder 1,3-Propylrest oder ein 2-Methyl-1,2-ethylen-, 1-Methyl-1,2-ethylen-, 2-Ethyl-1,2-ethylen-, 1-Ethyl-1,2-ethylen-, 1-Methyl-1,3-propylen-, 3-Methyl-1,3-propylen-, 1,2-Dimethyl-1,2-ethylen-, 1,4-Butylen-, 1-Carboxy-1,5-pentylen-, 5-Carboxy-1,5-penthylen-, 2-Sulfato-1,3-propylen-, 2-Carboxy-1,3-propylen-, 2-Methyl-1,3-propylen-, 2,2-Dimethyl-1,3-propylen-, 1,3-Dimethyl-1,3-propylen-, 2-Methoxy-1,3-propylen-, 1,4-Dimethyl-1,4-butylen-, 1,5-Pentylen- oder ein 1,6-Hexylen-Rest oder ein Rest der allgemeinen Formel $-CH_2-CH_2-Q-CH_2-CH_2-$ , in welcher Q für den Formelrest -O- , -S- , $-SO_2-$ , -NH- oder $-N(CH_3)-$ steht, oder W ist beispielsweise ein 1,2-Cyclohexylen-, 1,4-Cyclohexylen-, 1,4-Cyclohexylen-, 4-Methyl-1,3-cyclohexylen-, 6-Methyl-1,3-cyclohexylen-, 2-Methyl-1,3-cyclohexylen-, 5,5-Dimethyl-1,3-cyclohexylen-, 2-Methyl-1,4-cyclohexylen-, 5-Methyl-1,4-cyclohexylen- oder ein 4,6-Dimethyl-1,3-cyclohexylen-Rest oder ein Rest der Formel

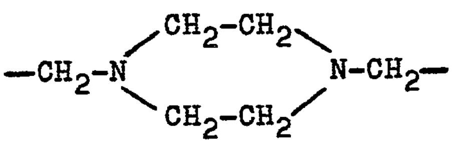, 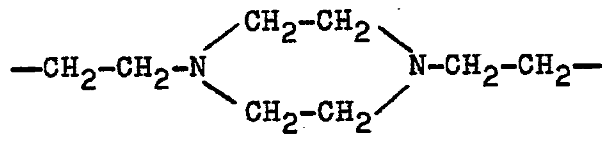,

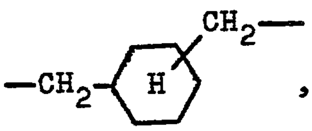, 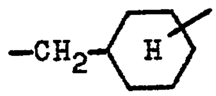, 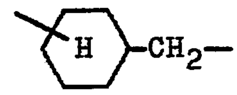,

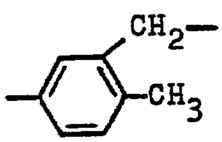, 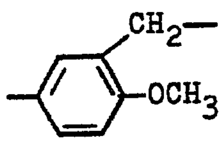, 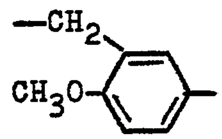,

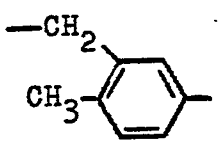, 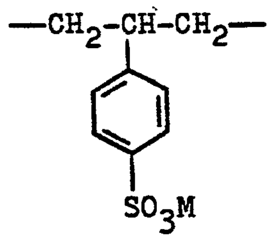, 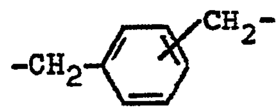,

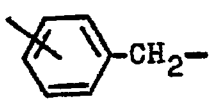, 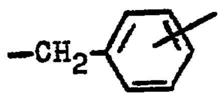, 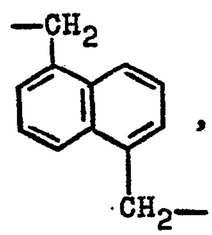, 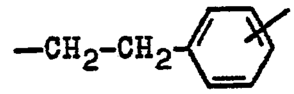,

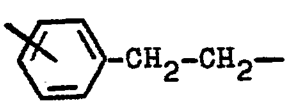, 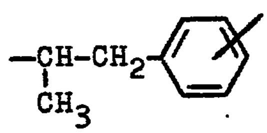 oder 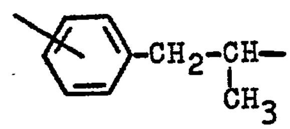.

Weitere aromatische Brückenglieder von W sind beispielsweise der 1,2-Phenylen-, 3-Methyl-1,2-phenylen-, 4-Methyl-1,2-phenylen-, 2-Methyl-1,3-phenylen-, 4-Methyl-1,3-phenylen-, 5-Methyl-1,3-phenylen-, 2-Methyl-1,4-phenylen-, 2,4,6-Trimethyl-1,3-phenylen-, 2,3,5,6-Tetramethyl-1,4-phenylen-, 2,5-Dimethyl-1,3-phenylen-, 2-Methyl-6-ethyl-1,3-phenylen-, 2-Methyl-4,6-diethyl-1,3-phenylen-, 2,6-Diethyl-4-methyl-1,3-phenylen-, 2-Methoxy-1,3-phenylen-, 4-Methoxy-1,3-phenylen-, 6-Methoxy-1,3-phenylen-, 2-Methoxy-1,4-phenylen-, 4-Chlor-1,3-phenylen-, 2-Chlor-1,4-phenylen-, 4-Chlor-1,3-phenylen-, 2-Chlor-1,4-phenylen-, 3-Carboxy-1,4-phenylen-oder 4-Carboxy-1,3-phenylen-Rest, weiterhin insbesondere die durch 1 oder 2 Sulfogruppen substituierte Phenylen- und Naphthylenreste, wie zum Beispiel 4-Sulfo-1,2-phenylen, 4-Sulfo-1,3-phenylen, 3-Sulfo-1,4-phenylen, 2-Sulfo-1,4-phenylen, 4,6-Disulfo-1,3-phenylen, 2,5-Disulfo-1,4-phenylen, 2-Methyl-5-sulfo-1,3-phenylen, 2-Methyl-4-sulfo-1,3-phenylen, 2,4,6-Trimethyl-5-sulfo-1,3-phenylen, 2,6-Dimethyl-4- und -5-sulfo-1,3-phenylen, 2-Methyl-6-sulfo-1,3-phenylen, 4-Methyl-6-sulfo-1,3-phenylen, 6-Methyl-4-sulfo-1,3-phenylen, 3-Methyl-6-sulfo-1,4-phenylen, 6-Methoxy-4-sulfo-1,3-phenylen, 4-Methoxy-6-sulfo-1,3-phenylen oder 4,8-Disulfo-2,6-naphthylen.

Heterocyclische Gruppierungen, die sich gemeinsam aus den Resten R*, $R^o$ und W mit den beiden Stickstoffatomen bilden, sind beispielsweise solche der Formeln

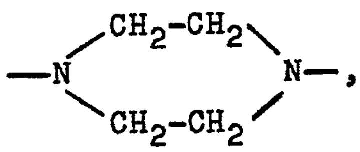

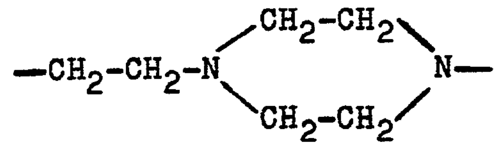

und

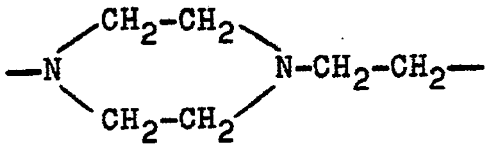

Die Substituenten R*, R', R'' und $R^o$ sind als substituierte Alkylgruppen bevorzugt solche Alkylgruppen von 1 bis 4 C-Atomen, die durch einen Phenylrest, eine Phosphatogruppe oder eine Alkoxygruppe von 1 bis 4 C-Atomen, bevorzugt jedoch durch 1 oder 2 Substituenten, insbesondere 1 Substituenten, aus der Gruppe Carboxy, Sulfo und Sulfato substituiert sind. Bevorzugt jedoch bedeuten R*, R', R'' und $R^o$ jedes ein Wasserstoffatom.

In der Aminogruppe der allgemeinen Formel (3a) bedeutet $R^1$ insbesondere eine Wasserstoffatom, eine Alkylgruppe von 1 bis 4 C-Atomen, wie die Methyl- oder Ethylgruppen, oder eine Alkylgruppe von 1 bis 4 C-Atomen, die durch 1 oder 2 Substituenten, bevorzugt 1 Substituenten, aus der Gruppe Alkoxy von 1 bis 4 C-Atomen, Chlor, Cyano, Carboxy, Sulfo, Sulfato, Phosphato, Hydroxy, Phenyl, Naphthyl, substituiertes Phenyl, substituiertes Naphthyl und 1 Gruppe der später genannten und definierten Formel (4a), (4b), (5a) oder (5b) substituiert ist. Substituierte Phenylreste sind hierbei insbesondere solche, die durch 1, 2 oder 3 Substituenten substituiert sind, die aus der Menge von 3 Alkylgruppen von 1 bis 4 C-Atomen, wie hiervon insbesondere die Methylgruppen, 2 Alkoxygruppen von 1 bis 4 C-Atomen, wie hiervon insbesondere die Methoxy- oder Ethoxygruppen, 1 Bromatom, 2 Chloratome, 2 Sulfogruppen und1 Carboxygruppe ausgewählt sind. Substituierte Naphthylreste sind hierbei insbesondere solche, die durch 1, 2 oder 3 Sulfogruppen oder 1, 2 oder 3 Substituenten substituiert sind, die aus der Menge von 2 Sulfogruppen, 1 Carboxygruppe, 1 Chloratom, 1 Alkylgruppe von 1 bis 4 C-Atomen, wie hiervon insbesondere die Methylgruppe, und 1 Alkoxygruppe von 1 bis 4 C-Atomen, wie insbesondere hiervon die Methoxy- oder Ethoxygruppe, substituiert sind.

Die Formeln (4a), (4b), (5a) und (5b) sind:

$$-SO_2-CH=CH_2 \qquad (4a)$$

$$-SO_2-CH_2-CH_2-E \qquad (4b)$$

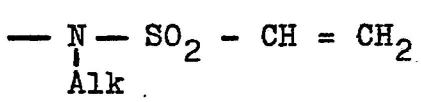

(5a)

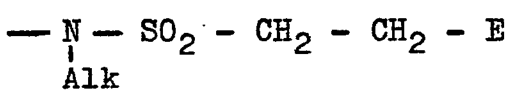

(5b)

in welchen
E für einen alkalisch eliminierbaren Substituenten steht und
Alk ein Wasserstoffatom, bevorzugt jedoch eine Alkylgruppe von 1 bis 4 C-Atomen, wie insbesondere die Methyl- oder Ethylgruppe, bedeutet.

Die faserreaktiven Gruppen der Formeln (4a) und (4b) sind bevorzugt.

Der Substituent $R^2$ bedeutet insbesondere ein Wasserstoffatom, eine Alkylgruppe von 1 bis 4 C-Atomen, den Phenylrest, den Cyclohexylrest oder einen durch 1, 2 oder 3 Sulfogruppen substituierten Naphthylrest, bevorzugt jedoch einen substituierten Phenylrest oder einen subsituierten Alkylrest von 1 bis

4 C-Atomen oder einen Naphthylrest, der durch 1, 2 oder 3 Substituenten aus der Menge von 2 Sulfogruppen und 1 Gruppe der oben genannten und definierten Formel (4a), (4b), (5a) oder (5b) substituiert ist. Substituierte Phenylreste sind hierbei insbesondere solche, die durch 1, 2 oder 3 Substituenten, bevorzugt 1 oder 2 Substituenten, substituiert sind, die aus der Menge von 3 Alkylgruppen von 1 bis 4 C-Atomen, wie hiervon insbesondere die Methylgruppen, 2 Alkoxygruppen von 1 bis 4 C-Atomen, wie hiervon insbesondere die Methoxy- und Ethoxygruppen, 1 Bromatom, 2 Chloratomen, 2 Sulfogruppen, 1 Carboxygruppe und1 Gruppe der obengenannten und definierten Formel (4a), (4b), (5a) oder (5b) ausgewählt sind, und substituierte Alkylgruppen sind hierbei insbesondere solche Alkylgruppen von 1 bis 4 C-Atomen, die durch 1 oder 2 Substituenten, bevorzugt 1 Substituenten, aus der Gruppe Alkoxy von 1 bis 4 C-Atomen, Sulfo, Sulfato, Phosphato, Carboxy, Chlor, Cyano, Hydroxy, Cyclohexyl, einer Gruppe der Formel (4a), (4b), (5a) oder (5b), Phenyl, Naphthyl, substituiertes Phenyl und substituiertes Naphthyl substituiert sind, wobei die substituierten Phenylgruppen hierbei bevorzugt Phenylgruppen mit 1, 2 oder 3, bevorzugt 1 oder 2, Substituenten sind, die aus der Menge von 3 Alkylgruppen von 1 bis 4 C-Atomen, wie hiervon insbesondere die Methylgruppen, 2 Alkoxygruppen von 1 bis 4 C-Atomen, wie hiervon insbesondere die Methoxy- und Ethoxygruppen, 1 Bromatom, 2 Chloratomen, 2 Sulfogruppen, 1 Carboxygruppe und1 Gruppe der obengenannten und definierten Formel (4a), (4b), (5a) oder (5b) ausgewählt sind, und wobei weiterhin substituierte Naphthylgruppen hierbei bevorzugt Mono-, Di- und Trisulfo-naphthyl-Gruppen oder durch 1, 2 oder 3 Substituenten aus der Menge von 2 Sulfogruppen und 1 Gruppe der Formel (4a), (4b), (5a) oder (5b) substituierte Naphthylreste sind.

Befindet sich ein Rest der Formeln (4) und (5) an den Benzolkern eines Phenylaminorestes gebunden, so steht er bevorzugt in meta- oder para-Stellung zu dessen Aminogruppe. Ist der Rest der Formel (4a) oder (4b) an einen Alkylaminorest gebunden, so ist der Alkylrest bevorzugt ein Alkylenrest von 2 bis 4 C-Atomen, an den der Rest der Formel (4) endständig gebunden ist.

Substituenten E, die durch ein Alkali unter Bildung der Vinylgruppe eliminiert werden können, sind beispielsweise Alkanoyloxygruppen von 2 bis 5 C-Atomen, wie die Acetyloxygruppe, oder eine Acylgruppe einer Arylcarbonsäure, einer Arylsulfonsäure oder einer Alkansulfonsäure, wie beispielsweise die Benzoyloxy-, Sulfobenzoyloxy-, p-Methyl-phenylsulfonyloxy- oder Methylsulfonyloxy-Gruppe, desweiteren Dialkylaminogruppen mit Alkylresten von 1 bis 4 C-Atomen, wie die Dimethylamino- oder Diethylaminogruppe, Trialkylammoniumgruppen mit Alkylresten von 1 bis 4 C-Atomen, wie die Trimethylammoniumgrupppe, das Chloratom, das Bromatom, eine Phosphatogruppe, Thiosulfato- oder Sulfatogruppe. Bevorzugt sind hiervon das Chloratom, die Phosphato-, Acetyloxy- und Thiosulfatogruppe und insbesondere die Sulfatogruppe.

Der Formelrest T ist beispielsweise eine Methyl-, Ethyl-, Propyl-, Benzyl- oder Phenylgruppe oder eine durch Sulfo oder Carboxy substituierte Ethyl- oder Propylgruppe oder eine durch Sulfato substituierte n-Propylgruppe oder eine durch 1 oder 2 Sulfogruppen subtituierte Benzyl- oder Phenylgruppe. Der Formelrest T ist bevorzugt ein Alkylrest von 1 bis 6 C-Atomen, insbesondere von 1, 2 oder 3 C-Atomen, der durch eine Sulfo- oder Carboxygruppe substituiert sein kann; insbesondere ist T die Methyl-, Ethyl- oder β-Sulfoethyl-Gruppe.

Der Formelrest B ist bevorzugt die Aminogruppe -NH- , und R ist bevorzugt ein Wasserstoffatom.

Bevorzugt ist der Formelrest W ein geradkettiger oder verzweigter Alkylenrest von 2 bis 4 C-Atomen, bevorzugt von 2 oder 3 C-Atomen, oder eine meta- oder para-Phenylengruppe, die durch 1 oder 2 Sulfogruppen substituiert sein kann.

Bevorzugt ist Y eine Phenylaminogruppe, die durch 1 oder 2 Sulfogruppen oder durch 1 Vinylsulfonylgruppe oder 1 β-Sulfatoethylsulfonyl-Gruppe substituiert ist, oder ist eine Benzyl- oder Phenethylgruppe, die im Benzolkern durch 1 Vinylsulfonylgruppe oder 1 β-Sulfatoethylsulfonylgruppe substituiert ist; bevorzugt hiervon ist Y eine Phenylaminogruppe, die in meta- oder para-Stellung zur Aminogruppe durch 1 Vinylsulfonylgruppe oder insbesondere durch 1 β-Sulfatoethylsulfonyl-Gruppe substituiert ist.

Der Formelrest Y' ist bevorzugt eine Phenylaminogruppe, die durch 1 oder 2 Sulfogruppen substituiert ist.

W* ist bevorzugt ein Alkylenrest von 2 oder 3 C-Atomen oder eine meta- oder para-Phenylengruppe, die durch1 oder 2 Sulfogruppen substituiert sein kann.

Die Formelglieder $R^3$ und $R^4$ bedeuten bevorzugt ein Wasserstoffatom.

Aminogruppen der allgemeinen Formel (3a) sind beispielsweise die primäre Aminogruppe selbst, die Methylamino-, Ethylamino-, n-Propylamino-, Isopropylamino-, n-Butylamino-, n-Hexylamino-, β-Methoxyethyl-amino-, γ-Methoxypropyl-amino-, β-Ethoxyethyl-amino-, N,N-Dimethylamino-, N,N-Diethylamino-, β-Chlorethyl-amino-, β-Cyanoethyl-amino-, γ-Cyanopropyl-amino-, β-Carboxyethyl-amino-, Sulfomethyl-amino-, β-Sulfoethyl-amino-, β-Hydroxyethyl-amino-, N,N-Di-(β-hydroxyethyl)-amino-, γ-Hydroxypropyl-amino, Bis-[β-(β'-chlorethylsulfonyl)-ethyl ]-amino-, Benzyl-amino-, Phenethylamino-, Cyclohexylamino-, N-Methyl-N-phenyl-amino-, N-Ethyl-N-phenylamino-, N-Propyl-N-phenyl-amino-, N-Butyl-N-phenyl-amino-, N-β-Cyanoethyl-N-phenyl-amino-, N-Ethyl-N-(2-methylphenyl)-amino-, N-Ethyl-N-(4-methylphenyl)-amino-, N-Ethyl-N-(3-sulfophenyl)-amino-, N-Ethyl-N-(4-sulfophenyl)-amino- und der Phenylamino-Rest, desweiteren die Toluidino-, Xylidino-, Chloranilino-, Anisidino- und Phenetidino-Reste, ebenso ein Sulfomethyl-anilino-Rest, der 2-Sulfo-anilino-, 3-Sulfo-anilino-, 4-Sulfo-anilino-, 2,5-Disulfo-anilino-, N-Sulfomethyl-anilino-, 3-Carboxy-anilino-, 4-Carboxy-anilino-, 2-Carboxy-5-sulfo-anilino-, 2-Carboxy-4-sulfo-anilino-, 4-Sulfonaphth-1-yl-amino-, 3,6-Disulfo-naphth-1-yl-amino-, 3,6,8-Trisulfo-naphth-1-yl-amino-, 4,6,8-Trisulfo-naphth-1-yl-amino-, 6-Sulfo-naphth-2-yl-amino-, Pyrid-2-yl-amino-, Morpholino-, Piperidino- und Piperazino-Rest, desweiteren der 2-, 3- oder 4-(β-Sulfatoethylsulfonyl)-phenylamino-, der 3-(β-Phosphatoethylsulfonyl)-phenylamino-, 3-(β-Chlorethylsulfonyl)-phenylamino-, 3-(β-Sulfatoethylsulfonyl)-4-methyl-phenylamino-, 3-(β-Sulfatoethylsulfonyl)-4-methoxy-phenylamino-, 2-Sulfo-4-(β-sulfatoethylsulfonyl)-phenylamino-, 2-Sulfo-5-(β-sulfatoethylsulfonyl)-phenylamino-, 2,4-Disulfo-5-(β-sulfatoethylsulfonyl)-phenylamino-, 4-(β-Sulfatoethylsulfonyl)-naphth-1-yl-amino-, 6-Sulfo-8-(β-sulfatoethylsulfonyl)-naphth-2-yl-amino-, 2,5-Dimethoxy-4-vinylsulfonyl-phenylamino-, 2-Methoxy-5-methyl-4-(β-sulfatoethylsulfonyl)-phenylamino-, 2,5-Diethoxy-4-(β-sulfatoethylsulfonyl)-phenylamino-, 2-Brom-4-(β-sulfatoethylsulfonyl)-phenylamino-, 2-Brom-4-vinylsulfonyl-phenylamino-, 3- oder 4-Vinylsulfonyl-phenylamino-, 2-Hydroxy-4-(β-sulfatoethylsulfonyl)-phenylamino-, 2-Sulfo-5-vinylsulfonyl-phenylamino-, 3-(N-Methyl-N-β-sulfatoethylsulfonyl)-amidophenylamino-, 3-(N-Ethyl-N-β-sulfatoethylsulfonyl)-amino-phenylamino-, 2,5-Dimethoxy-4-(β-sulfatoethylsulfonyl)-phenylamino-, 2-Carboxy-4-(β-sulfatoethylsulfonyl)-phenylamino-, 2-Carboxy-5-(β-sulfatoethylsulfonyl)-phenylamino-, 2-Methyl-5-(β-sulfatoethylsulfonyl)-phenylamino-, 2-Chlor-5-(β-sulfatoethylsulfonyl)-phenylamino-, 2-Methoxy-5-(β-sulfatoethylsulfonyl)-phenylamino-, 8-(β-Sulfatoethylsulfonyl)-naphth-2-yl-amino-, 2,4-Disulfo-5-vinylsulfonyl-phenylamino-, 2,4-Disulfo-5-(β-phosphatoethylsulfonyl)-phenylamino-, 2,4-Disulfo-5-(β-chlorethylsulfonyl)-phenylamino-, 6-Sulfo-8-(β-phosphatoethylsulfonyl)-naphth-2-yl-amino-, 6-Sulfo-8-vinylsulfonyl-naphth-2-yl-amino-, 2-Methoxy-5-methyl-4-(β-chlorethylsulfonyl)-phenylamino-, 2-Hydroxy-5-(β-sulfatoethylsulfonyl)-phenylamino-, 2-(β-Sulfatoethylsulfonamido)-phenylamino-, β-(4-β'-Sulfatoethylsulfonyl-phenyl)-ethylamino- und 4-Chlor-3-(β-sulfatoethylsulfonyl)-phenylamino-Rest.

Ein faserreaktiver Rest A, der nicht der allgemeinen Formel (2) entspricht, ist beispielsweise ein Rest der Formel $-CO-CH=CH_2$ , -CO-CH=CH-Cl , $-CO-C(Cl)=CH_2$ , -CO-C(Cl)=CH-COOH oder -CO-CH=C(Cl)-COOH oder der β-Chlorpropionyl-, γ-(Phenylsulfonyl)-propionyl-, γ-(Methylsulfonyl)-propionyl-, β-Sulfatoethylaminosulfonyl-, Vinylsulfonyl-, β-Chlorethylsulfonyl-, β-Sulfatoethylsulfonyl-, β-Phosphatoethylsulfonyl-, β-Thiosulfatoethylsulfonyl-, β-(Methylsulfonyl)-ethylsulfonyl-, β-(Phenylsulfonyl)-ethylsulfonyl-, 3-(β-Chlorethylsulfonyl)-benzoyl-, 2-Fluor-2-chlor-3,3,-difluor-cyclobutan-1-carbonyl-, 2,2,3,3,-Tetrafluorcyclobutan-1-carbonyl-, 2,2,3,3-Tetrafluorcyclobutan-1-sulfonyl-, β-(2,2,3,3-Tetrafluor-cyclobut-1-yl)-acryloyl-, α-Bromacryloyl-, β-Bromacryloyl-, α,β-Dichlor-propionyl- oder α,β-Dibrompropionyl-Gruppe oder eine in α- oder β-Stellung durch eine niedere Alkylsulfonyl- oder Arylsulfonyl-Gruppe (wie Phenylsulfonylgruppe) substituierte Acryloylgruppe.

Bevorzugte Gruppen Y der allgemeinen Formel (3b) sind beispielsweise Gruppen der nachstehenden Formeln (6a), (6b), (6c) und (6d)

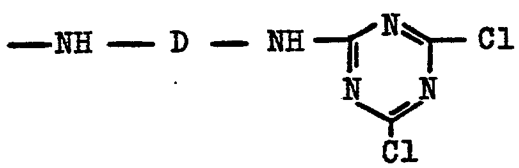

(6a)

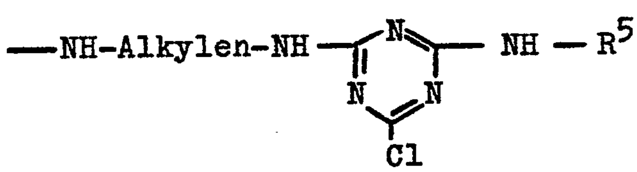

(6b)

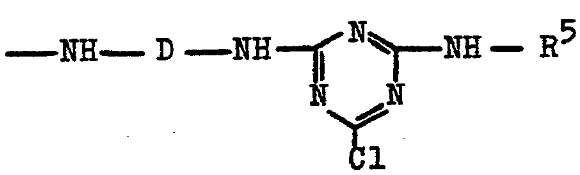

(6c)

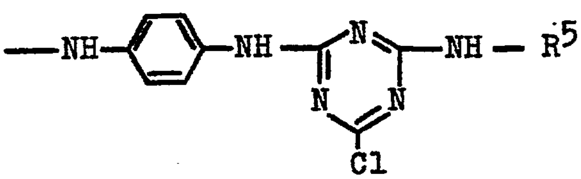

(6d)

in welchen D einen Rest der Formel (6e), (6f), (6g) oder (6h)

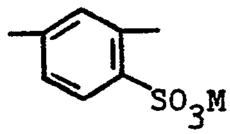

(6e)

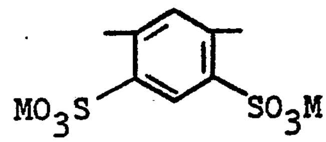

(6f)

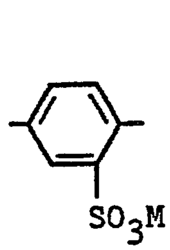

(6g)

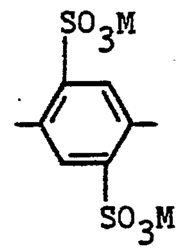

(6h)

mit M der obengenannten Bedeutung darstellt und $R^5$ für eine Monosulfophenyl- oder Disulfophenyl-Gruppe, wie insbesondere die 4-Sulfo-phenyl-, 3-Sulfo-phenyl- oder 2,5-Disulfo-phenyl-Gruppe, steht.

Besonders hervorzuheben sind von den erfindungsgemäßen Triphendioxazin-Verbindungen diejenigen, die der allgemeinen Formel (1a)

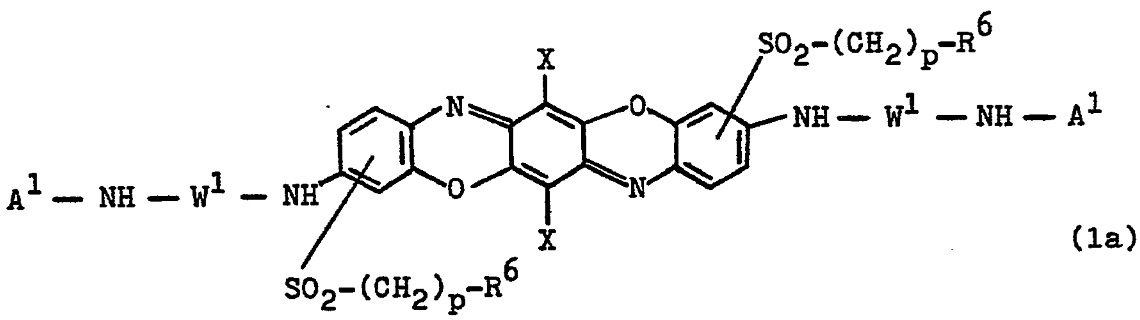

(1a)

entsprechen, in welcher

X jedes ein Bromatom oder bevorzugt ein Chloratom bedeutet,

p für die Zahl 2 oder 3, bevorzugt 2, steht,

$R^6$ eine Sulfato- oder Carboxygruppe, bevorzugt jedoch eine Sulfogruppe bedeutet, $R^6$ im Falle von p = 2 jedoch keine Sulfatogruppe ist,

oder die Gruppe $-(CH_2)_p-R^6$ stellt die Methylgruppe dar,

$W^1$ für einen Alkylenrest von 2 bis 6 C-Atomen steht, der durch eine Sulfo- oder Sulfatogruppe oder eine Sulfophenylgruppe substituiert sein kann, oder ein Cyclohexylenrest oder eine meta- oder para-Phenylengruppe oder eine durch 1 oder 2 Sulfogruppen substituierte meta- oder para-Phenylengruppe bedeutet und

$A^1$ für einen Triazinrest der allgemeinen Formel (2) steht, in welcher Z ein Fluor- oder Chloratom, bevorzugt jedoch ein Chloratom bedeutet und Y die 2,5-Disulfophenylgruppe ist.

Die zweifach auftretenden Formelglieder p, $R^6$, $W^1$ und $A^1$ haben bevorzugt jeweils die gleiche Bedeutung.

Weiterhin sind hervorzuheben die erfindungsgemäßen Triphendioxazin-Verbindungen entsprechend einer allgemeinen Formel (1b)

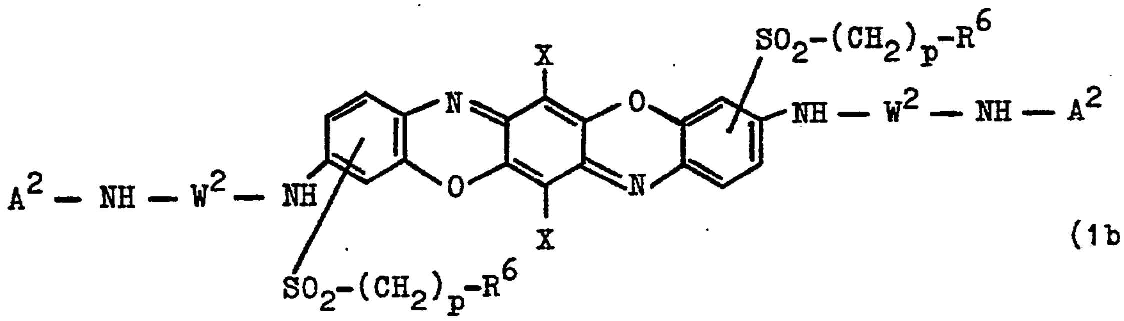

(1b)

in welcher
X, p und $R^6$ die für Formel (1a) genannten Bedeutungen haben und
$W^2$ den p-Phenylenrest, der unsubstituiert oder durch 1 oder 2 Sulfogruppen substituiert ist, bevorzugt den Monosulfo-p-phenylen-Rest, bedeutet, und
$A^2$ einen Triazinrest der allgemeinen Formel (2) bedeutet, in welcher Z für das Fluoratom, bevorzugt jedoch für das Chloratom steht und Y einen Rest der allgemeinen Formel (7)

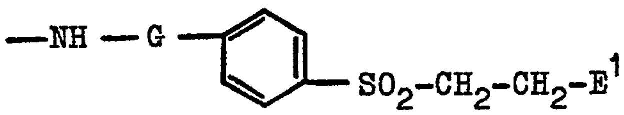

(7)

bedeutet, in welcher
G für die Methylen- oder 1,2-Ethylen-Gruppe steht, bevorzugt jedoch eine direkte Bindung ist, und
$E^1$ eine Chloratom, eine Phosphato-, Acetyloxy- oder Thiosulfatogruppe bedeutet, bevorzugt jedoch eine Sulfatogruppe ist.
Die zweifach auftretenden Formelglieder $W^2$ und $A^2$ besitzen bevorzugt jeweils die gleiche Bedeutung.

Von den Verbindungen der allgemeinen Formel (1) sind diejenigen erfindungsgemäßen Triphendioxazin-Verbindungen besonders hervorzuheben, die in den später folgenden Ausführungsbeispielen 6 und 7 beschrieben sind.

Die neuen Dioxazinverbindungen können sowohl in saurer Form als auch in Form ihrer Salze vorliegen. Bevorzugt sind sie in Form der Alkalisalze und finden auch bevorzugt in Form dieser Salze Verwendung zum Färben (hier und im folgenden im allgemeinen Sinne und einschließlich des Bedruckens verstanden) von hydroxy- und/oder carbonamidgruppenhaltigen Materialien, insbesondere Fasermaterialien.

Die vorliegende Erfindung betrifft weiterhin Verfahren zur Herstellung der obengenannten und definierten Verbindungen der allgemeinen Formel (1), die dadurch gekennzeichnet sind, daß man
eine Dioxazinverbindung der allgemeinen Formel (8)

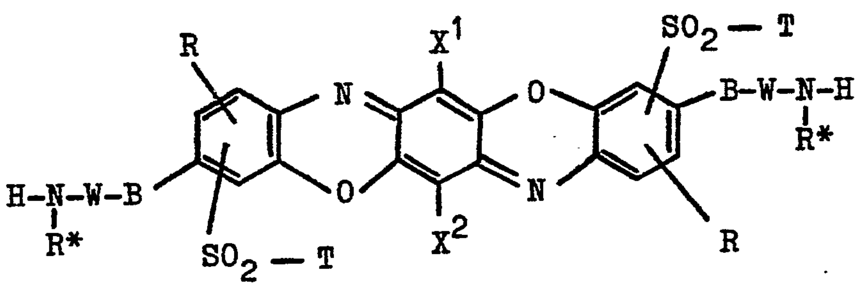

(8)

in welcher R*, R, B, W, T, $X^1$ und $X^2$ die obengenannten Bedeutungen haben, mit der zweifach molaren Menge einer Dihalogen-triazin-Verbindung der allgemeinen Formel (9)

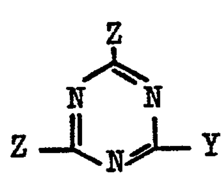

(9)

in welcher Z und Y die obengenannten Bedeutungen haben, wobei beide Z bevorzugt zueinander gleiche Bedeutungen besitzen und im Falle, daß Y ebenfalls ein Halogenatom ist, Y bevorzugt dieselbe Bedeutung wie Z hat, in an und für sich üblicher Verfahrensweise der Umsetzung von Aminoverbindungen mit Halogen-triazin-Verbindungen umsetzt, oder
daß man eine Dioxazinverbindung der allgemeinen Formel (8) mit der zweifach molaren Menge einer Verbindung umsetzt, die den Acylrest einer nicht-heterocyclischen faserreaktiven Gruppe in die Aminogruppe -NR*H einzuführen vermag, wie beispielsweise der Säurehalogenid-, wie der Säurechlorid-, oder wie beispielsweise der Säureanhydrid-Rest von faserreaktiven Carbon- und Sulfonsäuren, wie die Säurehalogenid- oder Säureanhydrid-Reste der oben für A beispielhaft genannten faserreaktiven Reste oder Carbylsulfat, oder
daß man eine Dioxazinverbindung der allgemeinen Formel (8) mit der zweifach molaren Menge einer Verbindung der allgemeinen Formel (10)

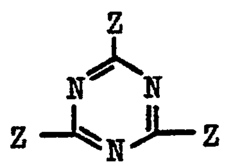

(10)

in welcher die Z, bevorzugt zueinander gleich, die obengenannten Bedeutungen haben, umsetzt und die so erhaltene Bis-Dihalogen-triazinylamino-Verbindung der allgemeinen Formel (11)

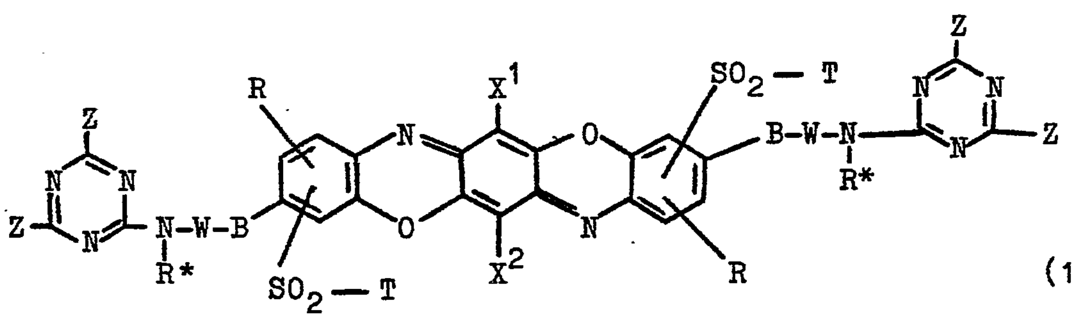

(11)

mit der zweifach molaren Menge einer Aminoverbindung der allgemeinen Formel H-Y mit Y gleich einem Rest der Formel (3a) oder (3b) umsetzt.
Bedeutet in Formel (1) der Formelrest W den Rest eines aliphatischen Amins, so wird die erstgenannte Verfahrensweise bevorzugt; stellt W den Aminorest eines Arylamins dar, so wird die letztgenannte Verfahrensweise bevorzugt.

Die Umsetzung von Dichlortriazinylamino-Verbindungen der allgemeinen Formel (9) oder (11) oder eines Cyanurhalogenids der allgemeinen Formel (10) mit einer Aminoverbindung der allgemeinen Formel (8) bzw. der allgemeinen Formel H-Y kann analog den in den europäischen Patentanmeldungs-Veröffentlichungen Nrs. 0 101 665A und 0 103 156A erfolgen, so in organischem oder wäßrig-organischem Medium, bevorzugt in wäßrigem Medium, wobei das organische Medium besipielsweise Aceton, Dimethylsulfoxid oder Dimethylformamid sein kann. Zur Einhaltung eines bestimmten pH-Wertes werden als säurebindende Mittel beispielsweise die Alkali- und Erdalkalicarbonate, Alkali- und Erdalkalihydrogencarbonate oder -hydroxide oder Alkaliacetate oder Mischungen dieser säurebindenden Mittel verwendet; hierbei sind von den Alkalimetallverbindungen Erdalkalimetallverbindungen die des Natriums, Kaliums und Calciums bevorzugt.
Die Umsetzung eines Cyanurhalogenids mit einer Aminoverbindung H-Y oder einer Aminoverbindung der allgemeinen Formel (8) erfolgt in der Regel bei einer Temperatur zwischen -10°C und +25°C, vorzugsweise zwischen 0 und 10°C, und bei einem pH-Wert zwischen 1 und 6, vorzugsweise zwischen 3 und 5.

Die zweite Kondensationsreaktion, die Umsetzung einer Dihalogentriazinyl-Verbindung der allgemeinen Formel (9) mit einer Aminoverbindung der allgemeinen Formel (8) oder einer Dihalogentriazinyl-Verbindung der allgemeine Formel (11) mit einer Aminoverbindung der Formel -H-Y erfolgt in der Regel bei einer Temperatur zwischen 0°C und 60°C, vorzugsweise zwischen 10 und 50°C, und bei einem pH-Wert zwischen 3 und 9, vorzugsweise zwischen 5 und 8.

Die Ausgangs-Dioxazinverbindungen der allgemeinen Formel (8) können analog bekannten Verfahrensweisen aus Verbindungen der allgemeinen Formel (12)

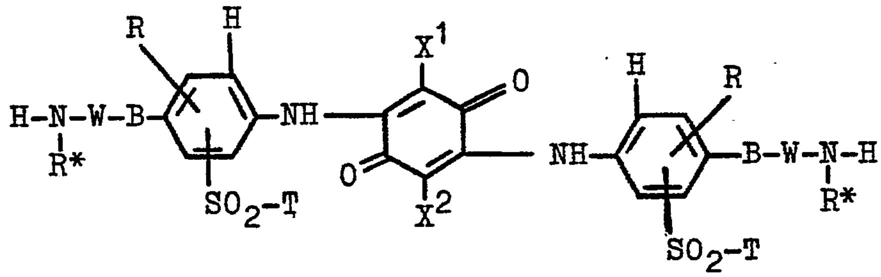

(12)

(in welcher R*, R, B, W, T, $X^1$ und $X^2$ die obengenannten Bedeutungen haben, wobei substituierte Alkylgruppen in diesen Resten auch hydroxysubstituierte Alkylgruppen sein können und die Gruppen $-SO_2-T$ bevorzugt in ortho-Stellung zur Gruppe -B-W-NHR* gebunden sind und die Benzolkerne in einer der ortho-Stellungen zur angegebenen Aminogruppe -NH- nicht substituiert sein dürfen) durch Ringschluß hergestellt werden, so beispielsweise in saurem Medium und gegebenenfalls in Gegenwart eines Oxidationsmittels, wie insbesondere in Schwefelsäure oder Schwefeltrioxid enthaltender Schwefelsäure als Reaktionsmedium, wobei als Oxidationsmittel Schwefeltrioxid, Ammonium- oder Alkalipersulfate, Jod oder anorganische Jodverbindungen in Gegenwart von Oleum, Natriumborat, vorzugsweise jedoch Natrium- oder Kaliumperoxodisulfat (entsprechend den Formeln $Na_2S_2O_8$ bzw. $K_2S_2O_8$), verwendet werden. Solche Verfahrensweisen sind bspw. aus der britischen Patentschrift Nr. 1 589 915 und der europäischen Patentanmeldungs-Veröffentlichung Nr. 0 141 359A bekannt.

Vorzugsweise führt man die Umsetzung in konzentrierter Schwefelsäure, wie 96- bis bevorzugt 100 %iger Schwefelsäure und insbesondere in Schwefeltrioxid enthaltender Schwefelsäure (Oleum), wie bis zu 50 gew.-%igem Oleum, durch. Die Reaktionstemperatur wird zwischen 0 und 60°C gewählt. Das als Reaktionsmedium und Agenz verwendete Oleuum besitzt in der Regel einen Gehalt von 5 bis 30 Gew.-%, bevorzugt 10 bis 20 Gew.-% an Schwefeltrioxid. Bei Zusatz- von Peroxodisulfat als Oxidationsmittel führt man die Cyclisierung zwischen 0 und 40°C, bevorzugt zwischen 15 und 25°C durch. Bei Verwendung von Oleum/Peroxodisulat soll die Reaktionstemperatur 30°C nicht überschreiten. Bevorzugt ist 10 bis 20%iges Oleum unter Verwendung einer zur Verbindung (12) äquivalenten Menge Peroxodisulfat. Bei Jod als Oxidationsmittel wird dieses in katalytischen Mengen in 10 bis 50%igem Oleum eingesetzt; hier liegt die Reaktionstemperatur in der Regel zwischen 0 und 40°C.

Gegebenenfalls vor oder gleichzeitig mit der Cyclisierung oder erst nach der Cyclisierungsreaktion können gegebenenfalls vorhandene Hydroxyalkylgruppen mittels eines Sulfatisierungs- oder Phosphatierungsmittels, wie 96-100%iger Schwefelsäure oder Schwefeltrioxid enthaltender Schwefelsäure bzw. Polyphosphorsäure, zu den entsprechenden Sulfatoalkyl- bzw. Phosphatoalkyl-Gruppen verestert werden. Wird also der Ringschluß in Schwefelsäure oder Oleum als Reaktionsmedium ausgeführt, werden Hydroxygruppen, die an einem Alkylrest des Moleküls gebunden sind, wie eine Hydroxyalkyl-Gruppe der Formelreste W und R*, in die entsprechenden Sulfatoalkylgruppen übergeführt.

Gleichzeitig mit der Cyclisierung - oder auch in einem gesonderten Ansatz - können erfindungsgemäß auch Sulfogruppen in die aromatischen Ringe des Triphendioxazins (die entsprechenden Arylreste von W, T, $X^1$ und $X^2$ eingeschlossen) mittels 100 %iger Schwefelsäure oder Oleum eingeführt werden.

Die Verbindungen der allgemeinen Formel (8) können analog bekannten Verfahrensweisen durch Umsetzung einer Verbindung der allgemeinen Formel (13)

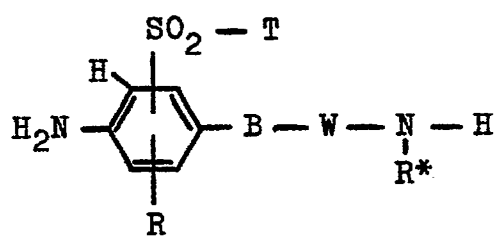

(13)

in welcher R*, R, B, W und T die obengenannten Bedeutungen haben, wobei substituierte Alkylgruppen in diesen Resten auch hydroxysubstituierte Alkylgruppen sein können und die Gruppen $-SO_2-T$ bevorzugt in ortho-Stellung zur Gruppe -B-W-NHR* gebunden sind, mit einer 1,4-Benzochinon-Verbindung der allgemeinen Formel (14)

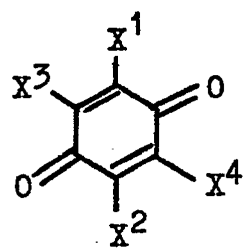

(14)

in welcher $X^1$ und $X^2$ die obengenannten Bedeutungen haben und $X^3$ und $X^4$ zueinander gleich oder voneinander verschieden sind und jedes für ein Wasserstoffatom, eine Alkoxygruppe von 1 bis 4 C-Atomen, wie insbesondere die Methoxygruppe, oder für eine Phenoxygruppe steht oder bevorzugt ein Halogenatom, wie Fluoratom, besonders Bromatom und insbesondere Chloratom, ist, wobei $X^3$ und $X^4$ auch eine zu $X^1$ und $X^2$ gleiche Bedeutung haben können, hergestellt werden.

Die Umsetzung einer Verbindung der allgemeinen Formel (13) oder zweier verschiedener Aminoverbindungen der allgemeinen Formel (13), jeweils in zusammen 2-fach äquivalenter Menge, mit einem Äquivalent einer Verbindungen der allgemeinen Formel (14) zur Verbindung der allgemeinen Formel (12) erfolgt analog bekannten Verfahrensweisen, die beispielsweise in K. Venkataraman, "The Chemistry of Synthetic Dyes", Band V, S. 419-427 (1971), und im Ullmanns Encyklopädie der technischen Chemie, 4. Aufl., Band 8, S. 240 + 241 (1974) sowie in der britischen Patentanmeldungs-Veröffentlichung Nr. 2 019 872, in der deutschen Offenlegungsschrift Nr. 28 23 828 und in der europäischen Patentanmeldungs-Veröffentlichung Nr. 0 141 996A beschrieben sind. Beispielsweise kann die Umsetzung in wäßrigem Medium oder in wäßrig-organischem Medium oder in rein organischem Medium erfolgen, wobei die organischen Lösemittel polare aprotische und protische Lösungsmittel darstellen, wie beispielsweise niedere Alkanole, wie Methanol und Ethanol, und halogenierte Benzole, wie o-Dichlorbenzol. Bevorzugt wird das Chinon der Formel (14) jedoch in einem mehr oder weniger stärkeren Überschuß eingesetzt, der in der Regel 2-20 % beträgt, aber auch, abhängig vom gewählten Chinon, bis zu 100 % oder mehr betragen kann. Die Umsetzung der Amine (13) mit den Chinonen (14) kann bei einer Temperatur zwischen 20 und 100°C, vorzugsweise zwischen 50 und 70°C, in Gegenwart eines säurebindenden Mittels, wie beispielsweise eines Alkali- oder Erdalkalicarbonats oder -acetats, so beispielsweise Natriumacetat, Natriumcarbonat oder Natriumbicarbonat, oder eines Alkali- oder Erdalkalihydroxids, wie Natriumhydroxid, oder eines Oxids eines Erdalkalimetalls, wie beispielsweise Magnesiumoxid, durchgeführt werden. Sofern in einem wäßrigen oder wäßrig-organischen Medium gearbeitet wird, wird ein pH-Bereich zwischen 4 und 7, vorzugsweise zwischen 5,5 und 6,5, eingestellt.

Die Anilin-Ausgangsverbindungen der allgemeinen Formel (13) mit dem Formelrest B gleich -NH- oder -N(R'')- sind bisher noch nicht bekannt. Sie lassen sich jedoch analog bekannten Verfahrensweise der Umsetzung von Nitrochlorbenzolen mit Aminen herstellen, so beispielsweise durch Umsetzung eines Chlornitrobenzols der allgemeinen Formel (15)

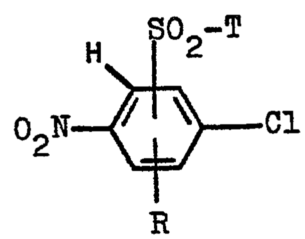

(15)

in welcher R und T die obengenannten Bedeutungen besitzen, mit einem Amin der allgemeinen Formel (16)

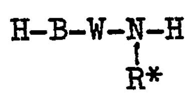

(16)

in welcher W und R* die obengenannten Bedeutungen haben und B die Gruppe -NH- oder -N(R'')- ist, in Wasser oder einem organischen Medium, wie einem Alkanol, beispielsweise Methanol, Dioxan und Toluol, oder in einem Gemisch von Wasser und von wassermischbaren organischen Lösemitteln, unter Zusatz eines basischen, säurebindenden Mittels, wie beispielsweise Kaliumcarbonat, Magnesiumoxid, Natriumcarbonat oder Natriumhydroxid, bei einer Temperatur zwischen 20 und 100°C, vorzugsweise zwischen 60 und 90°C.

In wäßrigem Medium wird ein pH-Wert zwischen 6 und 11, bevorzugt zwischen 8 und 10, eingehalten. Solche Verfahrensweisen sind beispielsweise aus Verfahren zur Herstellung von p-Nitrodiphenylamino-o-sulfonsäure aus 2-Chlor-5-nitro-benzolsulfonsäure bekannt (s. beispielsweise Chem. Ber. 41, 3744 ff., und 42, 1077 ff., die in der reduzierten Form ebenfalls als Ausgangsverbindungen für Dioxazinfarbstoffe dienen.

Die auf diese Weise erhältlichen und ebenfalls noch nicht beschriebenen und somit neuen Nitro-anilin-Verbindungen der allgemeinen Formel (17)

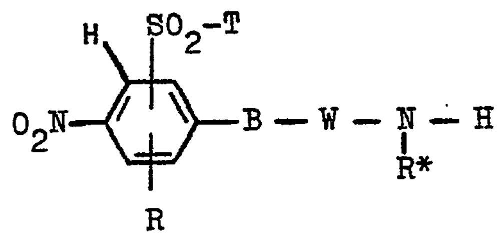

(17)

in welcher R, T, W und R* die obengenannten Bedeutungen haben und B die Gruppe -NH- oder -N(R'')- ist, können sodann nach an und für sich üblichen Methoden der Reduktion von aromatischen Nitrogruppen mittels Wasserstoff und einem metallischen Katalysator, wie einem Palladium-, Platin-oder Raney-Nickelkatalysator, unter Druck im Autoklaven oder mittels der Reduktion nach Béchamp bei Verwendung von Eisenspänen zur Verbindung entsprechend der allgemeinen Formel (13) übergeführt werden.

Die vorliegende Erfindung betrifft somit auch die neuen Anilinverbindungen der allgemeinen Formel (13) und die neuen Nitro-anilinverbindungen der allgemeinen Formel (17) sowie Verfahren zu deren Herstellung, desweiteren deren Verwendung zur Synthese von Triphendioxazin-Verbindungen, insbesondere von Triphendioxazin-Verbindungen der allgemeinen Formel (1).

Chlornitrobenzolverbindungen der allgemeinen Formel (15) lassen sich beispielsweise analog den Synthesemöglichkeiten zur Herstellung von Sulfonen, wie sie beispielsweise in Houben-Weyl, Methoden der Organischen Chemie, Band IX, S. 231 ff. (1955) und Band E11, S. 1132 ff. (1985), herstellen, so über das Sulfinsäure-Derivat, wie in an und für sich bekannten Verfahrensweise durch Reduktion einer entsprechenden 1-Chlor-4-nitro-benzolsulfochlorid-Verbindung mittels Natriumsulfit zur entsprechenden Sulfinsäure und anschließende Oxalkylierung der Sulfinsäure zur β-Hydroxyalkylsulfonyl-Verbindung, die anschließend sulfatisiert wird. Die Sulfatogruppe kann sodann nach üblichen Methoden mittels Natriumsulfit in die Sulfogruppe übergeführt werden. So kann beispielsweise das 2-(β-Sulfoethylsulfonyl)-4-nitro-chlorbenzol durch Umsetzung von 2-(β-Sulfatoethylsulfonyl)-4-nitro-chlorbenzol, das nach der oben angegebenen Methode aus 1-Chlor-4-nitro-benzolsulfochlorid erhältlich ist, mit einer wäßrigen Natriumsulfitlösung bei einer Temperatur zwischen 30 und 50°C und einem pH-Wert zwischen 6 und 9,5 hergestellt werden.

Aus den Sulfinsäure-Verbindungen lassen sich auch die carboxysubstituierten Alkylsulfon-Verbindungen beispielsweise durch Umsetzung mit Chloressigsäure, Acrylsäure oder Crotonsäure herstellen.

Einige der Verbindungen der allgemeinen Formel (15) können auch durch Nitrierung einer entsprechenden Alkylsulfonyl- oder Arylsulfonyl-chlorbenzol-Verbindung in an und für sich üblicher Weise gewonnen werden, so beispielsweise analog den Angaben des Beispieles 5 der deutschen Patentschrift 859 462.

Die als Ausgangsverbindungen dienenden Benzochinone der allgemeinen Formel (14) sind in der Literatur zahlreich bekannt. Verbindungen dieser Art sind beispielsweise 1,4-Benzochinon, 2-Methyl-1,4-benzochinon, 2-Ethyl-1,4-benzochinon, 2-n-Propyl-1,4-benzochinon, 2-Isopropyl-1,4-benzochinon, 2-(β-Ethoxyethyl)-1,4,-benzochinon, 2-Phenyl-1,4-benzochinon, 2-(4'-Methylphenyl)-1,4-benzochinon, 2-(4'-Methoxyphenyl)-1,4-benzochinon, 2-(3'-Chlorophenyl)-2,5-Dimethyl-1,4-benzochinon, 2-Methyl-5-ethyl-1,4-benzochinon, 2-Methyl-3-chloro-1,4-benzochinon, 2-Methyl-6-chloro-1,4-benzochinon, 2-Methyl-3,5-dichloro-1,4-benzochinon, 2-Methyl-3,5,6-tribromo-1,4-benzochinon, 2-(4'-Methylphenoxy)-3,6-dibromo-1,4-benzochinon, 2-(3'-Methylphenoxy)-3,6-dibromo-1,4-benzochinon, 2-Methyl-3,5,6-trichloro-1,4,-benzochinon, 2-Methyl-3-chloro-5-bromo-1,4-benzochinon, 2-Methyl-3,6-dichloro-1,4-benzochinon, 2-Methyl-3,6-dichloro-5-bromo-1,4-benzochinon, 2-Phenyl-3,6-dichloro-1,4,-benzochinon, 2-(4'-Methoxyphenyl)-3,6-dichloro-1,4-benzochinon, 2-(4'-Chlorophenyl)-3,6-dichlor-1,4-benzochinon, 2-(4'-Nitrophenyl)-3,6-dichloro-1,4-benzochinon, 2-(4'-Nitrophenyl)-3,5,6-trichloro-1,4-benzochinon, 2,5-Dimethyl-3,6-dibromo-1,4-benzochinon, 2,5-Dimethyl-3-chloro-1,4-benzochinon, 2-Methyl-5-n-propyl-6-bromo-1,4-benzochinon, 2-Methyl-5-isopropyl-3-chloro-1,4-benzochinon, 2-Methyl-5-isopropyl-6-bromo-1,4-benzochinon, 2-(2'-Chlorophenyl)-3,5,7-tribromo-1,4-benzochinon, 2-Methyl-3-methoxy-1,4-benzochinon, 2,3,5,6-Tetramethoxy-1,4-benzochinon, 2,3,5,6-Tetraphenoxy-1,4-benzochinon, 2,3,5,6-Tetra-(4'-methylphenoxy)-1,4-benzochinon, 2,3,5,6-Tetra-(4'-methoxyphenoxy)-1,4-benzochinon, 2,3,5,6-Tetra-(4'-chlorophenoxy)-1,4,-benzochinon, 2,3,5,6-Tetra-4-(3'-methyl-4'-chlorophenoxy)-1,4-benzochinon, 2-Ethyl-3,6-dimethoxy-1,4-benzochinon, 2-Chloro-3,6-dimethoxy-1,4,-benzochinon, 2,3,5-Trimethoxy-1,4-benzochinon, 2,5-Dimethyl-3,6-dimethoxy-1,4-benzochinon, 2,5-Dimethyl-3,6-dimethoxy-1,4-benzochinon, 2-Methyl-3,6-dimethoxy-1,4-benzochinon, 2-Methyl-5,6-dimethoxy-1,4-benzochinon, 2-Ethyl-3,6-dimethoxy-1,4-benzochinon, 2-Chloro-3-n-propyl-5-methoxy-1,4-benzochinon und 2-Chloro-3,5-dimethoxy-1,4-benzochinon, 2,3,5,6-Tetrafluor-1,4-benzochinon sowie bevorzugt 2,3,5,6-Tetrabrom-1,4-benzochinon und insbesondere 2,3,5,6-Tetrachlor-1,4-benzochinon.

Neue, erfindungsgemäße Ausgangs-Anilinverbindungen entsprechend der allgemeinen Formel (13) sind beispielsweise:
4-(4'-Amino-3'-sulfo-phenylamino)-3-β-sulfoethylsulfonylanilin, 4-(3'-Amino-4'-sulfo-phenylamino)-3-β-sulfoethylsulfonyl-anilin, 4-(4'-Amino-2',5'-disulfo-phenylamino)-3-β-sulfoethylsulfonyl-anilin, 4-N-(β-Aminoethyl)-amino-3-β-sulfoethylsulfonyl-anilin, 4-N-(β-Amino-propyl)-amino-3-β-sulfoethylsulfonyl-anilin, 4-N-(γ-Amino-propyl)-amino-3-sulfoethylsulfonyl-anilin, 4-(4'-Amino-3'-sulfo-phenylamino)-3-methylsulfonyl-, 4-(3'-Amino-4'-sulfo-phenylamino)-3-methylsulfonyl-, 4-(4'-Amino-3'-sulfo-phenylamino)-3-β-carboxyethylsulfonyl-anilin, 4-(4'-Amino-3'-sulfo-phenylamino)-3-carboxymethylsulfonyl-anilin, 4-(4'-Amino-3'-phenylamino)-3-(γ-sulfopropylsulfonyl)-anilin, 4-N-(γ-Amino-β-hydroxy-propyl)-amino-3-β-sulfoethylsulfonyl-anilin, 4-N-(δ-Amino-butyl)-amino-3-β-sulfoethylsulfonyl-anilin, 4-N-(4'-Amino-3'-sulfo-benzyl)-amino-3-β-sulfoethylsulfonyl-anilin, 4-(4'-Amino-3'-sulfo-phenoxy)-3-β-sulfoethylsulfonyl-anilin, 4-(β-Amino-ethoxy)-3-β-sulfoethylsulfonyl-anilin, 4-(N-Piperidino)-3-sulfoethylsulfonyl-anilin, 4-N-[β-(β'-Amino-ethoxy)-ethyl ]-amino-3-sulfoethylsulfonyl-anilin, 4-N-(γ-Amino-β-hydroxy-propyl)-amino-3-β-carboxyethylsulfonyl-anilin, 4-(4'-Aminophenyl)-amino-3-β-sulfoethylsulfonyl-anilin, 4-(4'-Aminocyclohexyl)-amino-3-β-sulfoethylsulfonyl-anilin, 4-N-(γ-Hexylamino-propyl)-amino-3-β-sulfoethylsulfonyl-anilin und 4-(3'-Aminophenyl)-amino-3-β-sulfoethylsulfonyl-anilin.
Hiervon können die sechs erstgenannten Anilinverbindungen als bevorzugt hervorgehoben werden.

Die Abscheidung und Isolierung der erfindungsgemäß hergestellten Verbindungen der allgemeinen Formel (1) aus den Syntheselösungen kann anch allgemeinen bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1) - im nachfolgenden als Verbindungen (1) bezeichnet - haben faserreaktive Eigenschaften und besitzen wertvolle Farbstoffeigenschaften. Sie können deshalb zum Färben (einschließlich Bedrucken) von natürlichen, regenerierten oder synthetischen hydroxygruppenhaltigen und/oder carbonamidgruppenhaltigen Materialien, beispielsweise in Form von Flächengebilden, wie Papier und Leder, oder in der Masse, von Polyamid oder Polyurethan, insbesondere aber von solchen Materialien in Faserform, wie Cellulosefasermaterialien, Seide, Wolle und synthetische Polyamid- und Polyurethanfasern, verwendet werden. Auch können die bei der Synthese der Verbindungen (1) anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Die Verbindungen (1) lassen sich, gemäß der erfindungsgemaßen Anwendung, auf den genannten Substraten, insbesondere auf den genannten Fasermaterialien, nach den für wasserlösliche, insbesondere faserreaktive, Farbstoffe bekannten Anwendungstechniken applizieren und fixieren, so beispielsweise, indem man die Verbindung (1) in gelöster Form auf das Substrat aufbringt oder sie darin einbringt und sie auf diesem oder in diesem in der Wärme oder durch Hitzeeinwirkung und/oder durch Einwirkung eines alkalisch wirkenden Mittels fixiert. Solche Färbe- und Fixierweisen sind in der Literatur zahlreich beschrieben.

Gegenstand der vorliegenden Erfindung ist deshalb auch die Verwendung der Verbindungen (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen der Applikation und Fixierung von faserreaktiven Farbstoffen vorgehen.

Die mit den Verbindungen (1) hergestellten Färbungen und Drucke zeichnen sich durch reine, vorwiegend blaue Farbtöne aus. Insbesondere die Färbungen und Druck auf Cellulosefasermaterialien besitzen sehr hohe Farbstärken und ebenso sehr gute Lichtechtheiten, einschließlich guter Naßlicht- und Schweißlichtechtheiten, ebenso gute Hypochloritbleich- und Chlorbadewasserechtheiten, weiterhin vorzügliche Naßechtheiten, wie beispielsweise gute bis sehr gute Waschechtheiten bei 60 bis 95°C, auch in Gegenwart von Perboraten, saure und alkalische Walk-, Überfärbe- und Schweißechtheiten, Alkali-, Säure-, Wasser- und Seewasserechtheiten, desweiteren eine gute Plissierechtheit, Bügelechtheit und Reibechtheit. Ebenso besitzen sie eine gute Naßliegeechtheit und eine sehr gute Säurelagerbeständigkeit ("acid fading") beim Lagern von feuchten, noch Essigsäure enthaltendem, gefärbtem Material. Desweiteren sind die Färbungen gegen die üblichen Kunstharzappreturen stabil. Ein Teil der Verbindungen (1) sind in der Reinheit des Farbtones und in wichtigen Echtheitseigenschaften mit faserreaktiven Anthrachinonfarbstoffen vergleichbar.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

Die Absorptionsmaxima ($\lambda_{max}$-Werte) wurden in wäßriger Lösung bestimmt.

Die $^1$H-NMR-Messungen erfolgten in $D_2O$ mit partiell deuteriertem Natrium-3-(trimethylsilyl)-propionat.

Beispiel 1

a) Es wird eine wäßrige Lösung mit einem pH-Wert von 7,0 der Natriumsalze von 100 Teilen 3-(β-Sulfoethylsulfonyl)-4-chlor-nitrobenzol und 57 Teilen 1,4-Diaminobenzol-2-sulfonsäure in 250 Teilen Wasser hergestellt; 8,5 Teile Magnesiumoxid werden hinzugegeben. Das Reaktionsgemisch wird 7 Stunden unter Rückfluß gekocht; anschließend läßt man es erkalten und rührt noch 2 Stunden bei Raumtemperatur nach. Das ausgefallene Natriumsalz des 3-(β-Sulfoethylsulfonyl)-4-(4'-amino-3'-sulfophenyl-amino)-nitrobenzols wird abgesaugt und getrocknet.

Es zeigt folgende $^1$H-NMR-Daten:

δ = 3,31 ppm (m,2H); 3,72 ppm (m,2H); 6,80 ppm (d,1H); 6,95 ppm (d,1H); 7,25 ppm(dd,1H); 7,59 ppm (d,1H); 8,15 ppm (dd,1H); 8,57 (d,1H);

die Protonen der Amino- und Sulfogruppen waren nicht sichtbar.

b) 130 Teile dieser Nitroverbindung werden in 500 Teilen Wasser gelöst; die Hydrierung erfolgt in Gegenwart eines Nickelkatalysators in einem Autoklaven bei 60 bis 80°C und einem Wasserstoffdruck von 50 bar. Der Katalysator wird anschließend abfiltriert und das Filtrat angesäuert, dem zur vollständigen Abscheidung der Anilinverbindung noch Kaliumchlorid in einer Menge von 20 %, bezogen auf das Filtratvolumen, zugesetzt wird. Man läßt das Filtrat sodann erkalten und saugt den Niederschlag ab.

Das so hergestellte und isolierte 3-(β-Sulfoethylsulfonyl)-4-(4'-amino-3'-sulfo-phenylamino)-anilin hat folgende $^1$H-NMR-Daten:

δ = 3,20 ppm (m,2H); 3,85 ppm (m,2H); 6,94 ppm (d,1H); 7,03 ppm (d,1H); 7,14 ppm (dd,1H); 7,26 ppm(dd,1H); 7,48 ppm (d,1H); 7,53 ppm (d,1H);

die Protonen der Amino- und Sulfogruppen waren nicht sichtbar.

Beispiel 2

a) Zu einer Suspension von 165 Teilen 3-(β-Sulfoethylsulfonyl)-4-chlor-nitrobenzol in 250 Teilen Wasser gibt man langsam innerhalb einer Stunde bei etwa 30°C 111 Teile 1,2-Diamino-propan. Der Ansatz wird sodann noch 2 Stunden bei 50°C weitergerührt und nach Abkühlen auf etwa 20°C mit konzentrierter wäßriger Salzsäure auf einen pH-Wert von 7 gestellt. Das ausgefallene 3-(β-Sulfoethylsulfonyl)-4-(β-amino-propyl)-amino-nitrobenzol wird abgesaugt mit etwas Methanol nachgewaschen und getrocknet. Es besitzt folgende $^1$H-NMR-Daten:

δ = 1,43 ppm (d,3H); 3,25 ppm (m,3H); 3,70 ppm (m,4H); 7,08 ppm (d,1H); 8,39 ppm(dd,1H); 8,60 ppm (d,1H); die Protonen der Amino- und Sulfogruppen waren nicht sichtbar.

b) 147 Teile der unter a) erhaltenen Nitroverbindung werden in 1200 Teilen Wasser suspendiert und in Gegenwart eines Nickelkatalysators in einem Autoklaven bei 60 bis 80°C und einem Wasserstoffdruck von 50 bar hydriert. Der Katalysator wird anschließend abfiltriert, das Filtrat auf etwa ein Viertel des Ausgangsvolumens eingeengt, das ausgefallene 3-(β-Sulfoethylsulfonyl)-4-(β-amino-propyl)-amino-anilin abgesaugt, mit wenig Methanol nachgewaschen und unter reduziertem Druck bei 50°C getrocknet.

Es zeigt folgende $^1$H-NMR-Daten:

δ = 1,40 ppm (d,3H); 3,20 ppm (m,2H); 3,44 ppm (m,2H); 3,75 ppm (m,3H); 6,90 ppm (d,1H); 7,20 ppm(dd,1H); 7,25 ppm (d,1H);

die Protonen der Amino- und Sulfogruppen waren nicht sichtbar.

Beispiel 3

Zur Herstellung von 3-(β-Sulfoethylsulfonyl)-4-(γ-amino-propyl)-amino-anilin verfährt man gemäß der Verfahrensweise des Beispieles 2, setzt jedoch anstelle von 1,2 Diaminopropan das 1,3-Diaminopropan ein.

Das 3-(β-Sulfoethylsulfonyl)-4-(γ-amino-propyl)-amino-nitrobenzol besitzt folgende $^1$H-NMR-Daten:

δ = 2,08 ppm (qn,2H); 3,25 ppm (m,4H); 3,60 ppm (m,4H); 6,97 ppm (d,1H); 8,23 ppm (dd,1H); 8,57 ppm (d,1H); die Protonen der Amino- und Sulfogruppen waren nicht sichtbar.

Das 3-(β-Sulfoethylsulfonyl)-4-(γ-amino-propyl)-amino-anilin besitzt folgende $^1$H-NMR-Daten:

δ = 2,00 ppm (qn,2H); 3,05 ppm (m,4H); 3,38 ppm (t,2H); 3,68 ppm (m,2H); 7,0 ppm (d,1H); 7,50 ppm (dd,1H); 7,62 ppm (d,1H);
die Protonen der Amino- und Sulfogruppen waren nicht sichtbar.

Beispiel 4

132 Teile 3-(β-Sulfoethylsulfonyl)-4-chlor-nitrobenzol werden innerhalb von 30 Minuten bei einer Temperatur zwischen 70 und 80°C in ein Gemisch aus 130 Teilen Wasser und 72 Teilen Ethylendiamin eingetragen. Der Ansatz wird sodann noch eine Stunde bei dieser Temperatur und danach nochmals eine Stunde bei 100°C weitergerührt und nachdem Abkühlen mit konzentrierter Salzsäure auf einen pH-Wert von 7 eingestellt und danach auf 0°C abgekühlt. Das ausgefallene gelbe Produkt wird abgesaugt, mit wenig Methanol gewaschen und gegebenenfalls getrocknet, anschließend in 600 Teilen Wasser in Gegenwart eines Palladiumkatalysators bei 100°C und einem Wasserstoffdruck von 50 bar reduziert. Der Katalysator wird abfiltriert und das Filtrat auf etwa ein Viertel des Ausgangsvolumens eingeengt, das ausgefallene 3-(β-Sulfoethylsulfonyl)-4-(β-amino-ethyl)-amino-anilin abgesaugt, mit wenig Methanol gewaschen und unter reduziertem Druck bei 50°C getrocknet.

Das 3-(β-Sulfoethylsulfonyl)-4-(β-aminoethyl)-amino-nitrobenzol besitzt folgende $^{1}$H-NMR-Daten (in $D_6$-Dimethylsulfoxid und mit Tetramethylsilan als innerer Standard):
δ = 2,72 ppm (t,2H); 3,03 ppm (t,2H); 3,28 ppm (NH); 3,70 ppm (m,4H); 7,12 ppm (d,1H); 7,50 ppm (NH); 8,30 ppm (dd,1H); 8,42 ppm (d,1H);
weitere Protonen der Amino- und Sulfogruppen waren nicht sichtbar.

Beispiel 5

Zur Herstellung von 3-(β-Sulfoethylsulfonyl)-4-piperazinyl-anilin verfährt man gemäß der Verfahrensweise des Beispieles 2, setzt jedoch anstelle von 1,2-Diamino-propan die äquivalente Menge an 1,4-Piperazin ein.

Das 3-(β-Sulfoethylsulfonyl)-4-piperazinyl-nitrobenzol besitzt folgende $^{1}$H-NMR-Daten:
δ = 3,20 ppm (m,2H); 3,47 ppm (s,8H); 4,18 ppm (m,2H); 7,75 ppm (d,1H); 8,62 ppm (dd,1H); 8,79 ppm (d,1H); die Protonen der Amino- und Sulfogruppen waren nicht sichtbar.

Das 3-(β-Sulfoethylsulfonyl)-4-piperazinyl-anilin besitzt folgende $^{1}$H-NMR-Daten (in $D_6$-Dimethylsulfoxid und mit Tetramethylsilan als innerer Standard):
δ = 2,58 ppm (m,2H); 3,05 ppm (d,4H); 3,25 ppm (d,4H); 3,85 ppm (m,2H); 5,42 ppm (s,NH); 6,88 ppm (dd,1H); 7,15 ppm (d,1H); 7,22 ppm (d,1H);
weitere Protonen der Amino- und Sulfogruppen waren nicht sichtbar.

Beispiel 6

a) 90 Teile 3-(β-Sulfoethylsulfonyl)-4-(4′-amino-3′-sulfophenylamino)-anilin und 25 Teile Chloranil werden bei einem pH-Wert von 6 in 300 Teilen Wasser aufgeschlämmt. DerAnsatz wird bei Einhaltung eines pH-Wertes von 6 (mittels insgesamt 16 Teilen Natriumhydrogencarbonat) auf 60°C erwärmt und 6 Stunden bei dieser Temperatur gehalten; danach läßt man ihn auf 20°C abkühlen, gibt 20 Teile Kaliumchlorid und anschließend 50 Teile konzentrierte Salzsäure hinzu und saugt das ausgefallene chinoide Zwischenprodukt ab und trocknet es.

b) 32 Teile des unter a) erhaltenen Produkts werden bei 20°C innerhalb von 20 Minuten in 330 Teile 15%iges Oleum eingetragen; das Reaktionsgemisch wird noch etwa 15 Stunden bei dieser Temperatur gerührt und sodann auf 1500 Teile Eis gegeben, die ausgefallene Triphendioxazin-Verbindung abgesaugt, in 200 Teilen Wasseraufgeschlämmt und mit Natriumhydrogencarbonat zu einer neutralen Lösung gelöst, mit Natriumchlorid wiederum ausgesalzen, abgesaugt und getrocknet.

c) Die Triphendioxazinverbindung ist auch erhältlich, wenn man die Cyclisierung gemäß obiger Vorschrift b), jedoch mit 350 Teilen 20%igen Oleum durchführt; der Reaktionsansatz kann bereits nach einer Reaktionsdauer von 3 Stunden gemäß b) aufgearbeitet werden.

d) Die Cyclisierungsreaktion kann auch in der Weise erfolgen, daß man 32 Teile des chinoiden Zwischenprodukts in 300 Teile 10%igem Oleum bei 20°C einträgt, das Reaktionsgemisch 2 Stunden bei dieser Temperatur nachrührt, zu der gebildeten Lösung 7,2 Teile Natriumperoxodisulfat bei 20°C innerhalb von 20 Minuten hinzugibt, 3 Stunden bei 20°C nachrührt und sodann gemäß b) aufarbeitet.

e) 11 Teile der nach b), c) oder d) erhaltenen Triphendioxazinverbindung ($\lambda_{max}$ = 623 nm) werden in 200 Teilen Wasser gelöst. Man gibt eine geringe Menge eines üblichen Dispergiermittels hinzu, rührt bei 0°C 4,0 Teile Cyanurchlorid ein und rührt den Ansatz noch 5 Stunden bei 0 bis 5°C unter Einhaltung eines pH-Wertes von 4 bis 5 mittels Natriumhydrogencarbonat nach. Die erhaltene klare Lösung des primären Kondensationsproduktes wird sodann mit einer neutralen Lösung von 6,1 Teilen 4-(β-Sulfatoethylsulfonyl)-anilin in 50 Teilen Wasser versetzt, auf 40 bis 50°C erwärmt und innerhalb dieses Temperaturbereiches und unter Einhaltung eines pH-Wertes von 5 bis 6 mittels wenig Natriumbicarbonat 4 Stunden gehalten. Die erfindungsgemäße Triphen-dioxazin-Verbindung wird mit Natriumchlorid ausgesalzen, abgesaugt, mit einem Phosphatpuffer vermischt und unter reduziertem Druck bei 50°C getrocknet (die erfindungsgemäße Verbindung kann auch durch Eindampfen oder durch Sprühtrocknung der Syntheselösung, ggf. nach Zusatz eines Phosphatpuffers, erhalten werden).

Die erfindungsgemäße Verbindung besitzt, in Form der freien Säure geschrieben, die mutmaßliche Struktur der Formel

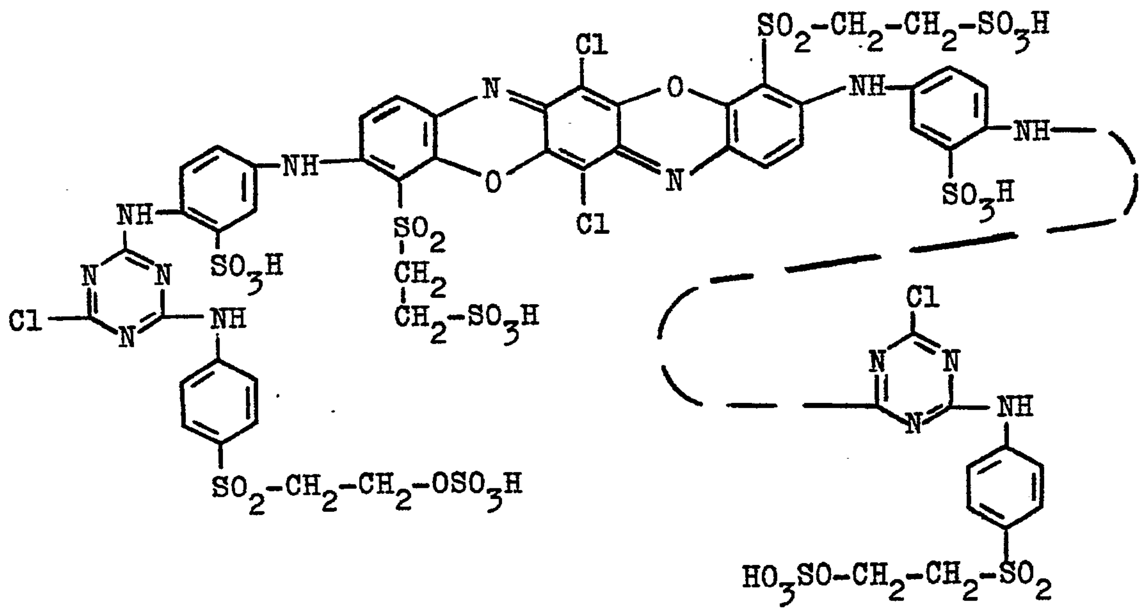

($\lambda_{max}$ = 615 nm)

(die jeweilige β-Sulfoethylsulfonyl-Gruppe kann auch in der anderen ortho-Stellung zur Aminogruppe gebunden sein, befindet sich jedoch mit größerer Wahrscheinlichkeit in der in der obigen Formel angegebenen Stellung).
Diese erfindungsgemäße Verbindung besitzt sehr gut faserreaktive Farbstoffeigenschaften. Sie färbt die in der Beschreibung genannten Materialien, insbesondere Cellulosefasermaterialien, wie Baumwolle, nach den in der Technik üblichen und bekannten Verfahrensweisen der Applikation und Fixierung von faserreaktiven Farbstoffen in farbstarken, reinen blauen Tönen mit guten Echtheiten, wie insbesondere guter Lichtechtheit der trockenen oder feuchten, wie mit Trinkwasser befeuchteten Färbung, gute alkalischen Schweißlichtechtheit, Chlorbadewasserechtheit, Hypochloritechtheit, alkalischer Schweißechtheit, Waschechtheit, auch in Gegenwart von Perboraten, Naßliegeechtheit und Säurelagerbeständigkeit.

Beispiel 7

a) 34 Teile 3-(β-Sulfoethylsulfonyl)-4-(β-amino-propyl)-amino-anilin und 13 Teile Chloranil werden in 250 Teilen Wasser 7 Stunden bei 60°C unter Einhaltung eines pH-Wertes von 6 mittels Natriumhydrogencarbonat gerührt. Der Ansatz wird anschließend abgekühlt, das gebildete Produkt abgesaugt, mit wenig Wasser gewaschen und getrocknet.

b) 18 Teile des unter a) erhaltenen Kondensationsproduktes werden in 270 Teile 20%iges Oleum bei 20°C eingetragen; der Ansatz wird noch 3 Stunden bei 20 bis 25°C nachgerührt, bis eines vollständige Lösung entstanden ist. Man gibt sodann 9,5 Teile Natriumperoxodisulfat innerhalb von 20 Minuten bei 20 bis 25°C hinzu und rührt noch weitere 3 Stunden bei dieser Temperatur, gibt den Ansatz sodann auf1000 Teile Eis und saugt die ausgefallene Triphendioxazinverbindung ab. Das noch feuchte Filterprodukt wird in 200 Teilen Waser angerührt, mit festem Natriumhydrogencarbonat neutralisiert und mit etwa 15 % Natriumchlorid, bezogen auf das Volumen dieser Lösung, ausgesalzen. Die ausgefallene aminogruppenhaltige Triphendioxazinverbindung wird abgesaugt und unter reduziertem Druck bei 50°C getrocknet.

c) 6,0 Teile Cyanurchlorid und etwa 0,5 Teile eines handelsüblichen Dispergiermittels werden in 50 Teilen Wasser angerührt; bei 0°C gibt man eine Lösung mit einem pH-Wert von 5,5 von 8,3 Teilen Anilin-2,5-disulfonsäure in 50 Teilen Wasser hinzu und rührt den Ansatz bei 0 bis 5°C und unter Einhaltung eines pH-Wertes zwischen 4 und 5 noch eine Stunde nach. Zu der gebildeten klaren Lösung gibt man allmählich innerhalb von 30 Minuten bei etwa 20°C und bei Einhaltung eines pH-Wertes zwischen 8 und 9 eine

Lösung mit einem pH-Wert von 10 von 12,7 Teilen der unter b) hergestellten Triphendioxazinverbindung in 400 Teilen Wasser. Danach rührt man den Ansatz noch 4 Stunden bei 30°C unter Einhaltung eines pH-Wertes zwischen 8 und 9 mittels Natriumcarbonat, stellt ihn sodann mit konzentrierter wäßriger Salzsäure auf einen pH-Wert von 6 und fällt die gebildete erfindungsgemäße Triphendioxazinverbindung mit Natriumchlorid aus oder isoliert sie durch Sprühtrocknung der Syntheselösung.

Die erfindungsgemäße Triphendioxazinverbindung besitzt, in Form der freien Säure geschrieben, die Formel

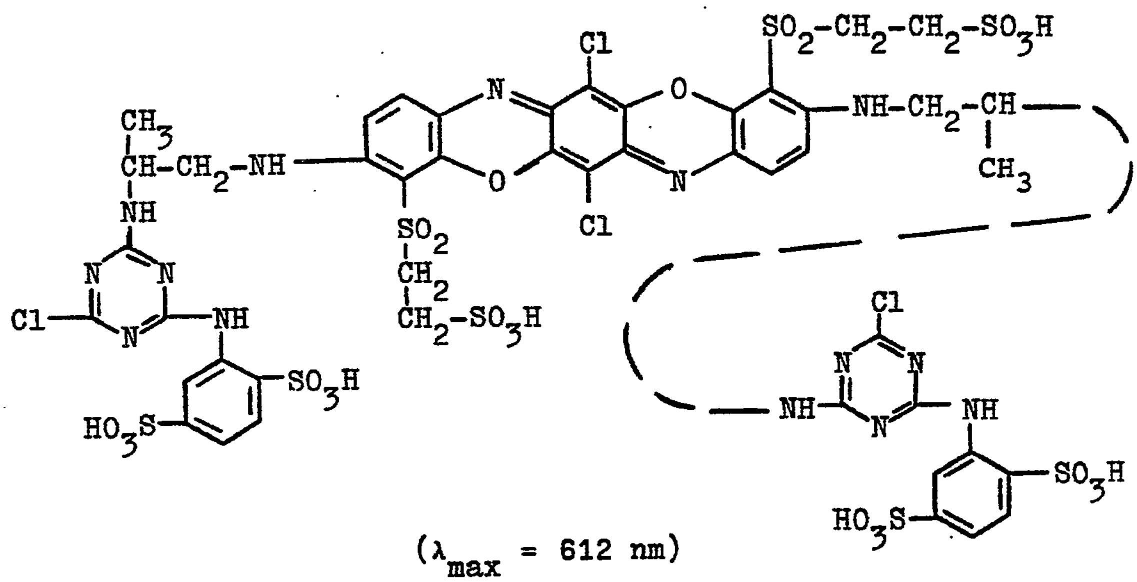

($\lambda_{max}$ = 612 nm)

(die jeweilige β-Sulfoethylsulfonyl-Gruppe kann auch in der anderen ortho-Stellung zur Aminogruppe gebunden sein, befindet sich jedoch mit größerer Wahrscheinlichkeit in der in der obigen Formel angegebenen Stellung).
Diese erfindungsgemäße Verbindung besitzt sehr gute faserreaktive Farbstoffeigenschaften. Sie färbt die in der Beschreibung genannten Materialien, insbesondere Cellulosefasermaterialien, wie Baumwolle, nach den in der Technik üblichen und bekannten Verfahrensweisen der Applikation und Fixierung von faserreaktiven Farbstoffen in farbstarken, reinen grünstichig blauen Tönen mit guten Echtheiten, wie insbesondere guter Lichtechtheit der trockenen oder feuchten, wie mit Trinkwasser befeuchteten Färbung, guter alkalischen Schweißlichtechtheit, Chlorbadewasserechtheit, Hypochloritechtheit, alkalischer Schweißechtheit, Waschechtheit, auch in Gegenwart von Perboraten, Naßliegeechtheit und Säurelagerbeständigkeit.

Beispiel 8

Zur Herstellung einer erfindungsgemäßen Triphendioxazinverbindung verfährt man gemäß der Verfahrensweise des Beispieles 7, setzt jedoch anstelle von 3-(β-Sulfoethylsulfonyl)-4-(β-amino-propyl)-amino-anilin die äquivalente Menge an 3-(β-Sulfoethylsulfonyl)-4-(γ-amino-propyl)-amino-anilin ein. Die erfindungsgemäße Verbindung besitzt, in Form der freien Säure geschrieben, die mutmaßliche Formel

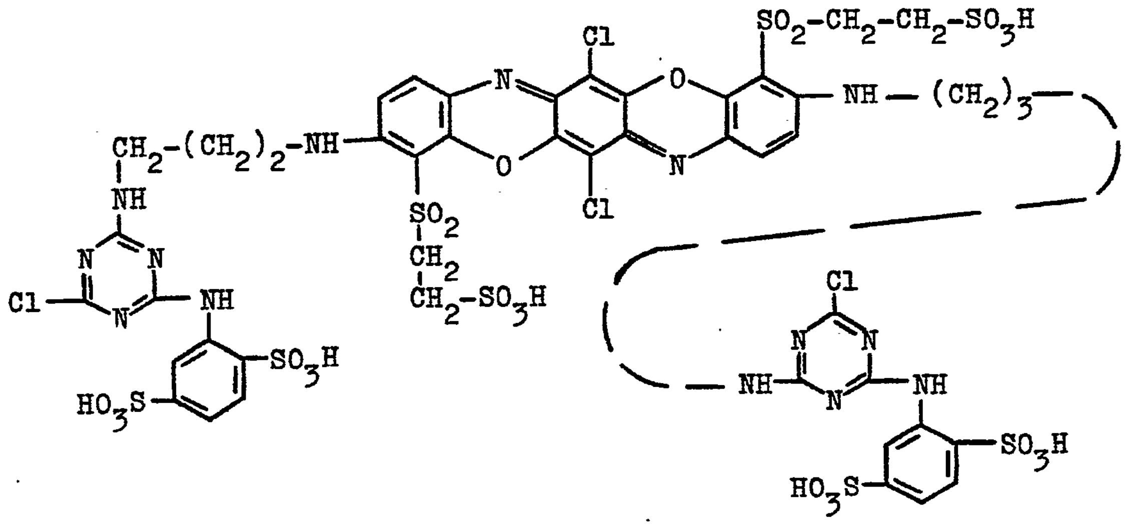

Diese erfindungsgemäße Verbindung besitzt sehr gute faserreaktive Farbstoffeigenschaften und liefert auf den in der Beschreibung genannten Fasermaterialien, insbesondere auf Cellulosefasermaterialien, wie Baumwollgewebe, nach den in der Technik üblichen Applikationa- und Fixierverfahren für faserreaktive Farbstoffe kräftige grünstichig blaue Färbungen und Drucke mit guten Echtheitseigenschaften, von denen insbesondere die guten Licht-, Schweiß- und Naßliegeechtheiten hervorgehoben werden können.

Beispiel 9

a) Zu einer Suspension von 56 Teilen 3-(β-Sulfoethylsulfonyl)-4-(β-aminoethyl)-amino-anilin in 200 Teilen Wasser werden 22 Teile Chloranil gegeben. Der Ansatz wird 5 Stunden bei 65°C unter Einhaltung eines pH-Wertes zwischen 5 und 6 gerührt. Das gebildete Produkt wird bei 30 bis 40°C abgesaugt, mit wenig Wasser gewaschen und unter reduziertem Druck getrocknet.

b) 75 Teile des unter a) erhaltenen Kondensationsproduktes werden innerhalb von 30 Minuten bei 15 bis 20°C in 460 Teile 20%iges Oleum eingetragen; man rührt über Nacht bei 20°C weiter. Zu der erhaltenen Lösung gibt man innerhalb von 20 Minuten 44 Teile Natriumperoxodisulfat; hierbei steigt die Reaktionstemperatur auf 215 bis 27°C an. Man rührt den Ansatz noch weitere 4 Stunden bei 20 bis 25°C und rührt ihn sodann in 1300 Teile Eis ein. Die ausgefallene Triphendioxazin-Verbindung wird abgesaugt, der feuchte Filterkuchen in 1000 Teilen Wasser suspendiert und mit etwa 100 Teilen Natriumcarbonat ein pH-Wert von 6 eingestellt. Die Dioxazinverbindung wird hieraus mit Natriumchlorid ausgesalzen, abgesaugt und unter reduziertem Druck bei 60°C getrocknet.

c) 5,5 Teile Cyanurchlorid werden mit etwa 0,5 Teilen eines handelsüblichen Dispergiermittels in 50 Teilen Wasser bei 0 bis 5°C angerührt. Man gibt eine Lösung mit einem pH-Wert von 6 von 6,7 Teilen Anilin-2,5-disulfonsäure in 50 Teilen Wasser hinzu und rührt den Ansatz 4 Stunden bei 0 bis 5°C bei Einhaltung eines pH-Wertes von 3 bis 4 weiter. Zu der gebildeten klaren Lösung werden sodann 11,4 Teile der unter b) erhaltenen Dioxazinverbindung in fein gemahlener Form hinzugegeben. Das Reaktionsgemisch wird 5 Stunden bei einer Temperatur von 30 bis 40°C und einem pH-Wert zwischen 7 und 8 gehalten; anschließend wird der Ansatz geklärt und die erfindungsgemäße Verbindung mit Natriumchlorid ausgesalzen, abgesaugt und unter reduziertem Druck bei 50°C getrocknet.

Die erfindungsgemäße Verbindung besitzt, in Form der freien Säure geschrieben, die folgende Konstitution:

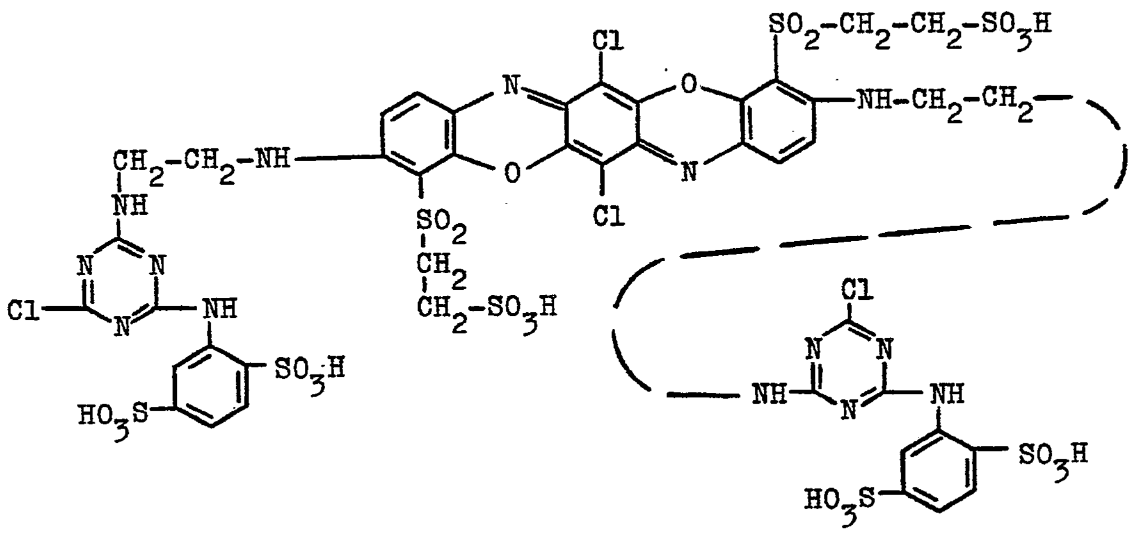

Diese erfindungsgemäße Verbindung besitzt sehr gut faserreaktive Farbstoffeigenschaften und liefert auf den in der Beschreibung genannten Fasermaterialien, insbesondere auf Cellulosefasermaterialien, wie Baumwollgewebe, nach den in der Technik üblichen Applikationa- und Fixierverfahren für faserreaktive Farbstoffe kräftige grünstichig blaue Färbungen und Druck mit guten Echtheitseigenschaften, von denen insbesondere die guten Licht-, Schweiß- und Naßliegeechtheiten hervorgehoben werden können.

Beispiel 10

Zur Herstellung einer erfindungsgemäßen Triphendioxazinverbindung verfährt man gemäß der Verfahrensweise des Beispieles 7, setzt jedoch anstelle von 3-(β-Sulfoethylsulfonyl)-4-(β-amino-propyl)-amino-anilin die äquivalente Menge an 3-(β-Sulfoethylsulfonyl)-4-piperazinyl-anilin ein. Man erhält das erfindungsgemäße Alkalisalz der Verbindung der Formel

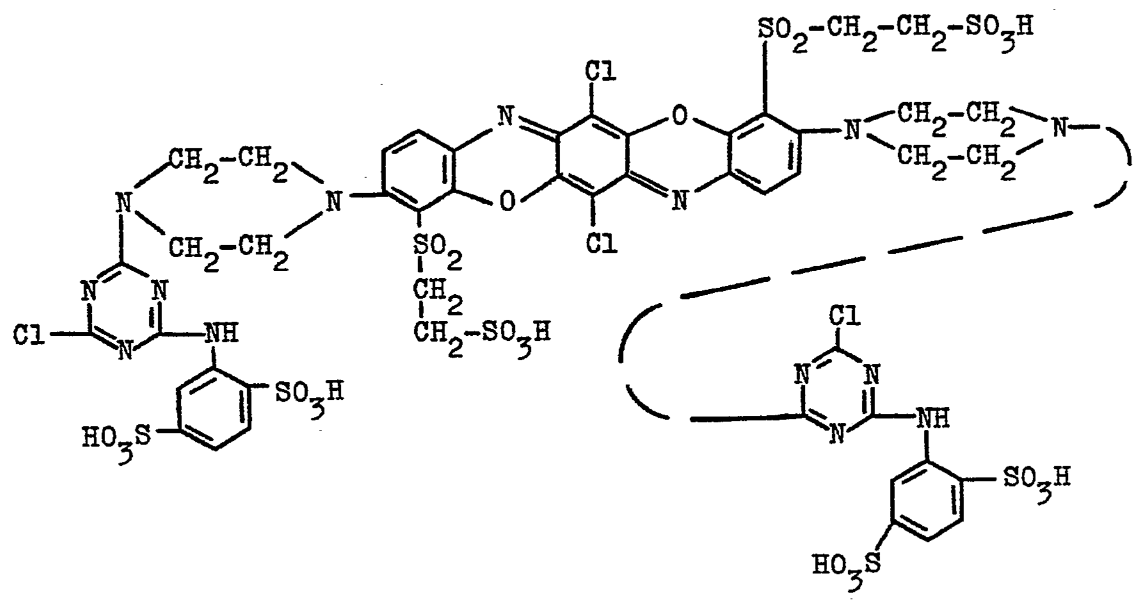

(die jeweilige β-Sulfoethylsulfonyl-Gruppe kann auch in der anderen ortho-Stellung zur Aminogruppe gebunden sein, befindet sich jedoch mit größerer Wahrscheinlichkeit in der in der obigen Formel angegebenen Stellung).
Diese erfindungsgemäße Verbindung besitzt sehr gute faserreaktive Farbstoffeigenschaften. Sie färbt die in der Beschreibung genannten Materialien, insbesondere Cellulosefasermaterialien, wie

Baumwolle, nach den in der Technik üblichen und bekannten Verfahrensweisen der Applikation und Fixierung von faserreaktiven Farbstoffen in farbstarken, reinen grünstichig blauen Tönen mit guten Echtheiten, wie insbesondere guter Lichtechtheit der trockenen oder feuchten, wie mit Trinkwasser befeuchteten Färbung, guter alkalischen Schweißlichtechtheit, Chlorbadewasserechtheit, Hypochloritechtheit, alkalischer Schweißechtheit, Waschechtheit, auch in Gegenwart von Perboraten, Naßliegeechtheit und Säurelagerbeständigkeit.

Beispiel 11 bis 41

In den nachfolgenden Tabellenbeispielen sind weitere erfindungsgemäße Triphendioxazin-Verbindungen mit Hilfe der Formelglieder der nachstehenden allgemeinen Formel (A) beschrieben. Sie lassen sich aus den daraus ersichtlichen Komponenten in einer der erfindungsgemäßen Verfahrensweisen, wie analog einer der Verfahrensweisen der obigen Ausführungsbeispiele, herstellen. Sie besitzen ebenfalls sehr gute faserreaktive Farbstoffeigenschaften und liefern insbesondere auf Cellulosefasermaterialien farbstarke Färbungen und Drucke mit guten Echtheiten in den in dem jeweiligen Tabellenbeispiel angegebenen Farbton.

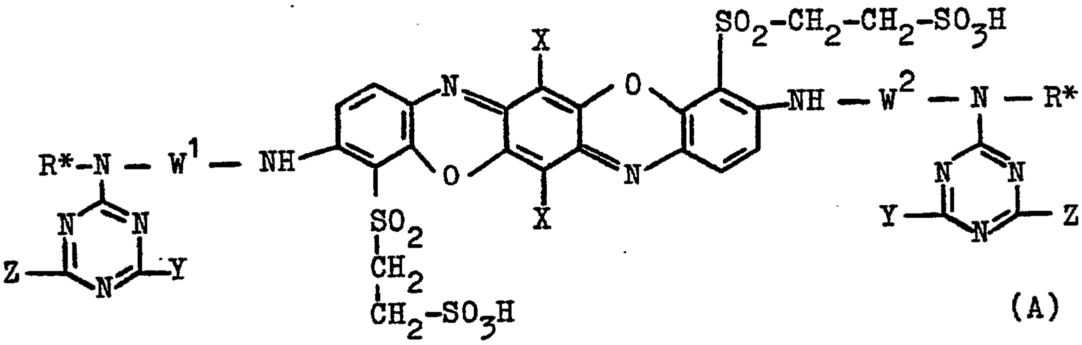

(A)

| Bsp. | - $W^1$ - | - $W^2$ - | X | Z | R* | Rest Y | Farbton |
|---|---|---|---|---|---|---|---|
| 11 | 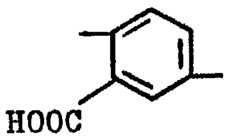 | 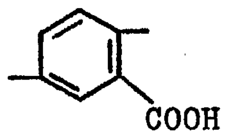 | Cl | Cl | H | 3-(ß-Sulfatoethyl-sulfonyl)-phenyl-amino | grünstichig blau |
| 12 | 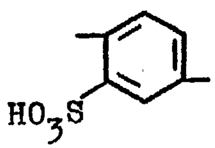 | 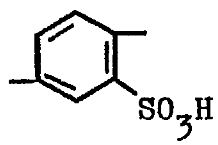 | Br | Cl | H | 4-(ß-Sulfatoethyl-sulfonyl)-phenyl-amino | dito |
| 13 | dito | dito | Br | Cl | H | 4-Methoxy-3-(ß-sul-fatoethylsulfonyl)-phenylamino | dito |
| 14 | 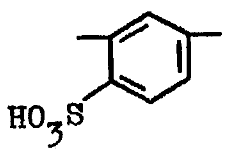 | 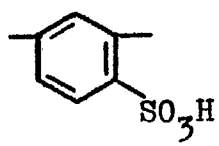 | Cl | Cl | H | 4-(ß-Sulfatoethylsul-fonyl)-phenylamino | dito |
| 15 | dito | dito | Cl | Cl | H | 3-(ß-Sulfatoethyl-sulfonyl)-phenylamino | dito |
| 16 | dito | dito | Cl | F | H | 3-Sulfo-phenylamino | dito |
| 17 | dito | dito | Cl | F | H | 4-(ß-Sulfatoethyl-sulfonyl)-phenylamino | dito |

| Bsp. | - $W^1$ - | - $W^2$ - | X | Z | R* | Rest Y | Farbton |
|---|---|---|---|---|---|---|---|
| 18 | 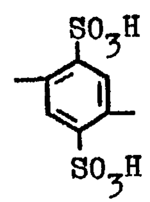 | 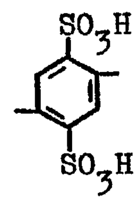 | Cl | Cl | H | 4-(ß-Sulfatoethyl-sulfonyl)-phenylamino | dito |
| 19 | dito | dito | Cl | Cl | H | 3-(ß-Sulfatoethyl-sulfonyl)-phenylamino | dito |
| 20 | dito | dito | Cl | Cl | H | 4-Methoxy-3-(ß-sulfatoethylsulfonyl)-phenylamino | dito |
| 21 | 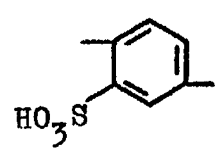 | 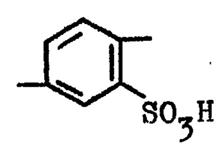 | Cl | Cl | H | 3-(ß-Sulfatoethyl-sulfonyl)-phenylamino | dito |
| 22 | dito | dito | Cl | Cl | H | 4-Methoxy-3-(ß-sulfatoethylsulfonyl)-phenylamino | dito |
| 23 | dito | dito | Cl | F | H | 4-Sulfo-phenylamino | dito |
| 24 | dito | dito | Cl | F | H | 3-Sulfo-phenylamino | dito |
| 25 | $-CH_2-CH_2-$ | $-CH_2-CH_2-$ | Cl | F | H | 2,4-Disulfo-phenylamino | dito |

| Bsp. | - $W^1$ - | - $W^2$ - | X | Z | R* | Rest Y | Farbton |
|---|---|---|---|---|---|---|---|
| 26 | $-CH_2-CH_2-$ | $-CH_2-CH_2-$ | Cl | Cl | H | 4-[4'-(2",4"-Disulfo-phenylamino)-2"-chlor-s-triazin-6-yl]-amino-2-sulfo-phenylamino | dito |
| 27 | $-CH_2-CH_2-CH_2-$ | $-CH_2-CH_2-CH_2-$ | Cl | F | H | 2,4-Disulfo-phenylamino | dito |
| 28 | $-CH_2-CH_2-CH_2-$ | $-CH_2-CH_2-CH_2-$ | Cl | Cl | H | 3-Sulfo-phenylamino | dito |
| 29 | $-(CH_2)_2-\underset{(CH_2)_2-}{O}$ | $-(CH_2)_2-\underset{(CH_2)_2-}{O}$ | Cl | Cl | H | 2,4-Disulfo-phenylamino | dito |
| 30 | $-CH_2-CH_2-$ | $-CH_2-CH_2-$ | Cl | Cl | Cyclohexyl | 2-Sulfo-5-(ß-sulfato-ethylsulfonyl)-phenylamino | dito |
| 31 | $-\underset{CH_3}{CH}-CH_2-$ | $-CH_2-\underset{CH_3}{CH}-$ | Cl | F | H | 2,5-Disulfo-phenylamino | dito |
| 32 | dito | dito | Cl | Cl | H | 4-[4'-(3"-Sulfophenyl-amino)-2"-chlor-s-triazin-6-yl]-amino-2,5-disulfo-phenylamino | dito |
| 33 | $-CH_2-CH_2-$ | $-CH_2-CH_2-$ | Cl | Cl | Cyclohexyl | 2,4-Disulfo-phenylamino | dito |
| 34 | $-\underset{CH_3}{CH}-CH_2-$ | $-CH_2-\underset{CH_3}{CH}-$ | Cl | Cl | H | 2-Sulfo-5-(ß-sulfato-ethylsulfonyl)-phenylamino | dito |

| Bsp. | - W¹ - | - W² - | X | Z | R* | Rest Y | Farbton |
|---|---|---|---|---|---|---|---|
| 35 | $-CH_2-\underset{OSO_3H}{CH}-CH_2-$ | $-CH_2-\underset{OSO_3H}{CH}-CH_2$ | Cl | Cl | H | 4-(ß-Sulfatoethyl-sulfonyl)-phenylamino | dito |
| 36 | die Reste -(R*)N-W¹- und -W²-N(R*)- bilden jeweils eine direkte Bindung | | Cl | Cl | - | 3-Sulfo-phenylamino | rotstichig blau |
| 37 | 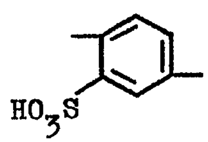 | 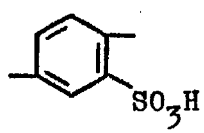 | Cl | F | H | 2,5-Disulfo-phenylamino | grünstichig blau |
| 38 | dito | dito | Cl | Cl | H | 2-Sulfo-5-(ß-sulfato-ethylsulfonyl)-phenyl-amino | dito |
| 39 | dito | dito | Cl | Cl | H | ß-(4-ß'-Sulfatoethyl-sulfonyl-phenyl)-ethylamino | dito |
| 40 | dito | dito | Cl | Cl | H | 4-Methyl-3-(ß-sulfa-toethylsulfonyl)-phenylamino | dito |
| 41 | 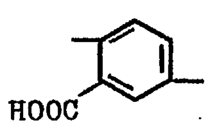 | 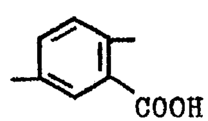 | Cl | Cl | H | 4-(ß-Sulfatoethylsul-fonyl)-phenylamino | dito |

Beispiel 42

a) 118 Teile 3-Methylsulfonyl-4-chlor-nitrobenzol und 130 Teile 1,4-Diamino-benzol-2-sulfonsäure werden in 800 Teilen Wasser unter Einstellung eines pH-Wertes von 7 angerührt. 16 Teile Magnesiumoxid werden zugegeben, und das Reaktionsgemisch wird sodann acht Stunden unter Rückfluß erhitzt. Nach Abkühlen auf Raumtemperatur wird das ausgefallene Natriumsalz des 3-Methylsulfonyl-4-(4'-amino-3'-sulfo-phenylamino)-nitrobenzols abgesaugt und getrocknet.
Es zeigt folgende $^1$H-NMR-Daten (in $D_6$-Dimethylsulfoxid mit Tetramethylsilan als innerer Standard):
δ = 3,32 ppm (s,3H); 5,75 ppm (s,NH); 6,67 ppm (d,1H); 6,77 ppm (d,1H); 6,88 ppm (dd,1H); 7,35 ppm (d,1H); 8,20 ppm (dd,1H); 8,47 ppm (d,1H).

b) 164 Teile der Nitroverbindung von a) werden in 500 Teilen Wasser suspendiert und in Gegenwart eines Nickelkatalysators in einem Autoklaven bei einer Temperatur zwischen 60 und 80°C und einem Wasserstoffdruck von 50 bar hydriert. Der Katalysator wird anschließend abfiltriert und das Produkt aus dem Filtrat mittels Kaliumchlorid (mit einer Menge von 15 %, bezogen auf das Volumen des Filtrates) ausgesalzen.
Das Kaliumsalz des 3-Methylsulfonyl-4-(4'-amino-3'-sulfo-phenylamino)-anilin hat folgende $^1$H-NMR-Daten (in $D_6$-dimethylsulfoxid und TMS als innerer Standard):
δ = 3,14 ppm (s,3H); 5,19 ppm (s,NH); 6,57 ppm (d,1H); 6,67 ppm (s, NH); 6,78 ppm (m,3H): 7,03 ppm (d,1H); 7,10 ppm (d,1H).

c) 17,9 Teile der Aminoverbindung von b) und 6,2 Teile 2,3,5,6-Tetrachlor-1,4-benzochinon werden bei einem pH-Wert von 6 in 100 Teilen Wasser aufgeschlämmt. Der Ansatz wird auf 60°C erwärmt und drei Stunden bei dieser Temperatur und mittels Natriumhydrogencarbonat bei dem pH-Wert von 6 gehalten. Das ausgefallene chinoide Zwischenprodukt wird sodann abgesaugt und getrocknet.
14 Teile dieses Produktes werden bei 20°C innherhalb von 20 Minuten in 160 Teile 15 %iges Oleum eingetragen. Der Ansatz wird 15 Stunden bei 20°C gerührt und sodann auf 800 Teile Eis gegeben. Die ausgefallene Triphendioxazin-Verbindung wird abgesaugt und in 200 Teilen Wasser mit Natrumcarboncat zu einer neutralen Lösung gelöst ($\lambda_{max}$ = 620 nm).

d) 200 Teile der unter c) erhaltenen neutralen Lösung der Triphendioxazin-Verbindung werden mit 5 Teilen 3-(β-Chlorethylsulfonyl)-benzoylchlorid versetzt; der Ansatz wird bei Raumtemperatur und einem pH-Wert von 7 vier Stunden gerührt und hierbei mittels Natriumhydrogencarbonat bei dem pH-Wert von 7 gehalten. Die synthetisierte erfindungsgemäße Triphendioxazin-Verbindung wird danach mit Natriumchlorid ausgesalzen, abgesaugt, mit einem Phosphatpuffer (pH etwa 5) vermischt und unter reduziertem Druck bei 50°C getrocknet.

Die erfindungsgemäße Verbindung besitzt, in Form der freien Säure geschrieben, die mutmaßliche Struktur der Formel

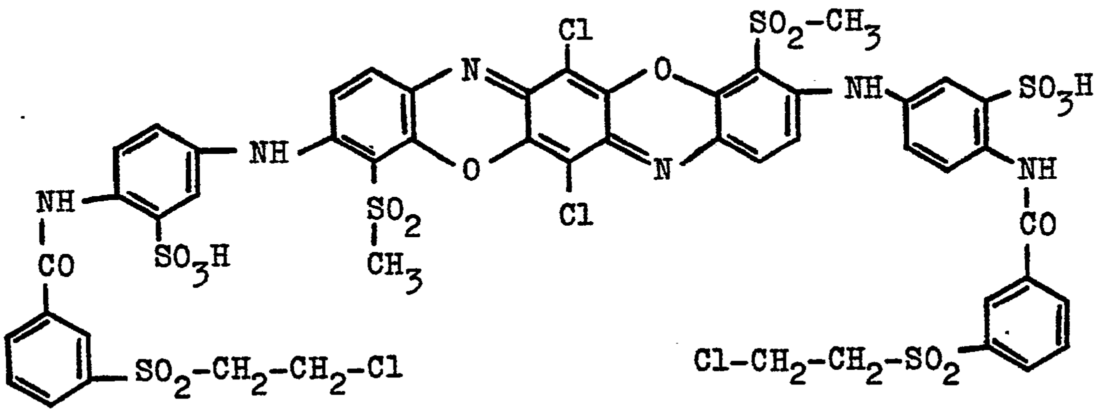

($\lambda_{max}$ = 616 nm)

Diese erfindungsgemäße Verbindung besitzt sehr gute faserreaktive Farbstoffeigenschaften. Sie färbt die in der Beschreibung genannten Materialien, insbesondere Cellulosefasermaterialien, wie Baumwolle, nach den in der Technik üblichen und bekannten Verfahrensweisen der Applikation und Fixierung von faserreaktiven Farbstoffen in farbstarken, reinen blauen Tönen mit guten Echtheiten, wie insbesondere guter Lichtechtheit der trockenen oder feuchten, wie mit Trinkwasser befeuchteten Färbung, guter alkalischen Schweißlichtechtheit, Hypochloritechtheit, alkalischer Schweißechtheit, Waschechtheit, auch in Gegenwart von Perboraten und Naßliegeechtheit.

Beispiel 43

a) Zur Synthese einer erfindungsgemäßen Triphendioxazin-Verbindung wird zunächst ein erfindungsgemäßes Vorprodukt, nämlich 3-Methylsulfonyl-4-(3'-amino-4'-sulfophenylamino)-anilin, synthetisiert, indem man gemäß der Verfahrensweise des Beispieles 42 a) und b) verfährt, jedoch anstelle von 1,4-Diamino-benzol-2-sulfonsäure die äquivalente Menge an 1,4-Diamino-benzol-2-sulfonsäure einsetzt. Die erhaltene Verbindung zeigt folgende $^1H$-NMR-Daten (in $D_6$-Dimethylsulfoxid und TMS als innerer Standard):
δ = 3,04 ppm (s,3H); 5,45 ppm (s,NH); 5,95 ppm (d,1H); 6,01 ppm (d,1H); 6,82 ppm (s,NH); 6,85 ppm (d,1H); 7,09 ppm (d,1H); 7,10 ppm (d,1H); 7,22 ppm (d,1H).

b) Die Anilinverbindung von a) wird analog den Angaben des Beispieles 42 c) mit Chloranil zunächst zum chinoiden Zwischenprodukt kondensiert und dieses sodann in Oleum zur Triphendioxazin-Verbindung cyclisiert, die in wäßriger Lösung ein Absorptionsmaximum bei 613 nm besitzt und folgende $^1H$-NMR-Daten (in $D_6$-Dimethylsulfoxid und TMS als innerer Standard) zeigt:
δ = 3,51 ppm (s,6H); 5,82 ppm (s,NH); 6,55 ppm (s,2H); 7,06 ppm (d,2H); 7,50 ppm (d,2H); 7,90 ppm (s,2H); 9,70 ppm (s,NH).
Während der Cyclisierungsreaktion erfolgt gleichzeitig eine Sulfierung, so daß der erhaltenen Triphendioxazin-Zwischenverbindung die folgende Struktur zugeordnet werden kann:

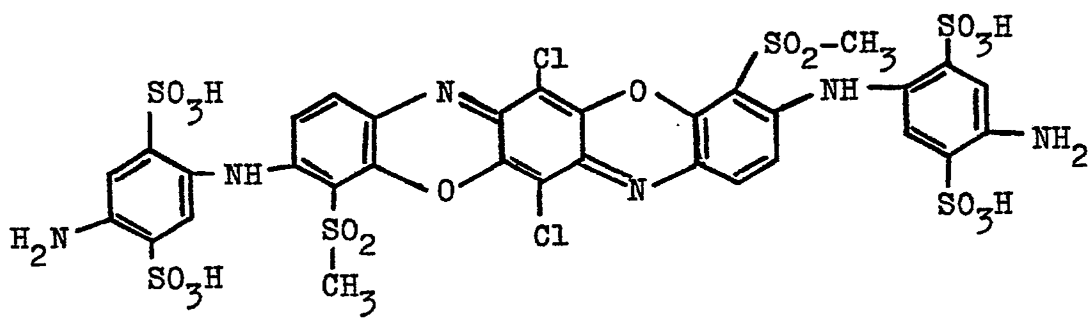

c) Zur Synthese der erfindungsgemäßen Triphendioxazinverbindung verfährt man analog den Angaben des Beispieles 42d) durch Umsetzung mit 3-(β-Chlorethylsulfonyl)-benzoylchlorid. Die erfindungsgemäße Triphendioxazinverbindung wird in üblicher Weise isoliert und besitzt, in Form der freien Säure geschrieben, folgende Konstitution:

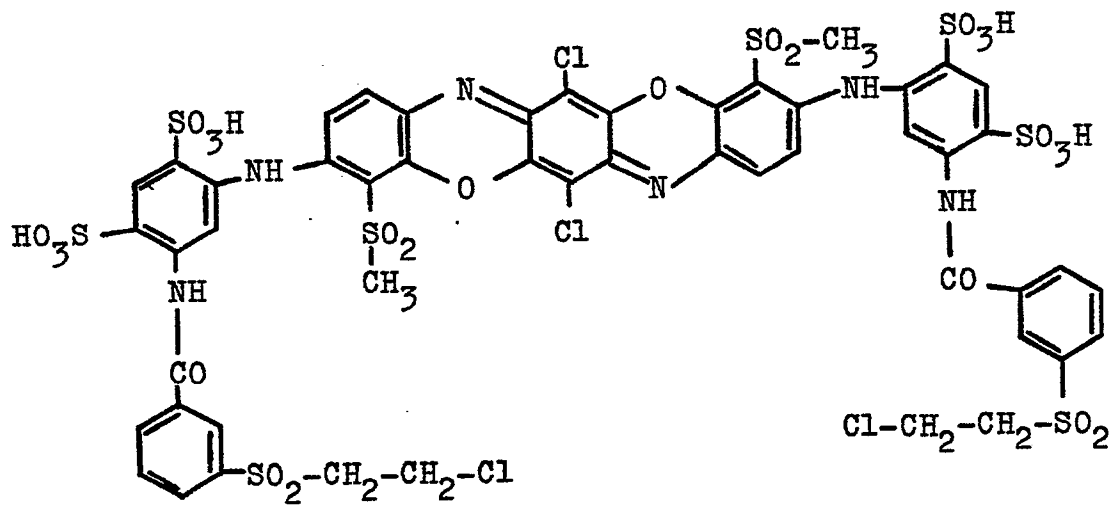

($\lambda_{max}$ = 590 nm)

Diese erfindungsgemäße Verbindung besitzt sehr gute faserreaktive Farbstoffeigenschaften. Sie färbt die in der Beschreibung genannten Materialien, insbesondere Cellulosefasermaterialien, wie Baumwolle, nach den in der Technik üblichen und bekannten Verfahrensweisen der Applikation und Fixierung von faserreaktiven Farbstoffen in farbstarken, reinen blauen Tönen mit guten Echtheiten, wie insbesondere guter Lichtechtheit der trockenen oder feuchten, wie mit Trinkwasser befeuchteten Färbung, guter alkalischen Schweißlichtechtheit, Hypochloritechtheit, alkalischer Schweißechtheit, Waschechtheit, auch in Gegenwart von Perboraten, und Naßliegeechtheit.

Beispiel 44

6 Teile 4-(β-Sulfatoethylsulfonyl)-anilin werden in 50 Teilen Wasser bei einem pH-Wert von 5 gelöst und zu einer Suspension von 3,8 Teilen Cyanurchlorid in 30 Teilen Wasser gegeben; das Reaktionsgemisch wird unter Rühren bis zur beendeten Kondensationsreaktion bei einer Temperatur zwischen 10 und 15°C und bei einem pH-Wert von 5 (mittels Natriumcarbonat) gehalten. Anschließend werden 300 Teile der unter Beispiel 42 c) hergestellten neutralen Lösung der Triphendioxazin-Verbindung hinzugegeben; der Ansatz wird noch drei Stunden bei einem pH von 5,5 und einer Temperatur von 35°C und anschließend noch zwei Stunden bei einem pH-Wert von 5,5 und einer Temperatur von 50°C weitergerührt.
Die erfindungsgemäße Triphendioxazin-Verbindung wird aus der Syntheselösung bei Raumtemperatur mittels Natriumchlorid ausgefällt oder durch Sprühtrocknung der Synthese lösung isoliert.

Die erfindungsgemäße Verbindung besitzt, in Form der freien Säure geschrieben, die mutmaßliche Struktur der Formel

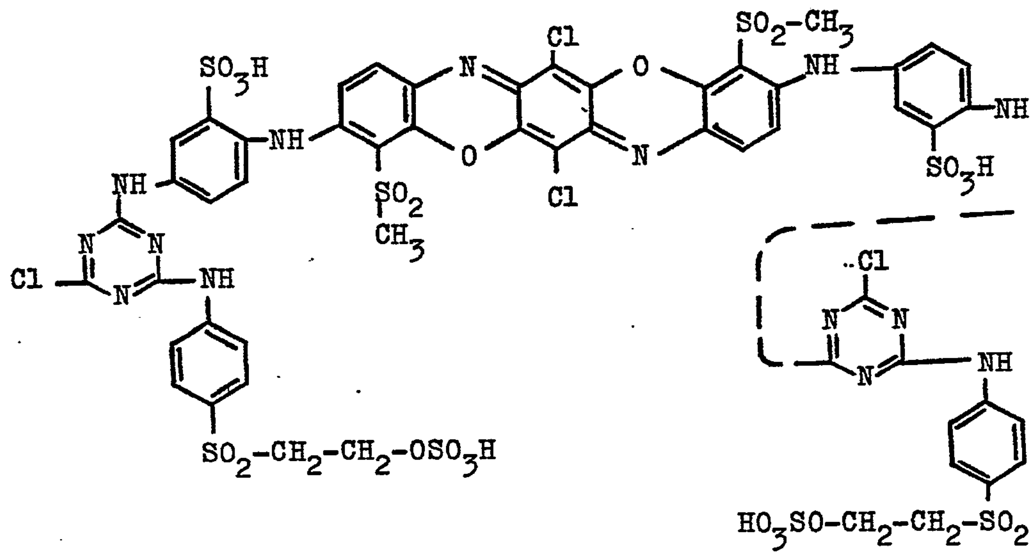

$(\lambda_{max} = 612\ nm)$

Diese erfindungsgemäße Verbindung besitzt sehr gute faserreaktive Farbstoffeigenschaften. Sie färbt die in der Beschreibung genannten Materialien, insbesondere Cellulosefasermaterialien, wie Baumwolle, nach den in der Technik üblichen und bekannten Verfahrensweisen der Applikation und Fixierung von faserreaktiven Farbstoffen in farbstarken, reinen blauen Tönen mit guten Echtheiten, wie insbesondere guter Lichtechtheit der trockenen oder feuchten, wie mit Trinkwasser befeuchteten Färbung, guter alkalischen Schweißlichtechtheit, Hypochloritechtheit, alkalischer Schweißechtheit, Waschechtheit, Naßliegeechtheit und Säurelagerbeständigkeit.

Beispiele 45 bis 49

In den nachfolgenden Tabellenbeispielen sind weitere erfindungsgemäße Triphendioxazin-Verbindungen mit Hilfe der Formelglieder der nachstehenden allgemeinen Formel (B) beschrieben. Sie lassen sich aus den daraus ersichtlichen Komponenten in einer der erfindungsgemäßen Verfahrensweisen, wie analog einer der Verfahrensweisen der obigen Ausführungsbeispiele, herstellen. Sie besitzen ebenfalls sehr gute faserreaktive Farbstoffeigenschaften und liefern insbesondere auf Cellulosefasermaterialien farbstarke Färbungen und Drucke mit guten Echtheiten in den in dem jeweiligen Tabellenbeispiel angegebenen Farbton.

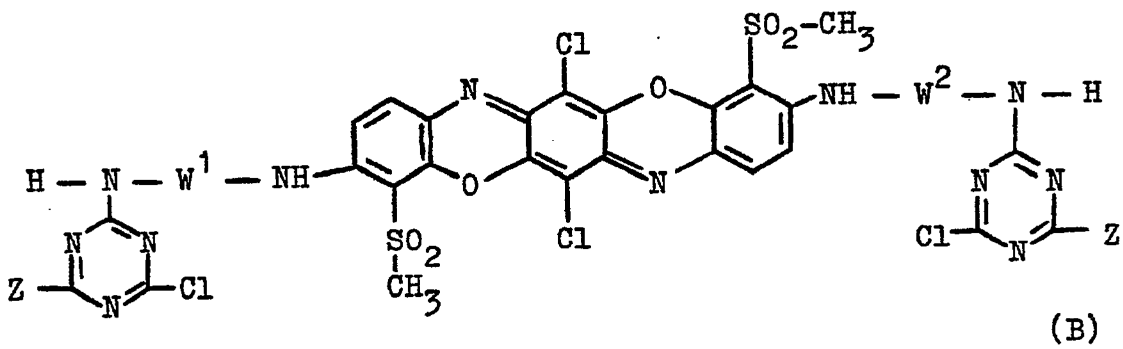

(B)

| Bsp. | - $W^1$ - | - $W^2$ - | Rest Z | Farbton |
|---|---|---|---|---|
| 45 | 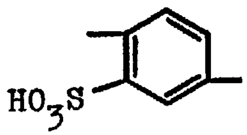 | 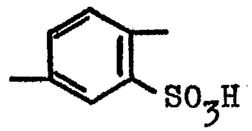 | Bis-{N,N-[ß-(ß'-chlor-ethylsulfonyl)-ethyl]}-amino | grünstichig blau |
| 46 | 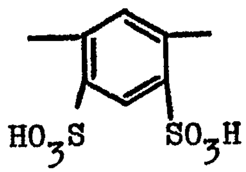 | 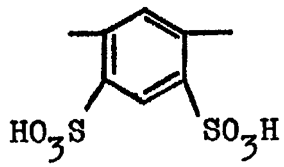 | dito | dito |
| 47 | dito | dito | 4-(ß-Sulfatoethylsulfonyl)-phenylamino | dito |
| 48 | 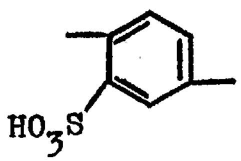 | 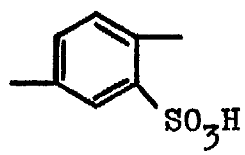 | 3-(ß-Sulfatoethylsulfonyl)-phenylamino | dito |
| 49 | 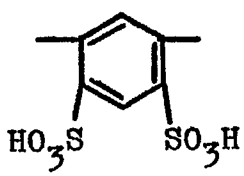 | 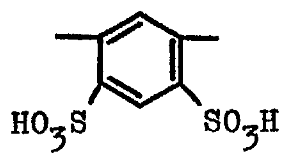 | dito | dito |

**Patentansprüche für die Vertragsstaaten: CH, LI, DE, FR, GB**

1. Wasserlösliche Triphendioxazin-Verbindung entsprechend der allgemeinen Formel (1)

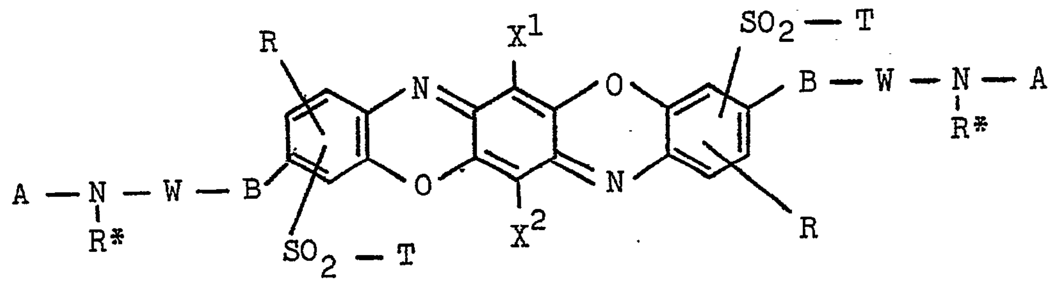

(1)

in welcher bedeuten:
T ist eine gegebenenfalls substituierte Alkylgruppe von 1 bis 6 C-Atomen, ausgenommen eine in β-Stellung durch einen alkalisch eliminierbaren Substituenten substituierte Ethylgruppe, wobei die Alkylgruppe noch durch Heterogruppen unterbrochen sein kann, die aus Gruppen der Formeln –0–, –S–, –NH– und –N(R′), worin
R′ eine Alkylgruppe von 1 bis 6 C-Atomen ist, die substituiert sein kann,
ausgewählt sind, oder
T ist eine gegebenenfalls substituierte Arylgruppe;
B ist ein Sauerstoff- oder Schwefelatom oder eine Aminogruppe der Formel –NH– oder –N(R″)–, in welcher
R″ eine Alkylgruppe von 1 bis 6 C-Atomen ist, die substituiert sein kann, oder
B bildet zusammen mit W eine direkte Bindung;
W bildet zusammen mit B eine direkte Bindung oder
W ist ein bivalenter, gegebenenfalls substituierter aliphatischer, araliphatischer, heterocyclischer oder aromatisch-carbocyclischer Rest, wobei die aliphatischen Reste in W durch Heterogruppen, bevorzugt 1 oder 2 Heterogruppen, unterbrochen sein können und diese Heterogruppen aus Gruppen der Formeln –O–, –S–, $-SO_2-$, –NH–, $-N(R^o)-$ und einem bivalenten heterocyclischen Rest ausgewählt sind, worin
$R^o$ eine Alkylgruppe von 1 bis 6 C-Atomen, bevorzugt von 1 bis 4 C-Atomen, ist, die substituiert sein kann,
und/oder wobei die aliphatischen Reste und Arylreste durch eine solche Heterogruppe miteinander verbunden sein können;
R ist ein Wasserstoffatom oder ein Alkyl von 1 bis 4 C-Atomen, das substituiert sein kann, oder ein Alkoxy von 1 bis 4 C-Atomen, das substituiert sein kann, oder ein Halogen;
R* ist ein Wasserstoffatom oder eine Alkylgruppe von 1 bis 4 C-Atomen, die substituiert sein kann, oder eine Cycloalkylgruppe von 5 bis 8 C-Atomen, oder
R* und der bivalente Rest W, sofern er eine Aminogruppe enthält, oder ein Teil des Restes W bilden zusammen mit den beiden Stickstoffatomen den Rest eines fünf- oder sechs-gliedrigen Heterocyclus;
A ist eine nicht-heterocyclische faserreaktive Gruppe oder
A ist ein Rest der allgemeinen Formel (2)

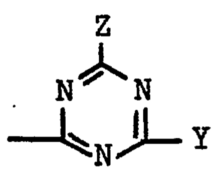

(2)

in welcher
Z ein Fluor-, Brom- oder Chloratom ist und
Y eine der Bedeutungen von Z besitzt oder eine Aminogruppe der allgemeinen Formel (3a)

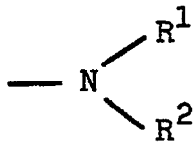 (3a)

ist, in welcher
$R^1$ ein Wasserstoffatom oder eine Alkylgruppe von 1 bis 6 C-Atomen ist, die substituiert sein kann, wobei einer der Substituenten auch eine faserreaktive Gruppe entsprechend einer allgemeinen Formel (4a), (4b), (5a) oder (5b)

$$-SO_2-CH=CH_2 \quad (4a)$$

$$-SO_2-CH_2-CH_2-E \quad (4b)$$

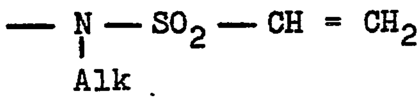 (5a)

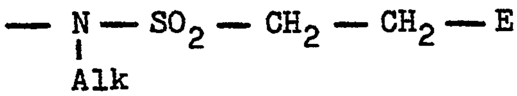 (5b)

sein kann, in welchen
E für einen alkalisch eliminierbaren Substituenten steht und
Alk ein Wasserstoffatom oder bevorzugt eine Alkylgruppe von 1 bis 4 C-Atomen bedeutet, oder $R^1$ eine Cycloalkylgruppe mit 5 bis 8 C-Atomen ist
und
$R^2$ ein Wasserstoffatom oder eine Alkylgruppe von 1 bis 6 C-Atomen ist, die substituiert sein kann, wobei einer der Substituenten auch eine faserreaktive Gruppe entsprechend der allgemeinen Formel (4a), (4b), (5a) oder (5b) sein kann, oder eine Cycloalkylgruppe mit 5 bis 8 C-Atomen ist oder eine Arylgruppe ist, die substituiert sein kann, wobei einer oder zwei dieser Substituenten im Arylrest auch eine faserreaktive Gruppe entsprechend der allgemeinen Formel (4a), (4b), (5a) oder (5b) sein kann, oder ein heterocyclischer Rest ist, wobei jedoch mindestens einer der Reste (4a), (4b), (5a) oder (5b) in $R^1$ oder $R^2$ enthalten ist,
oder
$R^1$ und $R^2$ zusammen mit dem N-Atom und gegebenenfalls einem weiteren Heteroatom den Rest eines Heterocyclus bilden,
oder
Y ist ein Rest der Formel (3b),

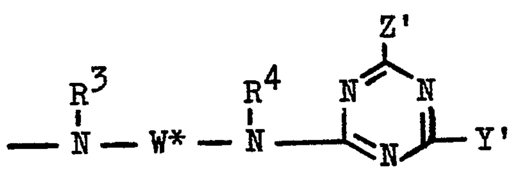 (3b)

in welcher $R^3$ und $R^4$ jedes ein Wasserstoffatom oder eine Alkylgruppe von 1 bis 4 C-Atomen bedeutet, Z' ein Fluor- oder Bromatom oder bevorzugt ein Chloratom ist, Y' eine der Bedeutungen von Y, ausgenommen die Bedeutung einer Gruppe der Formel (3b), besitzt und W* eine der Bedeutungen von W hat;
$X^1$ ist ein Wasserstoffatom oder ein Halogenatom, eine Cycloalkylgruppe von 5 bis 8 C-Atomen, eine Aralkyloxygruppe, eine Alkoxygruppe von 1 bis 4 C-Atomen, eine Aryloxygruppe, eine Alkylgruppe von 1 bis 4 C-Atomen, eine Arylgruppe, eine Aralkylgruppe, eine Cyangruppe, eine Carboxygruppe, eine Carbalkoxygruppe von 2 bis 5 C-Atomen, eine Arylaminogruppe, eine Carbamoylgruppe, eine N-Alkylcarbamoyl-Gruppe oder N, N-Dialkyl-carbamoyl-Gruppe mit Alkylresten von jeweils 1 bis 4 C-Atomen, eine N-Aryl-carbamoyl-Gruppe, eine Alkanoylaminogruppe von 2 bis 5 C-Atomen oder eine Aroylaminogruppe, wobei die Arylreste in diesen Gruppen noch durch 1 oder 2 Substituenten aus der Gruppe Halogen, Nitro, Alkyl von 1 bis 4 C-Atomen, Alkoxy von 1 bis 4 C-Atomen, Carboxy und Sulfo substituiert sein können;
$X^2$ ist mit $X^1$ gleich oder von $X^1$ verschieden und hat eine der für $X^1$ angegebenen Bedeutungen;
die Gruppe $-SO_2-T$ steht bevorzugt in ortho-Stellung zur Gruppe $-B-W-N(R^*)-A$ gebunden;
von den Sulfo- und Sulfatogruppen, die im Molekül (1) enthalten sein können, enthält das Molekül (1) zwingend mindestens eine, bevorzugt mindestens zwei davon,
ausgenommen die Verbindung der Formel (1), in welcher gleichzeitig $X^1$ und $X^2$ beide gleich Chlor, beide R gleich Wasserstoff, beide T gleich γ-Sulfatopropyl, beide B gleich –NH–, beide W gleich Ethylen, beide R* gleich Wasserstoff und beide A einen Rest der Formel (2) bedeuten, in welcher Z gleich Fluor und Y gleich 4-(β-Sulfatoethylsulfonyl)-phenylamino ist, und die Verbindung der Formel (1), in welcher gleichzeitig $X^1$ und $X^2$ beide gleich Chlor, beide R gleich Wasserstoff, beide T gleich β-Carboxyethyl, beide B gleich –NH– , beide W gleich 2-Sulfo-1,4-phenylen, beide R* gleich Wasserstoff und beide A gleich Difluor-s-triazinyl bedeuten.

2. Wasserlösliche Triphendioxazinverbindungen entsprechend der in Anspruch 1 angegebenen allgemeinen Formel (1), in welcher bedeuten:
$X^1$, $X^2$, T, B, R und R* haben die in Anspruch 1 angegebenen Bedeutungen;
W ist ein bivalenter, gegebenenfalls substituierter araliphatischer, heterocyclischer oder aromatisch-carbocyclischer Rest, wobei die aliphatischen Reste in W durch Heterogruppen unterbrochen sein können und diese Heterogruppen aus Gruppen der Formeln –O–, –S–, $-SO_2-$, –NH–, $N(R^o)$- und einem bivalenten heterocyclischen Rest ausgewählt sind, worin
$R^o$ eine Alkylgruppe von 1 bis 6 C-Atomen, bevorzugt von 1 bis 4 C-Atomen, ist, die substituiert sein kann, und/oder wobei die aliphatischen Reste und Arylreste durch eine solche Heterogruppe miteinander verbunden sein können,
oder
B und W bilden zusammen eine direkte Bindung;
A ist ein Rest der allgemeinen Formel (2)

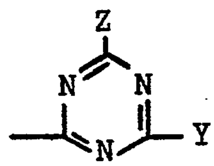
(2)

in welcher
Z ein Fluor-, Brom- oder Chloratom ist und
Y eine Aminogruppe der allgemeinen Formel (3a)

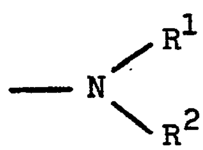
(3a)

ist, in welcher
$R^1$ ein Wasserstoffatom oder eine Alkylgruppe von 1 bis 4 C-Atomen ist, die durch 1 oder 2 Substituenten, bevorzugt 1 Substituenten, substituiert sein kann, die aus der Gruppe der folgenden Substituenten ausgewählt sind: Alkoxy von 1 bis 4 C-Atomen, Chlor, Cyano, Carboxy, Sulfo, Sulfato, Phosphato, Hydroxy, Phenyl, das durch 1, 2 oder 3 Substituenten substituiert sein kann, die aus der Menge von 3 Alkylgruppen von 1 bis 4 C-Atomen, 2 Alkoxygruppen von 1 bis 4 C-Atomen, 1 Bromatom, 2 Chloratome, 2 Sulfogruppen und 1 Carboxygruppe ausgewählt sind, und Naphthyl, das durch 1, 2 oder 3 Sulfogruppen substituiert ist oder durch 1, 2 oder 3 Substituenten substituiert sein kann, die aus der Menge von 2 Sulfogruppen, 1 Carboxygruppe, 1 Chloratom, 1 Alkylgruppe von 1 bis 4 C-Atomen, und 1 Alkoxygruppe von 1 bis 4 C-Atomen, ausgewählt sind; oder in welcher $R^1$ eine Cycloalkylgruppe mit 5 bis 8 C-Atomen ist und
$R^2$ ein Wasserstoffatom oder eine Alkylgruppe von 1 bis 4 C-Atomen ist, die durch 1 oder 2 Substituenten, bevorzugt 1 Substituenten, aus der Gruppe folgender Substituenten ausgewählt sind: Alkoxy von 1 bis 4 C-Atomen, Sulfo, Sulfato, Phosphato, Carboxy, Chlor, Cyano, Hydroxy, Cyclohexyl, Phenyl, das durch 1, 2 oder 3, bevorzugt 1 oder 2, Substituenten substituiert sein kann, die aus der Menge von 3 Alkylgruppen von 1 bis 4 C-Atomen, 2 Alkoxygruppen von 1 bis 4 C-Atomen, 1 Bromatom, 2 Chloratomen, 2 Sulfogruppen und 1 Carboxygruppe ausgewählt sind, und Naphthyl, das durch 1, 2 oder 3 Sulfogruppen substituiert sein kann; oder in welcher $R^2$ eine Cycloalkylgruppe mit 5 bis 8 C-Atomen ist oder einen durch 1, 2 oder 3 Sulfogruppen substituierten Naphthylrest oder den Phenylrest bedeutet, der durch 1, 2 oder 3 Substituenten, bevorzugt 1 oder 2 Substituenten, substituiert sein kann, die aus der Menge von 3

Alkylgruppen von 1 bis 4 C-Atomen, 2 Alkoxygruppen von 1 bis 4 C-Atomen, 1 Bromatom, 2 Chloratomen, 2 Sulfogruppen und 1 Carboxygruppe ausgewählt sind,
oder ein heterocyclischer Rest ist,
oder
Y ein Rest der Formel (3b)

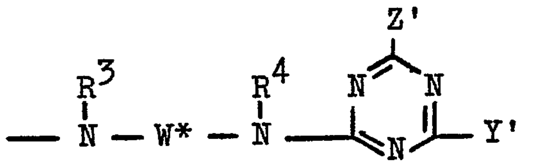

(3b)

ist, in welcher $R^3$ und $R^4$ jedes ein Wasserstoffatom oder eine Alkylgruppe von 1 bis 4 C-Atomen bedeutet, Z', ein Fluor- oder Bromatom oder bevorzugt ein Chloratom ist, Y', eine der Bedeutungen von Y, ausgenommen die Bedeutung einer Gruppe der Formel (3b), besitzt und W* eine der in Anspruch 1 genannten Bedeutungen von W besitzt,
ausgenommen eine Verbindung der Formel (1), in welcher gleichzeitig $X^1$ und $X^2$ beide gleich Chlor, beide R gleich Wasserstoff, beide T gleich β-Carboxyethyl, beide B gleich –NH– , beide W gleich 2-Sulfo-1,4-phenylen, beide R* gleich Wasserstoff und beide A einen Rest der Formel (2) bedeuten, in welcher Z gleich Chlor und Y gleich 3-Sulfo-phenyl ist.

3. Triphendioxazin-Verbindung nach Anspruch 2 der allgemeinen Formel (Ia)

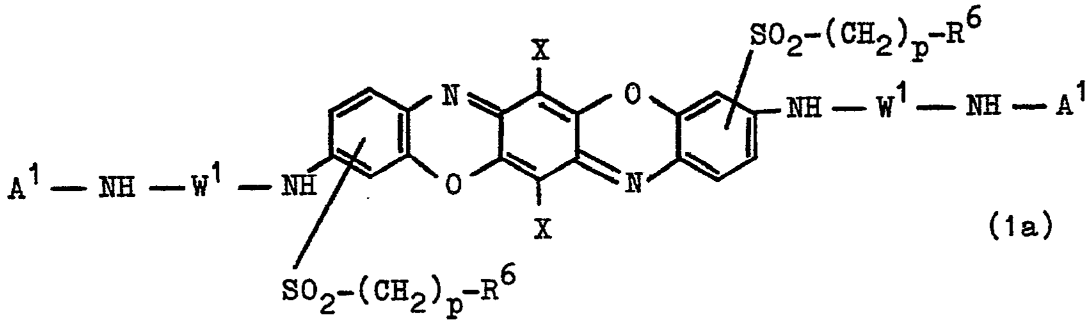

(1a)

in welcher
X jedes ein Bromatom oder ein Chloratom ist,
p für die Zahl 2 oder 3 steht,
$R^6$ eine Sulfato-, Carboxy- oder Sulfogruppe bedeutet,
$R^6$ im Falle von p = 2 jedoch keine Sulfatogruppe ist, oder die Gruppe $-(CH_2)p-R^6$ die Methylgruppe ist,
$W^1$ für eine meta- oder para-Phenylengruppe oder eine durch 1 oder 2 Sulfogruppen substituierte meta- oder para-Phenylengruppe bedeutet und
$A^1$ für einen Triazinrest der allgemeinen Formel (2) steht, in welcher Z ein Fluor- oder Chloratom bedeutet und Y die 2,5-Disulfophenylgruppe ist.

4. Triphendioxazin-Verbindung nach Anspruch 1 der allgemeinen Formel (1b)

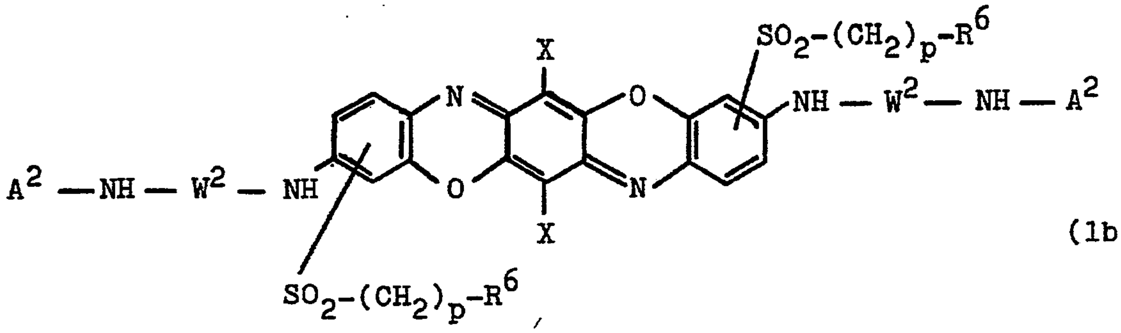

(1b)

in welcher
X jedes ein Bromatom oder ein Chloratom ist,
p für die Zahl 2 oder 3 steht, $R^6$ eine Sulfato-, Carboxy- oder Sulfogruppe bedeutet, $R^6$ im Falle von p = 2 jedoch keine Sulfatogruppe ist, oder die Gruppe $-(CH_2)p-R^6$ die Methylgruppe ist,
$W^2$ der p-Phenylenrest, der unsubstituiert oder durch 1 oder 2 Sulfogruppen substituiert ist, bedeutet und

$A^2$ einen Triazinrest der allgemeinen Formel (2) bedeutet, in welcher Z für das Fluoratom oder Chloratom steht und Y einen Rest der allgemeinen Formel (7)

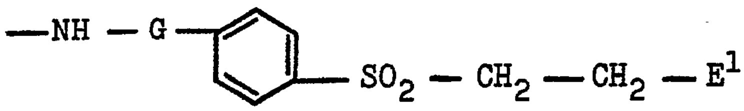

(7)

bedeutet, in welcher G für die Methylen- oder 1,2-Ethylen-Gruppe oder eine direkte Bindung ist und $E^1$ ein Chloratom, eine Phosphato-, Acetyloxy- oder Thiosulfatogruppe oder Sulfatogruppe ist.

5. Verbindung nach Anspruch 1 der Formel

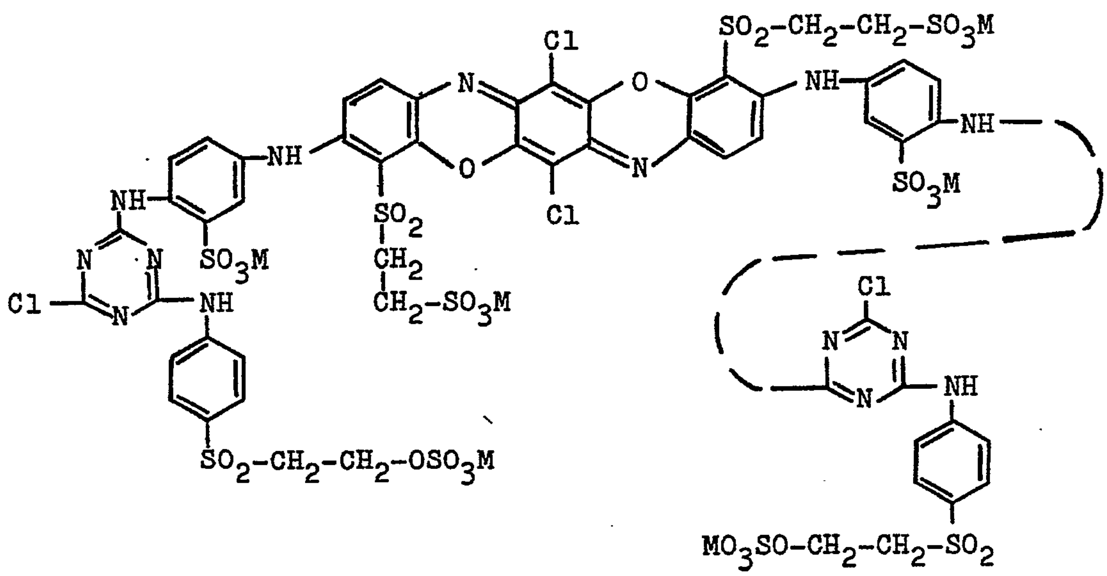

in welcher M ein Wasserstoffatom oder ein Alkalimetall ist.

6. Verbindung nach einem oder mehreren der Ansprüche 1 bis 4, dadurch gekennzeichnet, daß $X^1$ und $X^2$ bzw. beide X jedes ein Chloratom bedeuten.

7. Verbindung nach Anspruch 1 oder 2, dadurch gekennzeichnet, daß T die β-Sulfoethyl- oder die Methylgruppe ist.

8. Verfahren zur Herstellung einer in Anspruch 1 oder 2 definierten Verbindung der allgemeinen Formel (1), dadurch gekennzeichnet,

daß man 1 Molekül einer Dioxazinverbindung der allgemeinen Formel (8),

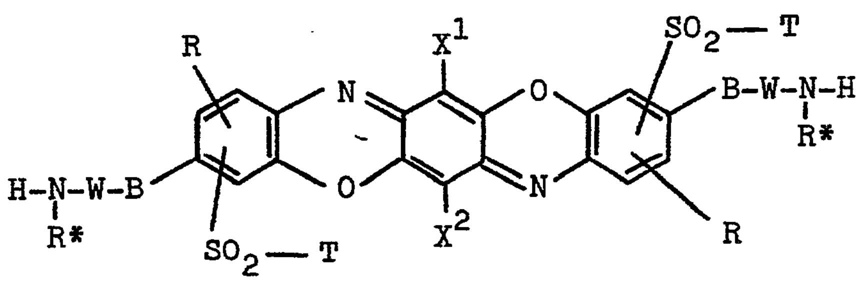

(8)

in welcher, R*, R, B, W, T, $X^1$ und $X^2$ die in Anspruch 1 bzw. Anspruch 2 genannten Bedeutungen haben, mit 2 Molekülen einer Dihalogen-triazin-Verbindung der allgemeinen Formel

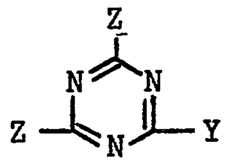

(9)

in welcher Z und Y die in Anspruch 1 bzw. 2 genannten Bedeutungen haben, umsetzt, oder daß man 1 Molekül einer Dioxazinverbindung der allgemeinen Formel (8) mit 2 Molekülen einer Verbindung, die den Acylrest einer nicht-heterocyclischen faserreaktiven Gruppe in die Aminogruppe –NR*H einzuführen vermag, umsetzt, oder daß man 1 Molekül einer Dioxazinverbindung der allgemeinen Formel (8) mit 2 Molekülen einer Verbindung der allgemeinen Formel (10)

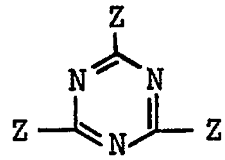

(10)

in welcher die Z die obengenannten Bedeutungen haben, miteinander umsetzt und die so erhaltene Bis-dihalogentriazinylamino-Verbindung der allgemeinen Formel (11)

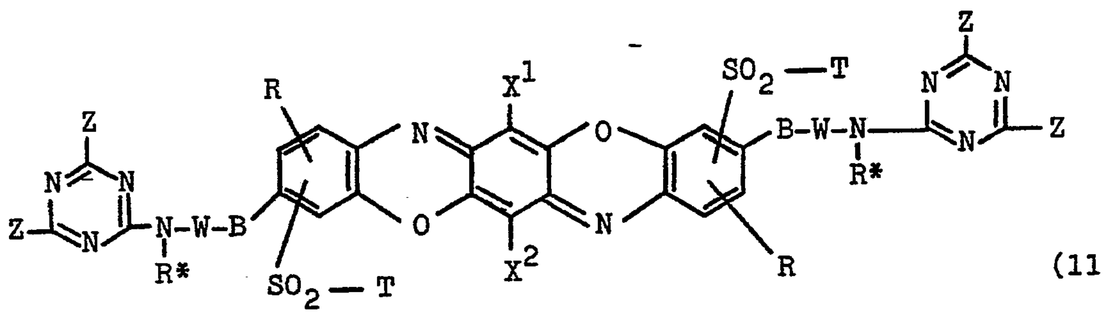

(11)

in welcher R*, R, B, W, T, Z, $X^1$ und $X^2$ die in Anspruch 1 bzw. 2 genannten Bedeutungen haben, mit der zweifach molaren Menge einer Aminoverbindung der allgemeinen Formel H–Y mit Y der in Anspruch 1 bzw. 2 genannten Bedeutung umsetzt.

9. Verbindung entsprechend der allgemeinen Formel (13)

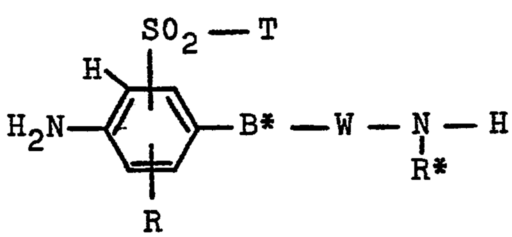

(13)

in welcher R*, R, W und T die in Anspruch 1 genannten Bedeutungen haben und B* für den Rest der Formel –NH–oder–N(R″)– steht, worin R″ die in Anspruch 1 genannte Bedeutung besitzt, und wobei substituierte Alkylgruppen in diesen Resten auch hydroxysubstituierte Alkylgruppen sein können, ausgenommen solche Verbindungen, in welchen gleichzeitig R gleich ein Wasserstoffatom, B* gleich die Aminogruppe –NH–, W der Ethylenrest, R* ein Wasserstoffatom und T die β-Carboxyethyl- oder die Benzyl oder die β-Hydroxypropyl-Gruppe ist oder gleichzeitig R ein Wasserstoffatom, B* die Aminogruppe –NH–, W der Ethylenrest, R* die β-Hydroxyethyl-Gruppe und T die β-Carboxyethyl-Gruppe ist.

10. Verbindung entsprechend der allgemeinen Formel (17)

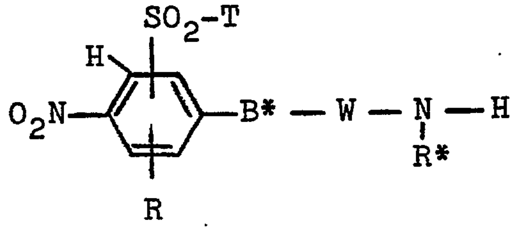

(17)

in welcher R, T, W und R* die in Anspruch 1 genannten Bedeutungen haben und B* für den Rest der Formel –NH–oder –N(R″)– steht, worin R″ die in Anspruch 1 genannte Bedeutung besitzt, und wobei substituierte Alkylgruppen in diesen Resten auch hydroxysubstituierte Alkylgruppen sein können, ausgenommen solche Verbindungen, in welchen gleichzeitig R gleich ein Wasserstoffatom, B* gleich die Aminogruppe –NH–, W der Ethylenrest, R* ein Wasserstoffatom und T die β-Carboxyethyl- oder die Benzyl- oder die β-Hydroxypropyl-Gruppe ist oder gleichzeitig R ein Wasserstoffatom, B* die Aminogruppe –NH–, W der Ethylenrest, R* die β-Hydroxyethyl-Gruppe und T die β-Carboxyethyl-Gruppe ist.

11. Verfahren zur Herstellung einer Verbindung der allgemeinen Formel (17) von Anspruch 10 oder einer Verbindung der allgemeinen Formel (13) von Anspruch 9, dadurch gekennzeichnet, daß man eine Verbindung der allgemeinen Formel (15)

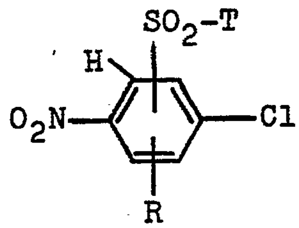

(15)

in welcher R und T die in Anspruch 9 bzw. Anspruch 10 genannten Bedeutungen haben, mit einer Aminoverbindung der allgemeinen Formel (16)

$$H{-}B^{*}{-}W{-}\underset{\displaystyle R^{*}}{\underset{|}{N}}{-}H \qquad (16)$$

in welcher B*, W und R* die in Anspruch 9 bzw. Anspruch 10 genannten Bedeutungen haben, unter Zusatz eines basischen, säurebindenden Mittels bei einer Temperatur zwischen 20 und 100°C umsetzt und gegebenenfalls die so erhaltene Nitroverbindung der allgemeinen Formel (17) zur Anilinverbindung der allgemeinen Formel (13) reduziert.

12. Verwendung einer Verbindung der allgemeinen Formel (13) von Anspruch 9 oder einer Verbindung der allgemeinen Formel (17) von Anspruch 10 zur Synthese von Triphendioxazin-Verbindungen.

13. Verwendung einer in Anspruch 1 genannten und definierten Verbindung der allgemeinen Formel (1) oder einer nach Anspruch 8 hergestellten Verbindungen der allgemeinen Formel (1) zum Färben (einschließlich Bedrucken) von hydroxy- und/oder carbonamidgruppenhaltigem Material, insbesondere Fasermaterial.

14. Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder in das Material einbringt und ihn mittels Wärme und/oder mittels eines säurebindenden Mittels fixiert, dadurch gekennzeichnet, daß man als Farbstoff eine Verbindung der in Anspruch 1 genannten und definierten allgemeinen Formel (1) einsetzt.

**Patentansprüche für die Vertragsstaaten: BE, IT**

1.Wasserlösliche Triphendioxazin-Verbindung entsprechend der allgemeinen Formel (1)

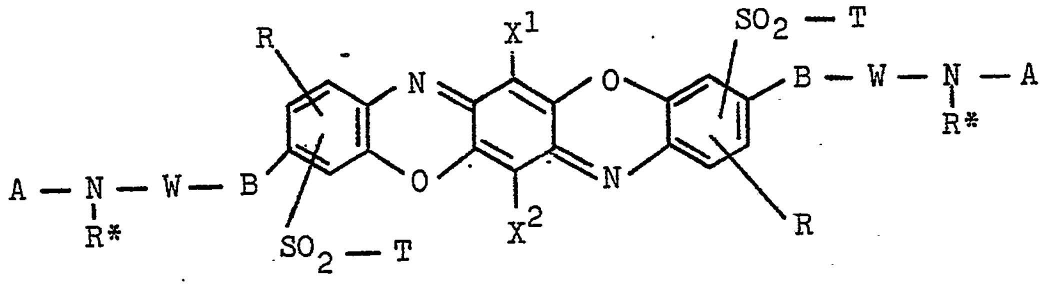

(1)

in welcher bedeuten:
T ist eine gegebenenfalls substituierte Alkylgruppe von 1 bis 6 C-Atomen, ausgenommen eine in β-Stellung durch einen alkalisch eliminierbaren Substituenten substituierte Ethylgruppe, wobei die Alkylgruppe noch durch Heterogruppen unterbrochen sein kann, die aus Gruppen der Formeln –O–, –S–, –NH– und –N(R')–, worin
R' eine Alkylgruppe von 1 bis 6 C-Atomen ist, die substituiert sein kann, ausgewählt sind, oder
T ist eine gegebenenfalls substituierte Arylgruppe;
B ist ein Sauerstoff- oder Schwefelatom oder eine Aminogruppe der Formel –NH– oder –N(R")–, in welcher
R" eine Alkylgruppe von 1 bis 6 C-Atomen ist, die substituiert sein kann, oder
B bildet zusammen mit W eine direkte Bindung;
W bildet zusammen mit B eine direkte Bindung oder
W ist ein bivalenter, gegebenenfalls substituierter aliphatischer, araliphatischer, heterocyclischer oder aromatisch-carbocyclischer Rest, wobei die aliphatischen Reste in W durch Heterogruppen, bevorzugt 1 oder 2 Heterogruppen, unterbrochen sein können und diese Heterogruppen aus Gruppen der Formeln –O–, –S–, $-SO_2-$, –NH–, $-N(R^o)-$ und einem bivalenten heterocyclischen Rest ausgewählt sind, worin
$R^o$ eine Alkylgruppe von 1 bis 6 C-Atomen, bevorzugt von 1 bis 4 C-Atomen, ist, die substituiert sein kann,
und/oder wobei die aliphatischen Reste und Arylreste durch eine solche Heterogruppe miteinander verbunden sein können;
R ist ein Wasserstoffatom oder ein Alkyl von 1 bis 4 C-Atomen, das substituiert sein kann, oder ein Alkoxy von 1 bis 4 C-Atomen, das substituiert sein kann, oder ein Halogen;
R* ist ein Wasserstoffatom oder eine Alkylgruppe von 1 bis 4 C-Atomen, die substituiert sein kann, oder eine Cycloalkylgruppe von 5 bis 8 C-Atomen, oder R* und der bivalente Rest W, sofern er eine Aminogruppe enthält, oder ein Teil des Restes W bilden zusammen mit den beiden Stickstoffatomen den Rest eines fünf- oder sechs-gliedrigen Heterocyclus;
A ist eine nicht-heterocyclische faserreaktive Gruppe oder
A ist ein Rest der allgemeinen Formel (2)

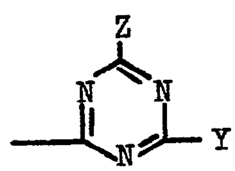

(2)

in welcher
Z ein Fluor-, Brom- oder Chloratom ist und
Y eine der Bedeutungen von Z besitzt oder eine Aminogruppe der allgemeinen Formel (3a)

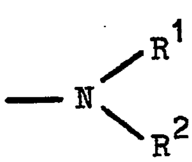

(3a)

ist, in welcher
$R^1$ ein Wasserstoffatom oder eine Alkylgruppe von 1 bis 6 C-Atomen ist, die substituiert sein kann, wobei einer der Substituenten auch eine faserreaktive Gruppe sein kann, oder eine Cycloalkylgruppe mit 5 bis 8 C-Atomen ist und
$R^2$ ein Wasserstoffatom oder eine Alkylgruppe von 1 bis 6 C-Atomen ist, die substituiert sein kann, wobei einer der Substituenten auch eine faserreaktive Gruppe sein kann, oder eine Cycloalkylgruppe mit 5 bis 8 C-Atomen ist oder eine Arylgruppe ist, die substituiert sein kann, wobei einer oder zwei dieser Substituenten im Arylrest auch eine faserreaktive Gruppe sein kann, oder ein heterocyclischer Rest ist, oder
$R^1$ und $R^2$ zusammen mit dem N-Atom und gegebenenfalls einem weiteren Heteroatom den Rest eines Heterocyclus bilden,
oder
Y ist ein Rest der Formel (3b)

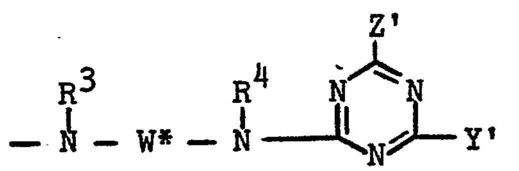

(3b)

in welcher $R^3$ und $R^4$ jedes ein Wasserstoffatom oder eine Alkylgruppe von 1 bis 4 C-Atomen, wie die Methyl oder Ethylgruppe, bedeutet, Z' ein Fluor- oder Bromatom oder bevorzugt ein Chloratom ist, Y' eine der Bedeutungen von Y, ausgenommen die Bedeutung einer Gruppe der Formel (3b), besitzt und W* eine der Bedeutungen von W hat;
$X^1$ ist ein Wasserstoffatom oder ein Halogenatom, eine Cycloalkylgruppe von 5 bis 8 C-Atomen, eine Aralkyloxygruppe, eine Alkoxygruppe von 1 bis 4 C-Atomen, eine Aryloxygruppe, eine Alkylgruppe von 1 bis 4 C-Atomen, eine Arylgruppe, eine Aralkylgruppe, eine Cyangruppe, eine Carboxygruppe, eine Carbalkoxygruppe von 2 bis 5 C-Atomen, eine Arylaminogruppe, eine Carbamoylgruppe, eine N-Alkyl-carbamoyl-Gruppe oder N,N-Dialkyl-carbamoyl-Gruppe mit Alkylresten von jeweisl 1 bis 4 C-Atomen, eine N-Aryl-carbamoyl-Gruppe, eine Alkanoylaminogruppe von 2 bis 5 C-Atomen oder eine Aroylaminogruppe, wobei die Arylreste in diesen Gruppen noch durch 1 oder 2 Substituenten aus der Gruppe Halogen, Nitro, Alkyl von 1 bis 4 C-Atomen, Alkoxy von 1 bis 4 C-Atomen, Carboxy und Sulfo substituiert sein können;
$X^2$ ist mit $X^1$ gleich oder von $X^1$ verschieden und hat eine der für $X^1$ angegebenen Bedeutungen;
die Gruppe $-SO_2-T$ steht bevorzugt in ortho-Stellung zur Gruppe -B-W-N(R*)-A gebunden;
von den Sulfo- und Sulfatogruppen, die im Molekül (1) enthalten sein können, enthält das Molekül (1) zwingend mindestens eine, bevorzugt mindestens zwei davon.

2. Triphendioxazin-Verbindung nach Anspruch 1 der allgemeinen Formel (1a)

(1a)

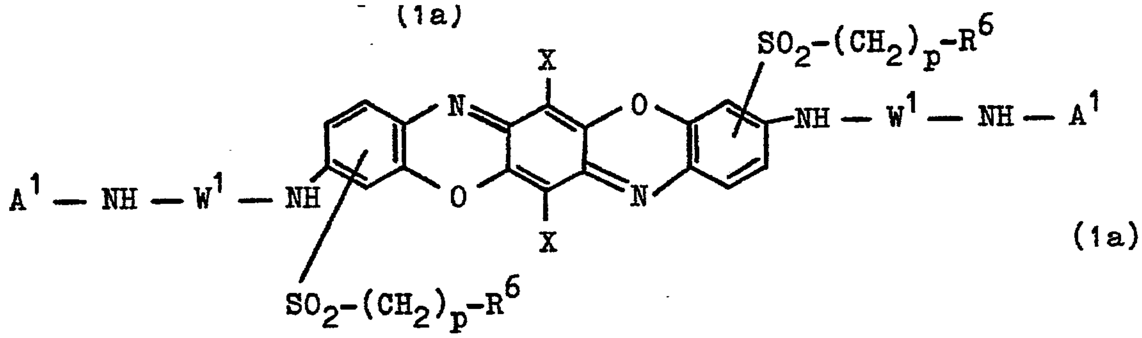

(1a)

in welcher
X jedes ein Bromatom oder ein Chloratom ist,
p für die Zahl 2 oder 3 steht,
$R^6$ eine Sulfato-, Carboxy- oder Sulfogruppe bedeutet,
$R^6$ im Falle von p = 2 jedoch keine Sulfatogruppe ist, oder die Gruppe $-(CH_2)_p-R^6$ die Methylgruppe ist,
$W^1$ für einen Alkylenrest von 2 bis 6 C-Atomen steht, der durch eine Sulfo- oder Sulfatogruppe oder eine Sulfophenylgruppe substituiert sein kann, oder ein Cyclohexylenrest oder eine meta- oder para-Phenylengruppe oder eine durch 1 oder 2 Sulfogruppen substituierte meta- oder para-Phenylengruppe bedeutet und
$A^1$ für einen Triazinrest der allgemeinen Formel (2) steht, in welcher Z ein Fluor- oder Chloratom bedeutet und Y die 2,5-Disulfophenylgruppe ist.

3. Triphendioxazin-Verbindung nach Anspruch 1 der allgemeinen Formel (1b)

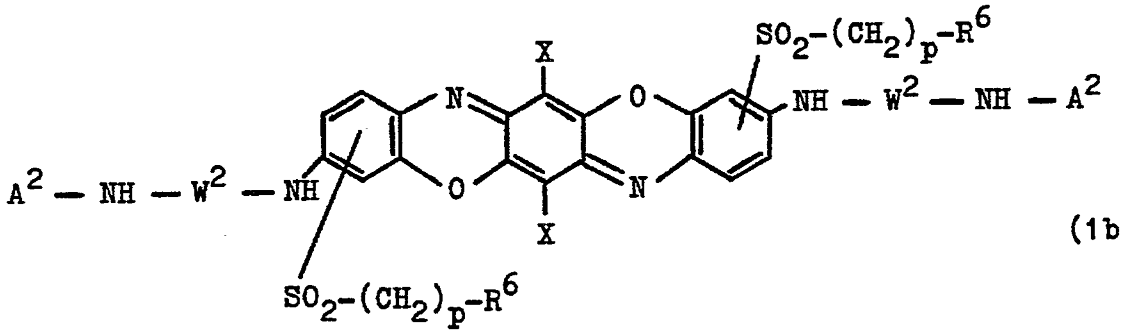

(1b)

in welcher
X jedes ein Bromatom oder ein Chloratom ist,
p für die Zahl 2 oder 3 steht,
$R^6$ eine Sulfato-, Carboxy- oder Sulfogruppe bedeutet,
$R^6$ im Falle von p = 2 jedoch keine Sulfatogruppe ist, oder die Gruppe $-(CH_2)_p-R^6$ die Methylgruppe ist,
$W^2$ der p-Phenylenrest, der unsubstituiert oder durch 1 oder 2 Sulfogruppen substituiert ist, bedeutet und
$A^2$ einen Triazinrest der allgemeinen Formel (2) bedeutet, in welcher Z für das Fluoratom oder Chloratom steht und Y einen Rest der allgemeinen Formel (7)

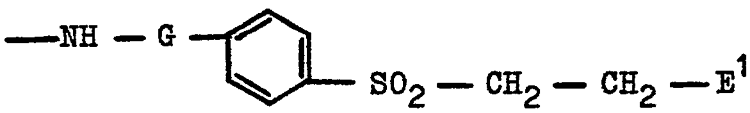

(7)

bedeutet, in welcher G für die Methylen- oder 1,2-Ethylen-Gruppe oder eine direkte Bindung ist und $E^1$ ein Chloratom, eine Phosphato-, Acetyloxy- oder Thiosulfatogruppe oder Sulfatogruppe ist.

4. Verbindung nach Anspruch 1 der Formel

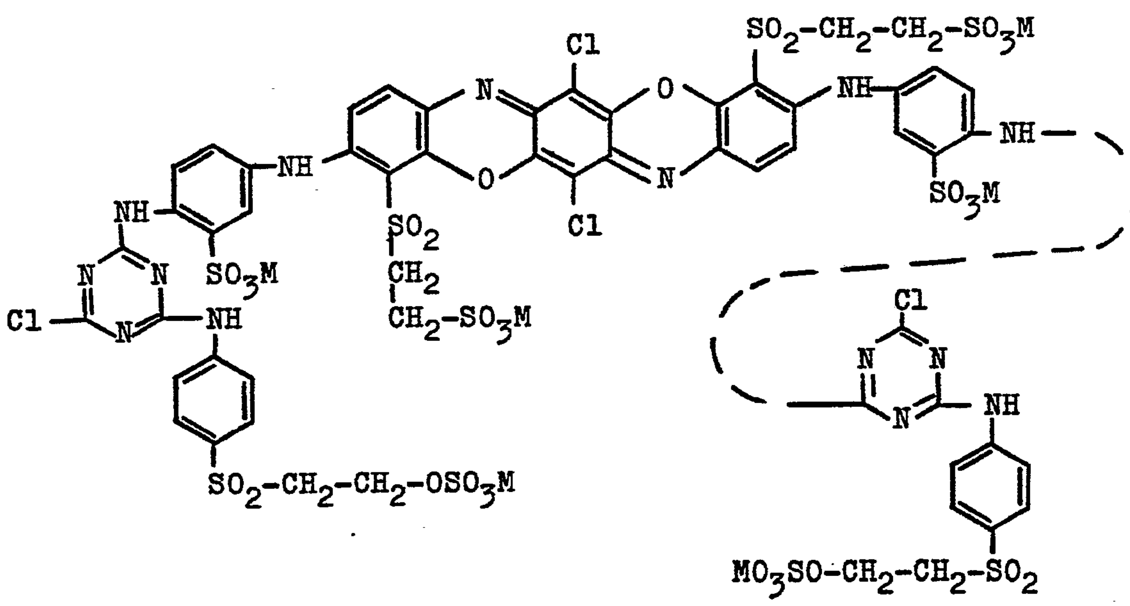

in welcher M ein Wasserstoffatom oder ein Alkalimetall ist.

5. Verbindung nach einem oder mehreren der Ansprüche 1 bis 4, dadurch gekennzeichnet, daß $X^1$ und $X^2$ bzw. beide X jedes ein Chloratom bedeuten.

6. Verfahren zur Herstellung der in Anspruch 1 genannten und definierten Verbindungen der allgemeinen Formel (1), dadurch gekennzeichnet,
daß man 1 Molekül einer Dioxazinverbindung der allgemeinen Formel (8)

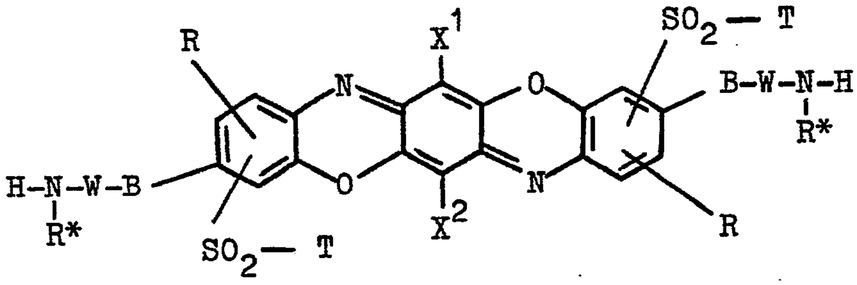

(8)

in welcher R*, R, B, W, T, $X^1$ und $X^2$ die in Anspruch 1 genannten Bedeutungen haben, mit 2 Molekülen einer Dihalogen-triazin-Verbindung der allgemeinen Formel

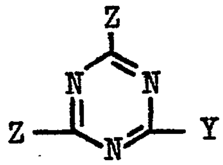

(9)

in welcher Z und Y die in Anspruch 1 genannten Bedeutungen haben, umsetzt, oder
daß man 1 Molekül einer Dioxazinverbindung der allgemeinen Formel (8) mit 2 Molekülen einer Verbindung, die den Acylrest einer nicht-heterocyclischen faserreaktiven Gruppe in die Aminogruppe -NR*H einzuführen vermag, umsetzt, oder
daß man 1 Molekül einer Dioxazinverbindung der allgemeinen Formel (8) mit 2 Molekülen einer Verbindung der allgemeinen Formel (10)

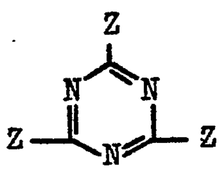

(10)

in welcher die Z die obengenannten Bedeutungen haben, miteinander umsetzt und die so erhaltene Bis-Dihalogentriazinylamino-Verbindung der allgemeinen Formel (11)

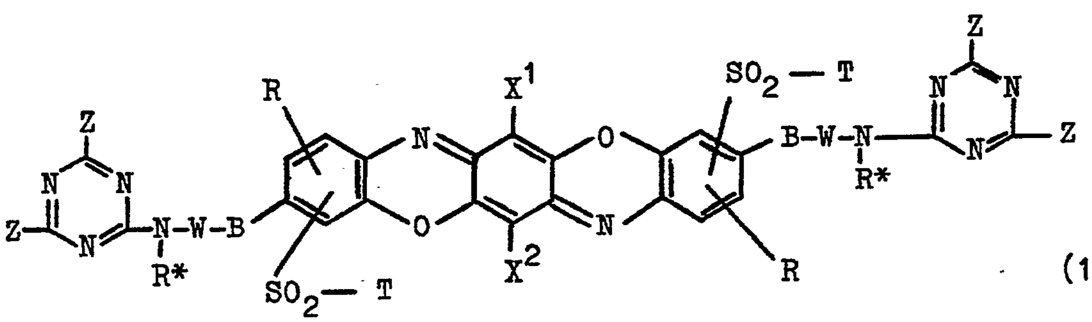

(11)

in welcher R*, R, B, W, T, Z, $X^1$ und $X^2$ die in Anspruch 1 genannten Bedeutungen haben, mit der zweifach molaren Menge einer Aminoverbindung der allgemeinen Formel H-Y mit Y der in Anspruch 1 genannten Bedeutung umsetzt.

7. Verbindung nach Anspruch 1, dadurch gekennzeichnet, daß T die β-Sulfoethyl- oder die Methylgruppe ist.

8. Verbindung entsprechend der allgemeinen Formel (13)

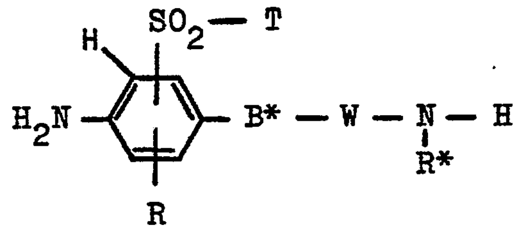

(13)

in welcher R*, R, W und T die in Anspruch 1 genannten Bedeutungen haben und B* für den Rest der Formel -NH- oder -N(R'')- steht, worin R'' die in Anspruch 1, genannte Bedeutung besitzt, und wobei substituierte Alkygruppen in diesen Resten auch hydroxysubstituierte Alkylgruppen sein können.

9. Verbindung entsprechend der allgemeinen Formel (17)

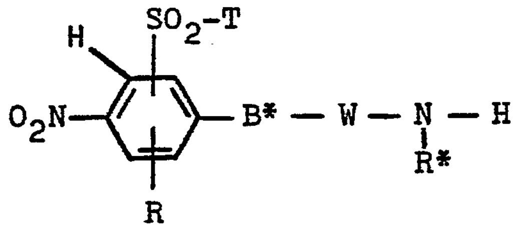

(17)

in welcher R, T, W und R* die in Anspruch 1 genannten Bedeutungen haben und B* für den Rest der Formel -NH- oder -N(R'')- steht, worin R'' die in Anspruch 1 genannte Bedeutung besitzt, und wobei substituierte Alkylgruppen in diesen Resten auch hydroxysubstituierte Alkylgruppen sein können.

10. Verfahren zur Herstellung einer Verbindung der allgemeinen Formel (17) nach Anspruch 9 oder einer Verbindung der allgemeinen Formel (13) nach Anspruch 8, dadurch gekennzeichnet, daß man eine Verbindung der allgemeinen Formel (15)

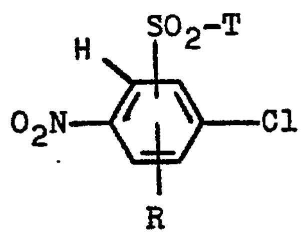

(15)

in welcher R und T die in Anspruch 8 bzw. Anspruch 9 genannten Bedeutungen haben, mit einer Aminoverbindung der allgemeinen Formel (16)

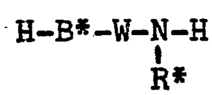

(16)

in welcher B*, W, und R* die in Anspruch 8 bzw. Anspruch 9 genannten Bedeutungen haben, unter Zusatz eines basischen, säurebindenden Mittels bei einer Temperatur zwischen 20 und 100°C umsetzt und gegebenenfalls die so erhaltene Nitroverbindung der allgemeinen Formel (17) zur Anilinverbindung der allgemeinen Formel (13) reduziert.

11. Verwendung einer Verbindung der allgemeinen Formel (13) von Anspruch 8 oder einer Verbindung der allgemeinen Formel (17) von Anspruch 9 zur Synthese von Triphendioxazin-Verbindungen.

12. Verwendung einer in Anspruch1 genannten und definierten Verbindung der allgemeinen Formel (1) oder einer nach Anspruch 6 hergestellten Verbindungen der allgemeinen Formel (1) zum Färben (einschließlich Bedrucken) von hydroxy- und/oder carbonamidgruppenhaltigem Material, insbesondere Fasermaterial.

13. Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder in das Material einbringt und ihn mittels Wärme und/oder mittels eines säurebindenden Mittels fixiert, dadurch gekennzeichnet, daß man als Farbstoff eine Verbindung der in Anspruch 1 genannten und definierten allgemeinen Formel (1) einsetzt.

**Claims for the Contracting States: CH, LI, DE, FR, GB**

1. A water-soluble triphendioxazine compound conforming to the formula (1)

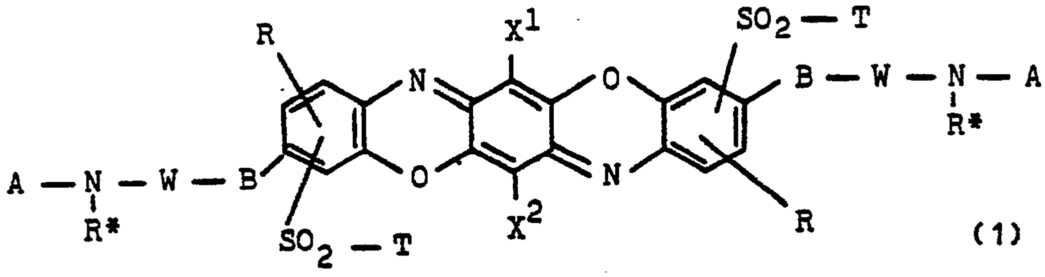

(1)

in which the meanings are:
T is a substituted or unsubstituted alkyl group of 1 to 6 carbon atoms, except an ethyl group which is substituted in the β-position by an alkalinically eliminatable substituent, which alkyl group can be additionally interrupted by hetero groups selected from groups of the formulae –O–, –S–, –NH– and –N(R′)–, wherein
R′ is an alkyl group of 1 to 6 carbon atoms, which can be substituted,
or
T is a substituted or unsubstituted aryl group;
B is an oxygen or sulfur atom or an amino group of the formula –NH– or –N(R″)–,
in which
R″ is an alkyl group of 1 to 6 carbon atoms, which can be substituted, or
B forms together with W a direct bond,
W forms together with B a direct bond, or
W is a bivalent, substituted or unsubstituted aliphatic, araliphatic, heterocyclic or aromatic carbocyclic radical, it being possible for the aliphatic radicals in W to be interrupted by hetero groups, preferably 1 or 2 hetero groups, these hetero groups being selected from groups of the formulae –O–, –S–, $-SO_2-$, –NH– and $-N(R^o)-$ and a bivalent heterocyclic radical, in which
$R^o$ is an alkyl group of 1 to 6 carbon atoms, preferably of 1 to 4 carbon atoms, which can be substituted, and/or it being possible for the aliphatic radicals and aryl radicals to be linked to one another by such a hetero group,
R is a hydrogen atom or an alkyl of 1 to 4 carbon atoms, which can be substituted, or an alkoxy of 1 to 4 carbon atoms, which can be substituted, or a halogen,
R* is a hydrogen atom or an alkyl group of 1 to 4 carbon atoms, which can be substituted, or a cycloalkyl group of 5 to 8 carbon atoms, or
R* and the bivalent radical W, if it contains an amino group, or a portion of the radical W form together with the two nitrogen atoms the radical of a 5- or 6-membered heterocycle;
A is a non-heterocyclic fiber-reactive group or
A is a radical of the formula (2)

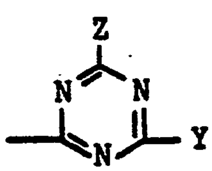

(2)

in which
Z is a fluorine, bromine or chlorine atom and
Y has one of the meanings of Z or is an amino group of the formula (3a)

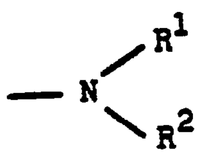

(3a)

in wich
$R^1$ is a hydrogen atom or an alkyl group of 1 to 6 carbon atoms, which can be substituted, it being possible

for one of the substituents also to be a fiber-reactive group conforming to a formula (4a) (4b), (5a) or (5b)

$$-SO_2-CH=CH_2 \quad (4a)$$

$$-SO_2-CH_2-CH_2-E \quad (4b)$$

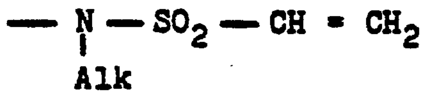

(5a)

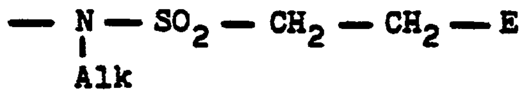

(5b)

in which
E stands for an alkylinically eliminatable substituent and
Alk denotes a hydrogen atom or preferably an alkyl group of 1 to 4 carbon atoms, or $R^1$ is a cycloalkyl group of 5 to 8 carbon atoms
$R^2$ is a hydrogen atom or an alkyl group of 1 to 6 carbon atoms which can be substituted, it being possible for one of the substituents also to be a fiber-reactive group conforming to the formula (4a), (4b), (5a) or (5b), or is a cycloalkyl group having 5 to 8 carbon atoms or is an aryl group which can be substituted, it being possible for one or two of these substitutents in the aryl radical also to be a fiber-reactive group conforming to the formula (4a), (4b), (5a), or (5b), or is a heterocyclic radical, but at least one of the radicals (4a), (4b), (5a), or (5b) being present in $R^1$ or $R^2$, or
$R^1$ and $R^2$ together with the N-atom and with or without a further hetero atom form the radical of a heterocycle, or
Y is a radical of the formula (3b)

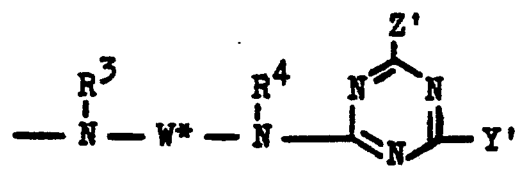

(3b)

in which $R^3$ and $R^4$ each denote a hydrogen atom or an alkyl group of 1 to 4 carbon atoms, Z′ is a fluorine or bromine atom or preferably a chlorine atom, Y′ has one of the meanings of Y, except the meaning of a group of the formula (3b), and W* has one of the meanings of W;
$X^1$ is a hydrogen atom or a halogen atom, a cycloalkyl group of 5 to 8 carbon atoms, an aralkyloxy group, an alkoxy group of 1 to 4 carbon atoms, an aryloxy group, an alkyl group of 1 to 4 carbon atoms, an aryl group, an aralkyl group, a cyano group, a carboxyl group, a carbalkoxy group of 2 to 5 carbon atoms, an arylamino group, a carbamoyl group, an N-alkylcarbamoyl group or N,N-dialkylcarbamoyl group having alkyl radicals of 1 to 4 carbon atoms each, an N-arylcarbamoyl group, an alkanoylamino group of 2 to 5 carbon atoms or an aroylamino group, it being possible for the aryl radicals in these groups to be additionally substituted by 1 to 2 substituents from the group halogen, nitro, alkyl of 1 to 4 carbon atoms, alkoxy of 1 to 4 carbon atoms, carboxyl and sulfo;
$X^2$ is identical to or different from $X^1$ and has one of the meanings indicated for $X^1$;
the group $-SO_2-T$ is preferably bonded in the ortho-position relative to the group $-B-W-N(R^*)-A$;
of the sulfo and sulfato groups which can be present in the molecule (1), the molecule (1) mandatorily contains at least one thereof, preferably at least two thereof,
but not the compound of the formula (1) in which at one and the same time $X^1$ and $X^2$ are both chlorine, the two R radicals are hydrogen, the two T radicals are γ-sulfatopropyl, the two B radicals are –NH–, the two W radicals are ethylene, the two R* radicals are hydrogen and the two A radicals are a radical of the formula (2) in which Z is fluorine and Y is 4-(β-sulfatoethylsulfonyl)phenylamino, and the compound of formula (1) in which at the one and the same time $X^1$ and $X^2$ are both chlorine, the two R radicals are hydrogen, the two T radicals are β-carboxyethyl, the two B radicals are –NH–, the two W radicals are 2-sulfo-1,4-phenylene, the two R* radicals are hydrogen and the two A radicals are difluoro-s-triazinyl.

2. A water-soluble triphendioxazine compound conforming to the general formula (1) indicated in claim 1, in which:

$X^1$, $X^2$, T, B, R and R* are each as defined in claim 1,
W is a bivalent, substituted or unsubstituted araliphatic, heterccyclic or aromatic carbocyclic radical, it being possible for the aliphatic radicals in W to be interrupted by hetero groups selected from groups of the formulae –O–, –S–, $-SO_2-$, –NH–, $-N(R^o)-$ and a bivalent heterocyclic radical, in which
$R^o$ is an alkyl group of 1 to 6 carbon atoms, preferably from 1 to 4 carbon atoms, which can be substituted, and/or it being possible for the aliphatic radicals and aryl radicals to be linked to one another by such a hetero group, or
B and W together form a direct bond,
A is a radical of the general formula (2)

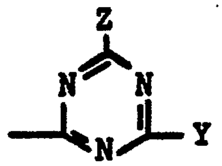

(2)

in which
Z is a fluorine, bromine or chlorine atom and
Y is an amino group of the general formula (3a)

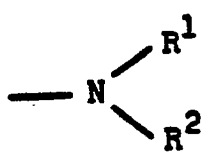

(3a)

in which
$R^1$ is a hydrogen atom or an alkyl group of 1 to 4 carbon atoms which can be substituted by 1 or 2 substituents, preferably one substituent, selected from the group consisting of the following substituents: alkoxy of 1 to 4 carbon atoms, chlorine, cyano, carboxyl, sulfo, sulfato, phosphato, hydroxyl, phenyl, which can be substituted by 1, 2 or 3 substituents selected from the set consisting of 3 alkyl groups of 1 to 4 carbon atoms, 2 alkoxy groups of 1 to 4 carbon atoms, 1 bromine atom, 2 chlorine atoms, 2 sulfo groups and 1 carboxyl group, and naphthyl which is substituted by 1, 2 or 3 sulfo groups or can be substituted by 1, 2 or 3 substituents selected from the set consisting of 2 sulfo groups, 1 carboxyl group, 1 chlorine atom, 1 alkyl group of 1 to 4 carbon atoms and 1 alkoxy group of 1 to 4 carbon atoms, or in which $R^1$ is a cycloalkyl group of 5 to 8 carbon atoms, and
$R^2$ is a hydrogen atom or an alkyl group of 1 to 4 carbon atoms which is substituted by 1 or 2 substituents, preferably 1 substituent, selected from the group consisting of the following substituents: alkoxy of 1 to 4 carbon atoms, sulfo, sulfato, phosphato, carboxyl, chlorine, cyano, hydroxyl, cyclohexyl, phenyl which can be substituted by 1, 2 or 3, preferably 1 or 2 substituents selected from the set consisting of 3 alkyl groups of 1 to 4 carbon atoms, 2 alkoxy groups of 1 to 4 carbon atoms, 1 bromine atom, 2 chlorine atoms, 2 sulfo groups and 1 carboxyl group, and napthyl which can be substituted by 1, 2 or 3 sulfo groups, or in which $R^2$ is a cycloalkyl group of 5 to 8 carbon atoms or a sulfo-monosubstituted, -disubstituted or -trisubstituted naphthyl radical or a phenyl radical which can be substituted by 1, 2 or 3 substituents, preferably 1 or 2 substituents, selected from the set consisting of 3 alkyl groups of 1 to 4 carbon atoms, 2 alkoxy groups of 1 to 4 carbon atoms, 1 bromine atom, 2 chlorine atoms, 2 sulfo groups and 1 carboxyl group, or is a heterocyclic radical or
Y is a radical of formula (3b)

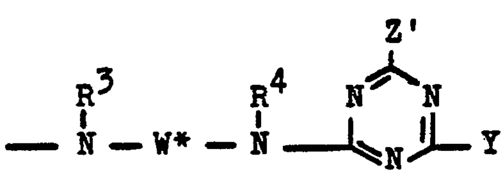

(3b)

in which $R^3$ and $R^4$ are each a hydrogen atom or an alkyl group of 1 to 4 carbon atoms, Z′ is a fluorine or bromine atom or preferably a chlorine atom, Y′ has one of the meanings of Y, except the meaning of a group of the formula (3b), and W* has one of the meanings of W mentioned in claim 1,
but <u>not</u> a compound of formula (1) in which at one and the same time $X^1$ and $X^2$ are both chlorine, the two R radicals are hydrogen, the two T radicals are β-carboxyethyl, the two B radicals are –NH–, the two W radicals are 2-sulfo-1,4-phenylene, the two R* radicals are hydrogen and the two A radicals are a radical of the formula (2) in which Z is chlorine and Y is 3-sulfophenyl.

3. A triphendioxazine compound as claimed in claim 2 of the formula (1a)

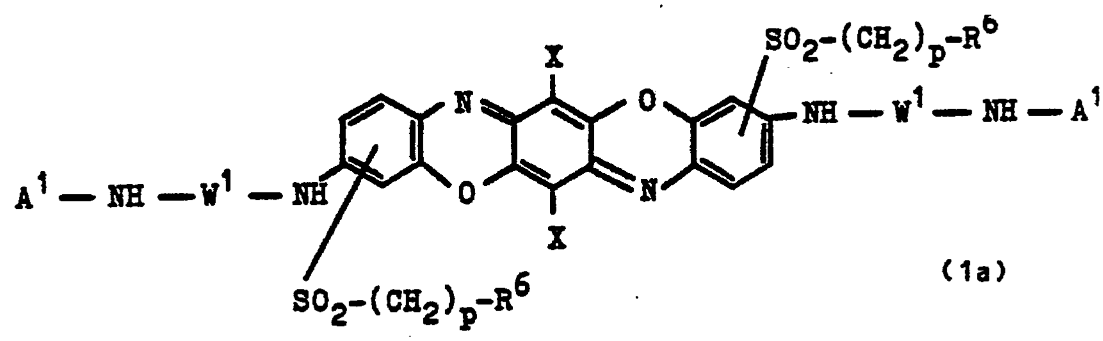

(1a)

in which
X is in each case a bromine atom or a chlorine atom,
p stands for the number 2 or 3,
$R^6$ denotes a sulfato, carboxyl or sulfo group, but in the case of p = 2 $R^6$ is not a sulfato group,
or the group $-(CH_2)_p-R^6$ is the methyl group,
$W^1$ stands for a meta- or para-phenylene group or a meta- or para-phenylene group which is substituted by 1 or 2 sulfo groups and
$A^1$ stands for a triazine radical of the formula (2) in which Z denotes a fluorine or chlorine atom and Y is the 2,5-disulfophenyl group.

4. A triphendioxazine compound as claimed in claim 1 of the formula (1b)

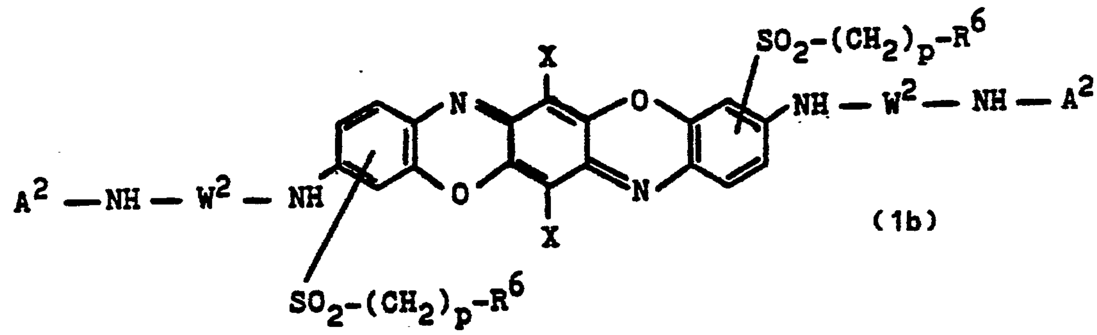

(1b)

in which
X is in each case a bromine atom or a chlorine atom,
p stands for the number 2 or 3,
$R^6$ denotes a sulfato, carboxyl or sulfo group, but in the case of p = 2 $R^6$ is not a sulfato group,
or the group $-(CH_2)p-R^6$ is the methyl group,
$W^2$ denotes the p-phenylene radical which is unsubstituted or substituted by 1 or 2 sulfo groups and
$A^2$ denotes a triazine radical of the formula (2) in which Z stands for the fluorine atom or chlorine atom and Y denotes a radical of the formula (7)

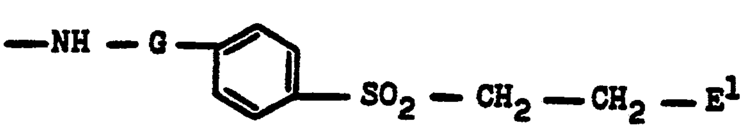

(7)

in which G stands for the methylene or 1,2-ethylene group or a direct bond and $E^1$ is a chlorine atom, a phosphato, acetyloxy or thiosulfato group or a sulfato group.

5. A compound as claimed in claim 1 of the formula

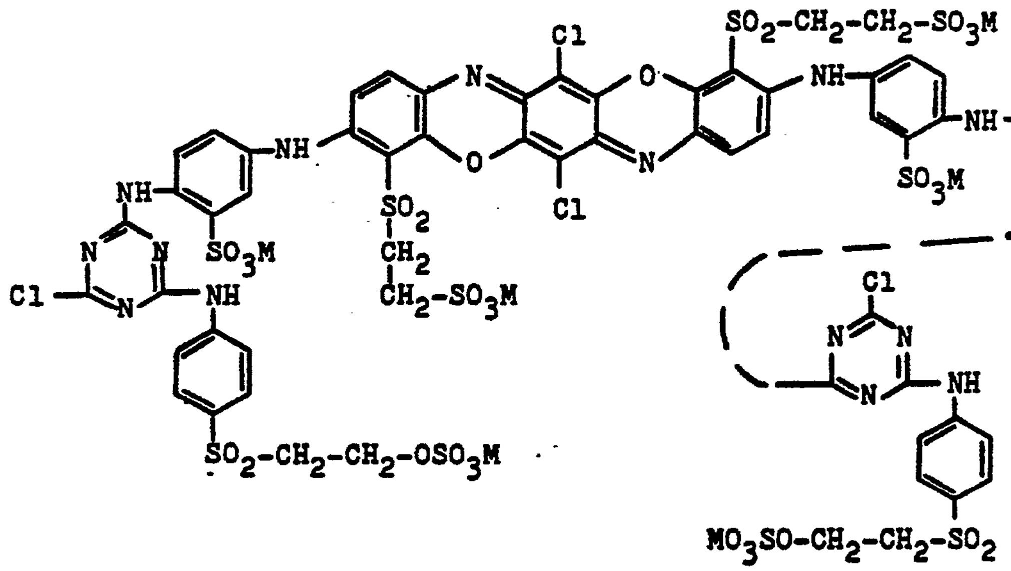

in which M is a hydrogen atom or an alkali metal.

6. A compound as claimed in one or more of claims 1 to 4, wherein $X^1$ and $X^2$ or both the X radicals each denote a chlorine atom.

7. A compound as claimed in claim 1 or 2, wherein T is the β-sulfoethyl or methyl group.

8. A process for preparing a compound of the formula (1) defined in claim 1 or 2, which comprises reacting 1 molecule of a dioxazine compound of the formula (8)

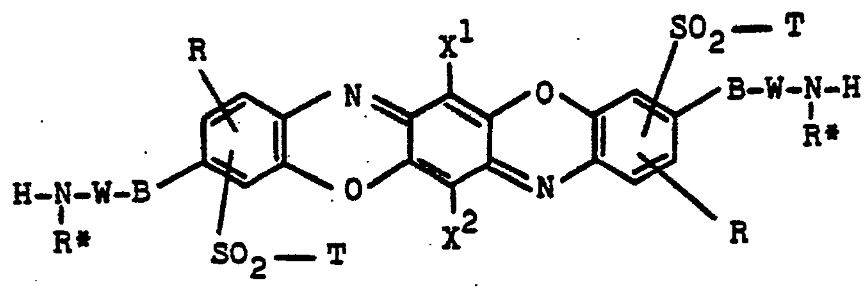

(8)

in which R*, R, B, W, T, $X^1$ and $X^2$ have the meanings mentioned in claim 1 and claim 2, with 2 molecules of a dihalogeno-triazine compound of the formula

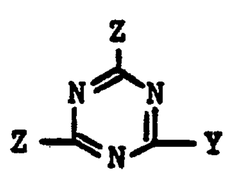

(9)

in which Z and Y have the meanings mentioned in claims 1 and 2, or

reacting 1 molecule of a dioxazine compound of the formula (8) with 2 molecules of a compound which is capable of introducing the acyl radical of a non-heterocyclic fiber-reactive group into the amino group –NR*H, or

reacting 1 molecule of a dioxazine compound of the formula (8) with 2 molecules of a compound of the formula (10)

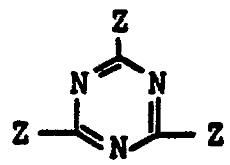

(10)

in which the Z have the above-mentioned meanings, and reacting the resulting bis-dihalogenotriazinylamino compound of the formula (11)

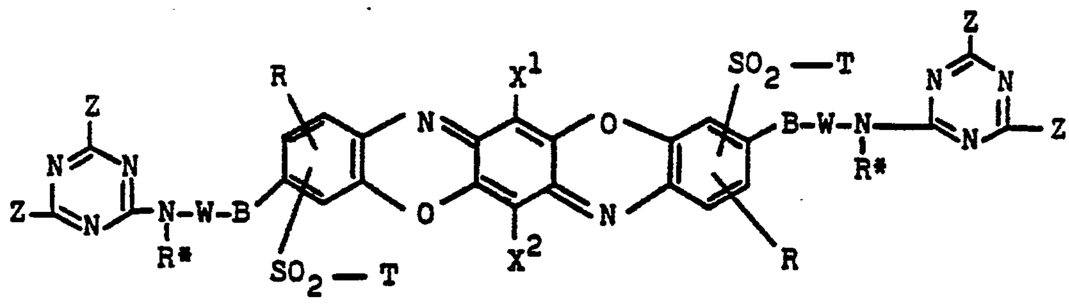

(11)

in which R*, R, B, W, T, Z, $X^1$ and $X^2$ have the meanings mentioned in claims 1 and 2, with twice the molar amount of an amino compound of the formula H–Y where Y has the meaning mentioned in claims 1 and 2.

9. A compound conforming to the formula (13)

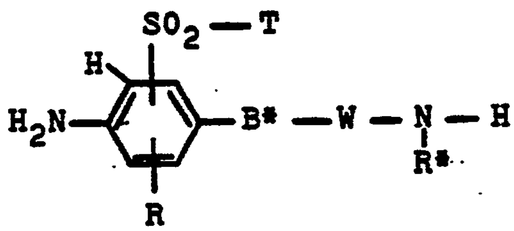

(13)

in which R*, R, W and T have the meanings mentioned in claim 1 and B* stands for the radical of the formula –NH– or –N(R″)–, where R″ has the meaning mentioned in claim 1, and where substituted alkyl groups in these radicals can also be hydroxyl-substituted alkyl groups, but not a compound in which at one and the same time R is a hydrogen atom, B* is the amino group –NH–, W is the ethylene radical, R* is a hydrogen atom and T is the β-carboxyethyl or the benzyl or the β-hydroxypropyl group or in which at one and the same time R is a hydrogen atom, B* is the amino group –NH–, W is the ethylene radical, R* is the β-hydroxyethyl group and T is the β-carboxyethyl group.

10. A compound conforming to the formula (17)

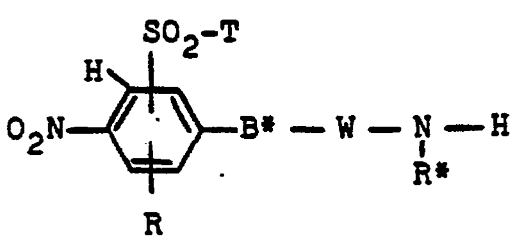

(17)

in which R, T, W and R* have the meanings mentioned in claim 1 and B* stands for the radical of the formula –NH– or –N(R″)–, where R″ has the meaning mentioned in claim 1, and where substituted alkyl groups in these radicals can also be hydroxyl-substituted alkyl groups, but not a compound in which at one and the same time R is a hydrogen atom, B* is the amino group –NH–, W is the ethylene radical, R* is a hydrogen atom and T is the β-carboxyethyl or the benzyl or the β-hydroxypropyl group or in which at one and the same time R is a hydrogen atom, B* is the amino group –NH–, W is the ethylene radical, R* is the β-hydroxyethyl group and T is the β-carboxyethyl group.

11. A process for preparing a compound of the formula (17) as claimed in claim 10 or a compound of the formula (13) as claimed in claim 9, which comprises reacting a compound of the formula (15)

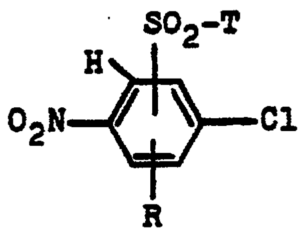

(15)

in which R and T have the meanings mentioned in claim 9 and claim 10, with an amino compound of the formula (16)

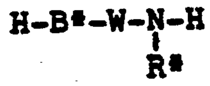

(16)

in which B*, W and R* have the meanings mentioned in claim 9 and claim 10, at a temperature between 20 and 100°C in the presence of a basic, acid-binding agent, and if desired reducing the resulting nitro compound of the formula (17) to the aniline compound of the formula (13).

12. Use of a compound of the formula (13) of claim 9 or of a compound of the formula (17) of claim 10, for synthesizing triphendioxazine compounds.

13. Use of a compound of the formula (1) mentioned and defined in claim 1 or of a compound of the formula (1) prepared as claimed in claim 8, for dyeing (including printing) hydroxyl- and/or carboxamido-containing material, in particular fiber material.

14. A process for dyeing (including printing) hydroxyl- and/or carboxamido-containing material, in particular fiber material, by bringing a dye onto or into the material and fixing it by means of heat and/or by means of an acid-binding agent, which comprises using as the dye a compound of the formula (1) mentioned and defined in claim 1.

**Claims for the Contracting States: BE, IT**

1. A water-soluble triphendioxazine compound conforming to the formula (1)

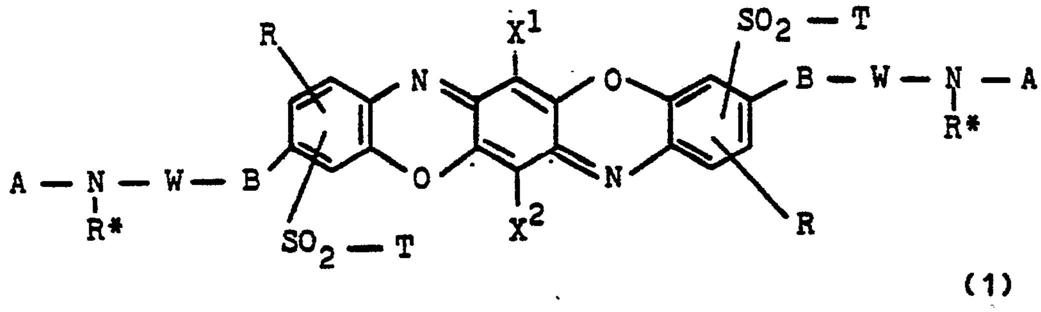

(1)

in which the meanings are:
T is a substituted or unsubstituted alkyl group of 1 to 6 carbon atoms, except an ethyl group which is substituted in the β-position by an alkalinically eliminatable substituent, which alkyl group can be additionally interrupted by hetero groups selected from groups of the formulae –O–, –S–, –NH– and –N(R')–,
where
R' is an alkyl group of 1 to 6 carbon atoms, which can be substituted,
or
T is a substituted or unsubstituted aryl group;
B is an oxygen or sulfur atom or an amino group of the formula –NH– and –N(R")–,
in which
R" is an alkyl group of 1 to 6 carbon atoms, which can be substituted, or
B forms together with W a direct bond,
W forms together with B a direct bond, or
W is a bivalent, substituted or unsubstituted aliphatic, araliphatic, heterocyclic or aromatic carbocyclic

radical, it being possible for the aliphatic radicals in W to be interrupted by hetero groups, preferably 1 or 2 hetero groups, these hetero groups being selected from groups of the formulae –O–, –S–, $-SO_2-$, –NH– and $-N(R^o)-$ and a bivalent heterocyclic radical, in which

$R^o$ is an alkyl group of 1 to 6 carbon atoms, preferably of 1 to 4 carbon atoms, which can be substituted, and/or it being possible for the aliphatic radicals and aryl radicals to be linked to one another by such a hetero group,

R is a hydrogen atom or an alkyl of 1 to 4 carbon atoms, which can be substituted, or an alkoxy of 1 to 4 carbon atoms, which can be substituted, or a halogen,

R* is a hydrogen atom or an alkyl group of 1 to 4 carbon atoms, which can be substituted, or a cycloalkyl group of 5 to 8 carbon atoms, or

R* and the bivalent radical W, if it contains an amino group, or a portion of the radical W form together with the two nitrogen atoms the radical of a 5- or 6-membered heterocycle;

A is a non-heterocyclic fiber-reactive group or

A is a radical of the formula (2)

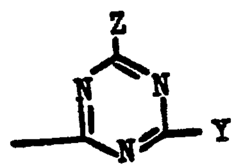

(2)

in which

Z is a fluorine, bromine or chlorine atom and

Y has one of the meanings of Z or is an amino group of the formula (3a)

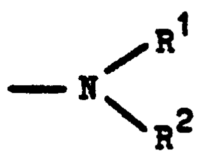

(3a)

in wich

$R^1$ is a hydrogen atom or an alkyl group of 1 to 6 carbon atoms, which can be substituted, it being possible for one of the substituents also to be a fiber-reactive group, or is a cycloalkyl group having 5 to 8 carbon atoms and

$R^2$ is a hydrogen atom or an alkyl group of 1 to 6 carbon atoms which can be substituted, it being possible for one of the substituents also to be a fiber-reactive group, or is a cycloalkyl group having 5 to 8 carbon atoms or is an aryl group which can be substituted, it being possible for one or two of these substituents in the aryl radical also to be a fiber-reactive group, or is a heterocyclic radical,, or

$R^1$ and $R^2$ together with the N-atom with or without a further hetero atom form the radical of a heterocycle, or

Y is a radical of the formula (3b)

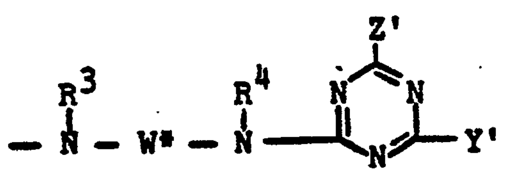

(3b)

in which $R^3$ and $R^4$ each denote a hydrogen atom or an alkyl group of 1 to 4 carbon atoms, such as the methyl or ethyl group, Z′ is a fluorine or bromine atom or preferably a chlorine atom, Y′ has one of the meanings of Y, except the meaning of a group of the formula (3b), and W* has one of the meanings of W;

$X^1$ is a hydrogen atom or a halogen atom, a cycloalkyl group of 5 to 8 carbon atoms, an aralkyloxy group, an alkoxy group of 1 to 4 carbon atoms, an aryloxy group, an alkyl group of 1 to 4 carbon atoms, an aryl group, an aralkyl group, a cyano group, a carboxyl group, a carbalkoxy group of 2 to 5 carbon atoms, an arylamino group, a carbamoyl group, an N-alkylcarbamoyl group or N,N-dialkylcarbamoyl group having alkyl radicals of 1 to 4 carbon atoms each, an N-arylcarbamoyl group, an alkanoylamino group of 2 to 5 carbon atoms or an aroylamino group, it being possible for the aryl radicals in these groups to be additionally substituted by 1 or 2 substituents from the group halogen, nitro, alkyl of 1 to 4 carbon atoms, alkoxy of 1 to 4 carbon atoms, carboxyl and sulfo;

$X^2$ is identical to or different from $X^1$ and has one of the meanings indicated for $X^1$;

the group $-SO_2-T$ is preferably bonded in the orthoposition relative to the group $-B-W-N(R^*)-A$; of the sulfo and sulfato groups which can be present in the molecule (1), the molecule (1) mandatorily contains at least one thereof, preferably at least two thereof.

2. A triphendioxazine compound as claimed in claim 1 of the formula (1a)

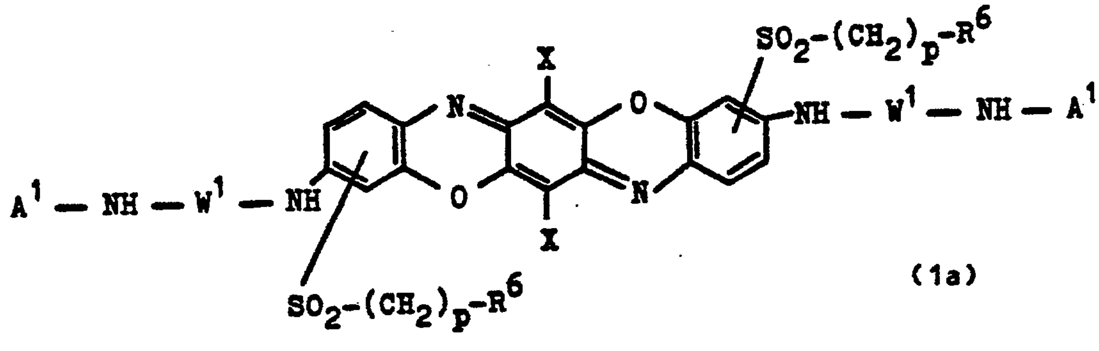

(1a)

in which
X is in each case a bromine atom or a chlorine atom,
p stands for the number 2 or 3,
$R^6$ denotes a sulfato, carboxyl or sulfo group, but in the case of p = 2 $R^6$ is not a sulfato group, or the group $-(CH_2)_p-R^6$ is the methyl group,
$W^1$ stands for an alkylene radical of 2 to 6 carbon atoms which can be substituted by a sulfo or sulfato group or a sulfophenyl group or denotes a cyclohexylene radical or a meta- or para-phenylene group or a meta- or para-phenylene group which is substituted by 1 or 2 sulfo groups and
$A^1$ stands for a triazine radical of the formula (2) in which Z denotes a fluorine or chlorine atom and Y is the 2,5-disulfophenyl group.

3. A triphendioxazine compound as claimed in claim 1 of the formula (1b)

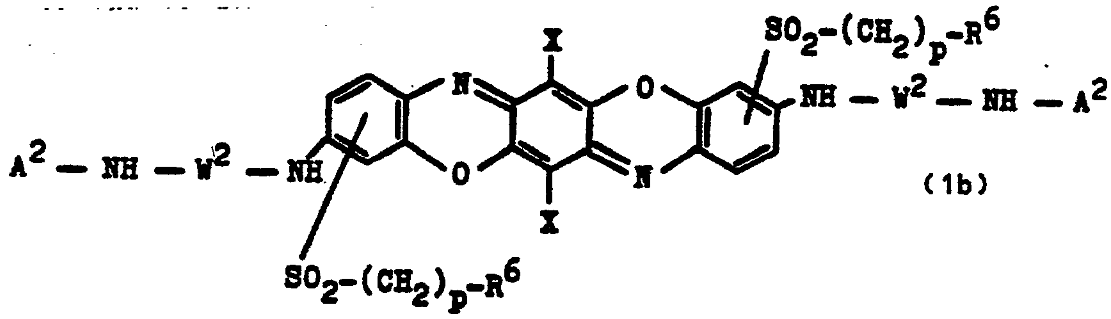

(1b)

in which
X is in each case a bromine atom or a chlorine atom,
p stands for the number 2 or 3,
$R^6$ denotes a sulfato, carboxyl or sulfo group, but in the case of p = 2 $R^6$ is not a sulfato group,
or the group $-(CH_2)p-R^6$ is the methyl group,
$W^2$ denotes the p-phenylene radical which is unsubstituted or substituted by 1 or 2 sulfo groups and
$A^2$ denotes a triazine radical of the formula (2) in which Z stands for the fluorine atom or chlorine atom and Y denotes a radical of the formula (7)

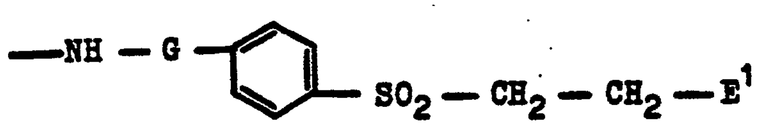

(7)

in which G stands for the methylene or 1,2-ethylene group or a direct bond and $E^1$ is a chlorine atom, a phosphato, acetyloxy or thiosulfato group or a sulfato group.

4. A compound as claimed in claim 1 of the formula

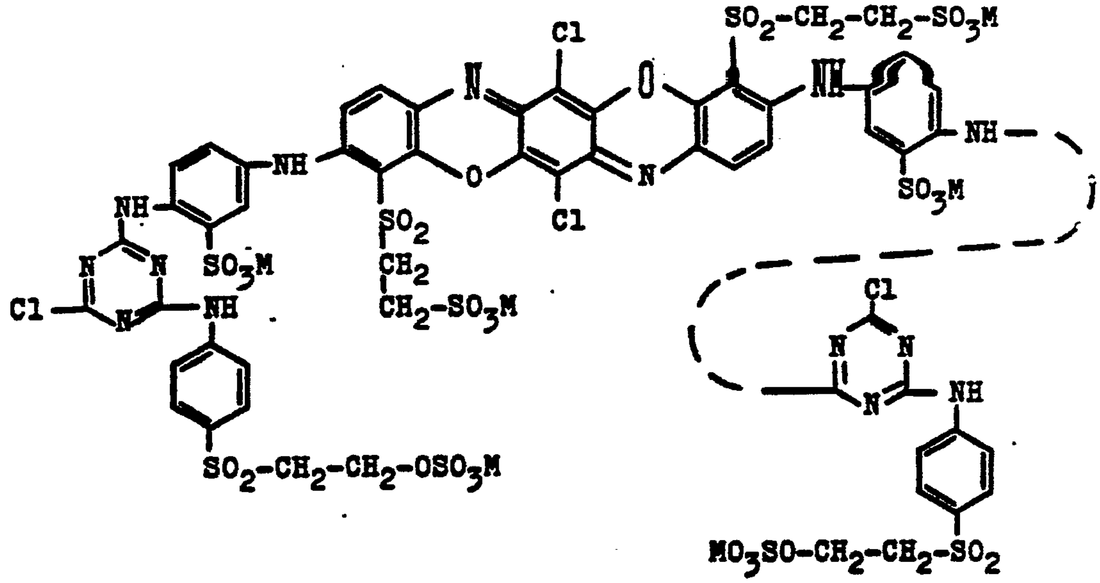

in which M is a hydrogen atom or an alkali metal.

5. A compound as claimed in one or more of claims 1 to 4, wherein $X^1$ and $X^2$ or both the X radicals each denote a chlorine atom.

6. A process for preparing the compound of the formula (1) mentioned and defined in claim 1, which comprises reacting 1 molecule of a dioxazine compound of the formula (8)

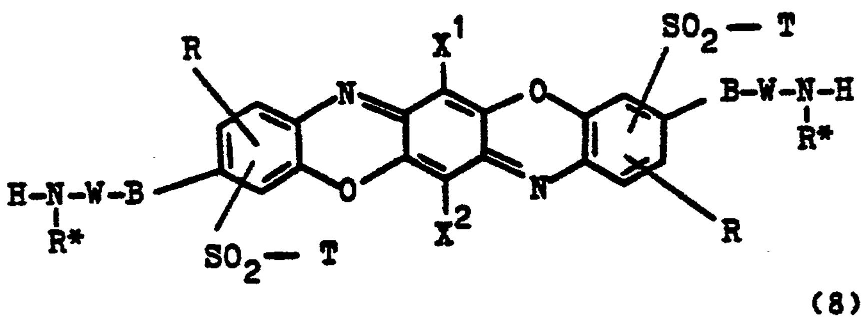

(8)

in which R*, R, B, W, T, $X^1$ and $X^2$ have the meanings mentioned in claim 1, with 2 molecules of a dihalogeno-triazine compound of the formula

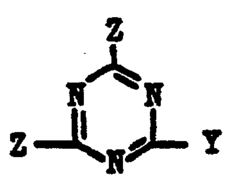

(9)

in which Z and Y have the meanings mentioned in claim 1, or

reacting 1 molecule of a dioxazine compound of the formula (8) with 2 molecules of a compound which is capable of introducing the acyl radical of a non-heterocyclic fiber-reactive group into the amino group –NR*H, or

reacting 1 molecule of a dioxazine compound of the formula (8) with 2 molecules of a compound of the formula (10)

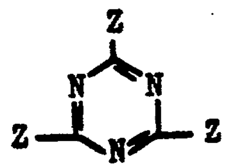

(10)

in which the Z have the abovementioned meanings, and reacting the resulting bis-dihalogenotriazinylamino compound of the formula (11)

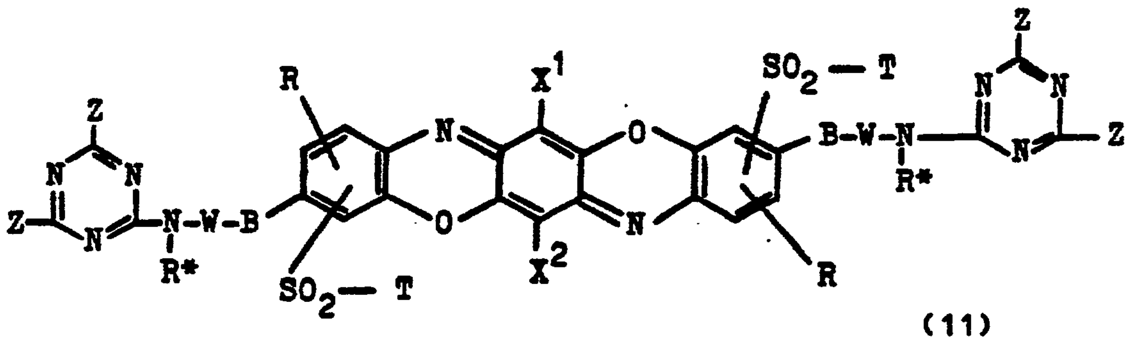

(11)

in which R*, R, B, W, T, Z, $X^1$ and $X^2$ have the meanings mentioned in claim 1, with twice the molar amount of an amino compound of the formula H–Y where Y has the meaning mentioned in claim 1.

7. A compound as claimed in claim 1, wherein T is the β-sulfoethyl or the methyl group.

8. A compound conforming to the formula (13)

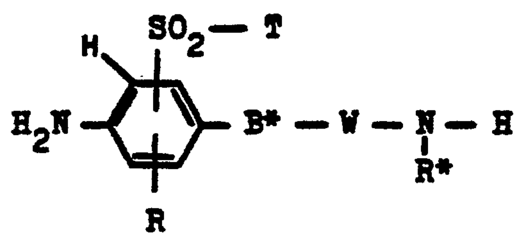

(13)

in which R*, R, W and T have the meanings mentioned in claim 1 and B* stands for the radical of the formula –NH– or –N(R″)–, where R″ has the meaning mentioned in claim 1, and where substituted alkyl groups in these radicals can also be hydroxyl-substituted alkyl groups.

9. A compound conforming to the formula (17)

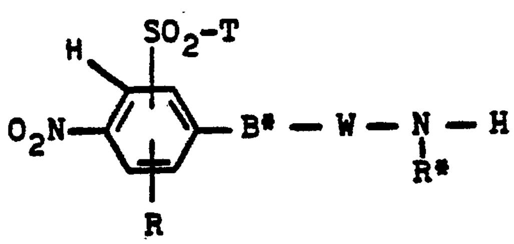

(17)

in which R, T, W and R* have the meanings mentioned in claim 1 and B* stands for the radical of the formula –NH– or –N(R″)–, where R″ has the meaning mentioned in claim 1, and where substituted alkyl groups in these radicals can also be hydroxyl-substituted alkyl groups.

10. A process for preparing a compound of the formula (17) as claimed in claim 9 or a compound of the formula (13) as claimed in claim 8, which comprises reacting a compound of the formula (15)

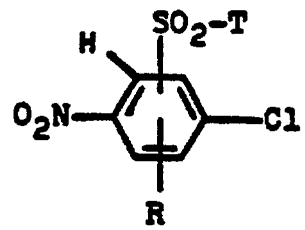

(15)

in which R and T have the meanings mentioned in claim 8 and claim 9, with an amino compound of the formula (16)

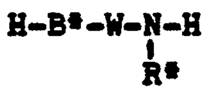

(16)

in which B*, W and R* have the meanings mentioned in claim 8 and claim 9, at a temperature between 20 and 100°C in the presence of a basic, acid-binding agent, and if desired reducing the resulting nitro compound of the formula (17) to the aniline compound of the formula (13).

11. Use of a compound of the formula (13) of claim 8 or of a compound of the formula (17) of claim 9, for synthesizing triphendioxazine compounds.

12. Use of a compound of the formula (1) mentioned and defined in claim 1 or of a compound of the formula (1) prepared as claimed in claim 6, for dyeing (including printing) hydroxyl- and/or carboxamido-containing material, in particular fiber material.

13. A process for dyeing (including printing) hydroxyl- and/or carboxamido-containing material, in particular fiber material, by bringing a dye onto or into the material and fixing it by means of heat and/or by means of an acid-binding agent, which comprises using as the dye a compound of the formula (1) mentioned and defined in claim 1.

**Revendications pour les Etats Contractants: CH, LI, DE, FR, GB**

1. Triphénodioxazine hydrosoluble répondant à la formule générale (1)

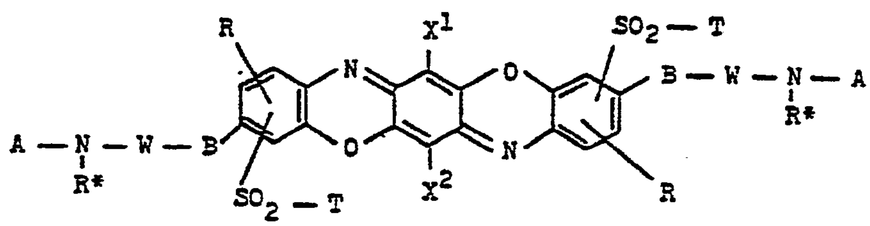

(1)

dans laquelle:
T représente un groupe alkyle, éventuellement substitué, ayant 1 à 6 atomes de carbone, à l'exclusion d'un groupe éthyle substitué en position 2 par un substituant éliminable par voie alcaline, le groupe alkyle pouvant encore être interrompu par des hétérogroupes choisis parmi –O–, –S–, –NH– et –N(R')–, où
R' représente un groupe alkyle ayant 1 à 6 atomes de carbone, qui peut être substitué, ou bien
T représente un groupe aryle éventuellement substitué;
B représente un atome d'oxygène ou de soufre ou un groupe amino de formule –NH– ou –N(R")–, dans laquelle R" est un groupe alkyle ayant 1 à 6 atomes de carbone, qui peut être substitué, ou bien
B forme avec W une liaison directe; W forme avec B une liaison directe ou bien
W représente un reste bivalent aliphatique, araliphatique, hétérocyclique ou carbocyclique aromatique éventuellement substitué, les restes aliphatiques présents dans W pouvant être interrompus par des hétéro-groupes, de préférence par un ou deux hétérogroupes, et ces hétérogroupes étant choisis parmi –O–, –S–, $-SO_2-$, –NH–, $-N(R^O)-$ et un reste hétérocyclique bivalent,
$R^O$ étant un groupe alkyle ayant 1 à 6 atomes de carbone, de préférence 1 à 4 atomes de carbone, qui peut être substitué,
et/ou les restes aliphatiques et les restes aryles pouvant être reliés les uns aux autres par un tel hétérogroupe;
R représente un atome d'hydrogène ou un groupe alkyle ayant 1 à 4 atomes de carbone, qui peut être

substitué, ou un groupe alcoxy ayant 1 à 4 atomes de carbone, qui peut être substitué, ou un atome d'halogène;
R* représente un atome d'hydrogène ou un groupe alkyle ayant 1 à 4 atomes de carbone, qui peut être substitué, ou un groupe cycloalkyle ayant 5 à 8 atomes de carbone, ou
R* et le reste bivalent W, dans la mesure où il contient un groupe amino, ou une partie du reste W forment avec les deux atomes d'azote du reste un hétérocycle pentagonal ou hexagonal;
A représente un groupe non hétérocyclique et qui peut réagir avec les fibres, ou bien
A représente un reste répondant à la formule générale (2)

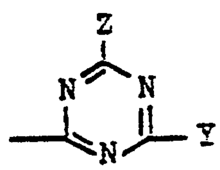

(2)

dans laquelle
Z représente un atome de fluor, de brome ou de chlore, et
Y a l'un des sens de Z ou représente un groupe amino de formule générale (3a)

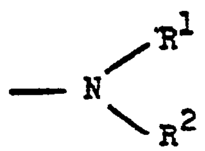

(3a)

dans laquelle
$R^1$ représente un atome d'hydrogène ou un groupe alkyle ayant 1 à 6 atomes de carbone, qui peut être substitué, l'un des substituants pouvant également être un groupe, capable de réagir avec les fibres et répondant à l'une des formules générales (4a), (4b), (5a) ou (5b)

$$-SO_2-CH=CH_2 \qquad (4a).$$

$$-SO_2-CH_2-CH_2-E \qquad (4b)$$

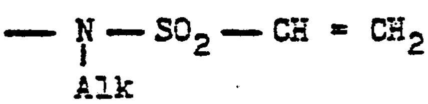

(5a)

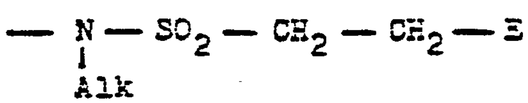

(5b)

formules dans lesquelles
E représente un substituant éliminable par voie alcaline et
Alk représente un atome d'hydrogène ou de préférence un groupe alkyle ayant 1 à 4 atomes de carbone, ou bien $R^1$ est un groupe cycloalkyle ayant 5 à 8 atomes de carbone, et
$R^2$ représente un atome d'hydrogène ou un groupe alkyle ayant 1 à 6 atomes de carbone, qui peut être substitué, l'un des substituants pouvant également être un groupe capable de réagir avec les fibres répondant aux formules générales (4a), (4b), (5a), ou (5b), ou bien $R^2$ représente un groupe cycloalkyle ayant 5 à 8 atomes de carbone ou un groupe aryle, qui peut être substitué, un ou deux de ces substituants de reste aryle pouvant également être un groupe capable de réagir avec les fibres répondant à la formule générale (4a), (4b), (5a) ou (5b), ou bien $R^2$ représente un reste hétérocyclique,
au moins l'un des restes (4a), (4b), (5a) ou (5b) étant cependant contenu dans $R^1$ ou $R^2$,
ou bien
$R^1$ et $R^2$ forment, avec l'atome de N et éventuellement un autre hétéroatome, le reste d'un hétérocycle,
ou
Y représente un reste de formule (3b)

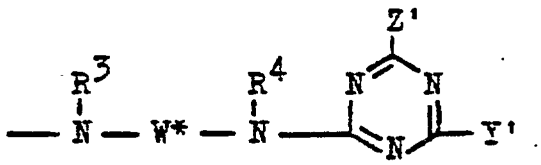

(3b)

dans laquelle $R^3$ et $R^4$ représentent chacun un atome d'hydrogène ou un groupe alkyle ayant 1 à 4 atomes de carbone,

Z' représente un atome de fluor ou de brome ou de préférence un atome de chlore; Y' a l'une des significations de Y, à l'exclusion du sens d'un groupe de formule (3b), et W* a l'un des sens de W;

$X^1$ représente un atome d'hydrogène ou un atome d'halogène, un groupe cycloalkyle ayant 5 à 8 atomes de carbone, un groupe aralkyloxy, un groupe alcoxy ayant 1 à 4 atomes de carbone, un groupe aryloxy, un groupe alkyle ayant 1 à 4 atomes de carbone, un groupe aryle, un groupe aralkyle, un groupe cyano, un groupe carboxy, un groupe carbalcoxy, ayant 2 à 5 atomes de carbone, un groupe arylamino, un groupe carbamoyle, un groupe N-alkyl-carbamoyle ou un groupe N,N-dialkyl-carbamoyle ayant des restes alkyles comportant chacun 1 à 4 atomes de carbone, un groupe N-aryl-carbamoyle, un groupe alcanoylamino ayant 2 à 5 atomes de carbone ou un groupe aroylamino, les restes aryles de ces groupes pouvant encore être substitués par un ou deux substituants choisis parmi un atome d'halogène, un groupe nitro, alkyle ayant 1 à 4 atomes de carbone, alcoxy ayant 1 à 4 atomes de carbone, carboxy et sulfo;

$X^2$ est identique à $X^1$ ou diffère de $X^1$ et a l'un des sens indiqués pour $X^1$;

le groupe $-SO_2-T$ est de préférence fixé en position ortho par rapport au groupe $-B-W-N(R^*)-A$;

parmi les groupes sulfo et sulfato pouvant être contenus dans la molécule (1), cette molécule (1) en contient obligatoirement au moins un, et de préférence au moins deux;

à l'exclusion du composé de formule (1), dans lequel $X^1$ et $X^2$ représentent tous deux, chacun, un atome de chlore, les deux R représentent chacun un atome d'hydrogène, les deux T représentent chacun un groupe sulfato-3 propyle, les deux B représentent chacun –NH–, les deux W représentent un groupe éthylene, les deux R* représentent un atome d'hydrogène et les deux A représentent un reste de formule (2), dans laquelle Z est un atome de fluor et Y représente un groupe (sulfato-2 éthylsulfonyl)-4 phénylamino, et le composé de formule (1), dans laquelle $X^1$ et $X^2$ représentent chacun un atome de chlore, les deux R représentent chacun un atome d'hydrogène, les deux T représentent chacun un groupe carboxy-2 éthyle, les deux B représentent chacun –NH–, les deux W représentent chacun un groupe sulfo-2 phénylène-1,4, les deux R* représentent chacun un atome d'hydrogène et les deux A représentent chacun un groupe difluoro-triazine symétrique.

2. Triphénodioxazines hydrosolubles répondant à la formule générale (1) indiquée à la revendication 1, dans laquelle

$X^1$, $X^2$, T, B, R et R* ont les sens indiqués à la revendication 1,

W représente un reste araliphatique, hétérocyclique ou carbocyclique aromatique éventuellement substitués, les restes aliphatiques présents dans W pouvant être interrompus par des hétérogroupes et ces hétérogroupes étant choisis parmi des groupes répondant aux formules –O–, –S–, $-SO_2-$, –NH–, $-N(R^o)-$ et un reste hétérocyclique bivalent,

$R^o$ représentant un groupe alkyle ayant 1 à 6 atomes de carbone, de préférence 1 à 4 atomes de carbone, qui peut être substitué, et/ou les restes aliphatiques et les restes aryles pouvant être reliés les uns aux autres par l'intermédiaire d'un tel hétérogroupe,

ou

B et W forment ensemble une liaison directe;

A représente un reste de formule générale (2)

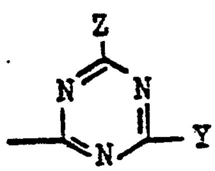

(2)

dans laquelle

Z représente un atome de fluor, de brome ou de chlore, et

Y représente un groupe amino de formule générale (3a)

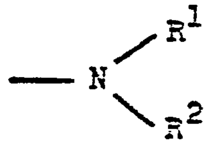

(3a)

dans laquelle

$R^1$ représente un atome d'hydrogène ou un groupe alkyle ayant 1 à 4 atomes de carbone, qui peut être substitué par un ou deux substituants, de préférence par un substituant, choisi(s) parmi les substituants suivants: un groupe alcoxy ayant 1 à 4 atomes de carbone, un atome de chlore, un groupe cyano, carboxy, sulfo, sulfato, phosphato, hydroxy, phényle (pouvant être substitué par un, deux ou trois substituants, choisis parmi trois groupes alkyles ayant 1 à 4 atomes de carbone, deux groupes alcoxy ayant 1 à 4 atomes de carbone, 1 atome de brome, 2 atomes de chlore, deux groupes sulfo et un groupe carboxy) et un groupe naphtyle (pouvant être substitué par un, deux ou trois groupes sulfo ou par un, deux ou trois substituants, choisis parmi deux groupes sulfo, un groupe carboxy, 1 atome de chlore, un groupe alkyle ayant 1 à 4 atomes de carbone et un groupe alcoxy ayant 1 à 4 atomes de carbone); ou dans lequel $R^1$ représente un groupe cycloalkyle ayant 5 à 8 atomes de carbone,

et

$R^2$ représente 1 atome d'hydrogène ou un groupe alkyle ayant 1 à 4 atomes de carbone (pouvant être substitué par un ou deux substituants, de préférence par un substituant, choisis parmi les substituants suivants: un groupe alcoxy ayant 1 à 4 atomes de carbone, un groupe sulfo, sulfato, phosphato, carboxy, chloro, cyano, hydroxy, cyclohexyle, phényle, (pouvant lui-même être substitué par un, deux ou trois substituants, choisis parmi trois groupes alkyles ayant 1 à 4 atomes de carbone, deux groupes alcoxy ayant 1 à 4 atomes de carbone, 1 atome de brome, 2 atomes de chlore, deux groupes sulfo et un groupe carboxy) et un groupe naphtyle, pouvant être substitué par un, deux ou trois groupes sulfo), ou dans lequel $R^2$ représente un groupe cycloalkyle ayant 5 à 8 atomes de carbone ou un reste naphtyle substitué par un, deux ou trois groupes sulfo ou le groupe phényle (qui peut être substitué par un, deux ou trois substituants, de préférence par un ou deux substituants, choisis parmi trois groupes alkyles ayant 1 à 4 atomes de carbone, deux groupes alcoxy ayant 1 à 4 atomes de carbone, 1 atome de brome, 2 atomes de chlore, deux groupes sulfo et un groupe carboxy), ou bien $R^2$ représente un reste hétérocyclique,

ou

Y représente un reste de formule (3b)

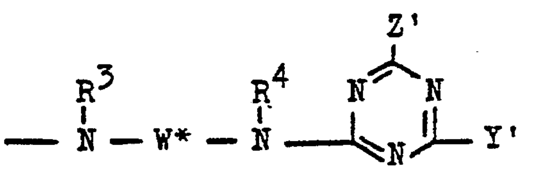

(3b)

dans laquelle $R^3$ et $R^4$ représentent chacun 1 atome d'hydrogène ou un groupe alkyle ayant 1 à 4 atomes de carbone, Z' représente 1 atome de fluor ou de brome ou de préférence 1 atome de chlore; Y' a l'un des sens de Y, sauf le sens d'un groupe de formule (3b), et W* possède l'un des sens de W indiqués à la revendication 1,

à l'exclusion d'un composé de formule (1), dans laquelle $X^1$ et $X^2$ représentent tous deux, simultanément, chacun un atome de chlore, les deux R représentent chacun un atome d'hydrogène, les deux T représentent chacun un groupe carboxy-2 éthyle, les deux B représentent chacun –NH–, les deux W représentent chacun un groupe sulfo-2 phénylène-1,4, les deux R* représentent chacun 1 atome d'hydrogène et les deux A représentent chacun un reste de formule (2), dans laquelle Z est un atome de chlore et Y représente un groupe sulfo-3 phényle.

3. Triphénodioxazines selon la revendication 2 de formule générale (1a)

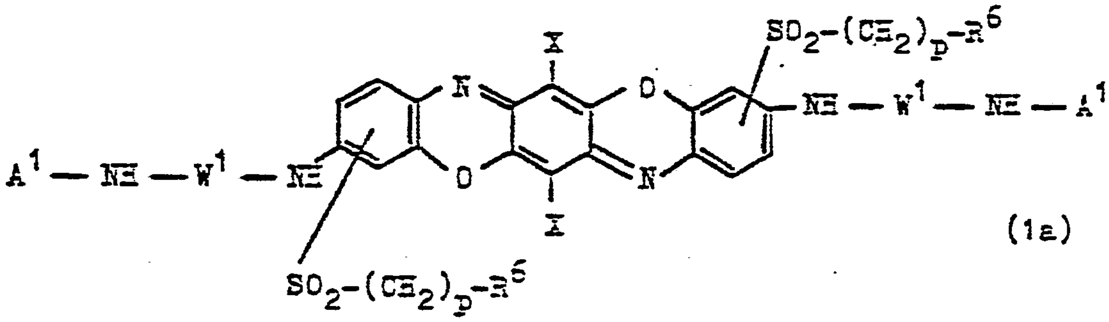

(1a)

dans laquelle
X représente chacun 1 atome de brome ou 1 atome de chlore,
p est un nombre valant 2 ou 3,
$R^6$ représente un groupe sulfato, carboxy ou sulfo mais, si p vaut 2, $R^6$ ne peut pas représenter un groupe sulfato,
ou bien le groupe $-(CH_2)_p-R^6$ représente le groupe méthyle,
$W^1$ représente un groupe méta- ou para- phénylène ou un groupe méta- ou para- phénylène substitués par un ou deux groupes sulfo, et
$A^1$ représente un reste triazine de formule générale (2), dans laquelle Z est 1 atome de fluor ou de chlore et Y est un groupe disulfo-2,5 phényle.

4. Triphénodioxazines selon la revendication 1, de formule générale (1b)

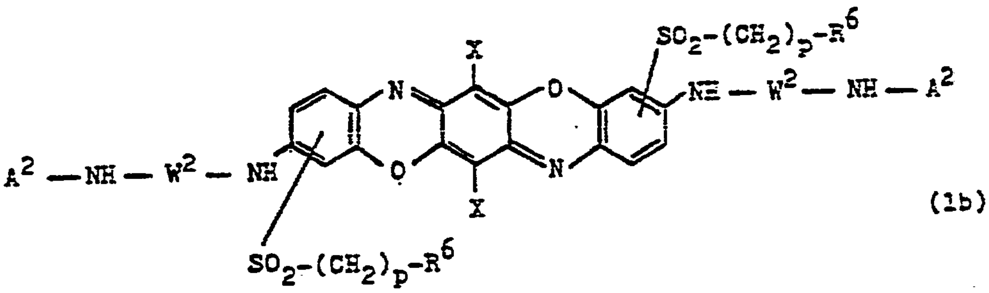

(1b)

dans laquelle
chaque X représente 1 atome de brome ou de chlore,
p est un nombre valant 2 ou 3,
$R^6$ représente un groupe sulfato, carboxy ou sulfo, mais, si p vaut 2, $R^6$ ne peut pas représenter un groupe sulfato;
ou bien le groupe $-(CH_2)_p-R^6$ représente le groupe méthyle;
W représente le reste p-phénylène, qui n'est pas substitué ou qui est substitué par un ou deux groupes sulfo, et
$A^2$ représente un reste triazine de formule générale (2), dans laquelle Z représente l'atome de fluor ou de chlore et Y est un reste de formule générale (7)

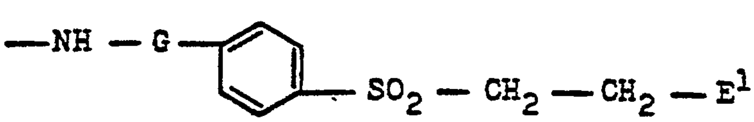

(7)

dans laquelle G représente le groupe méthylène ou le groupe éthylène-1,2 ou est une liaison directe, et $E^1$ représente 1 atome de chlore, un groupe phosphato, acétyloxy ou thiosulfato ou un groupe sulfato.

5. Composé selon la revendication 1 , de formule

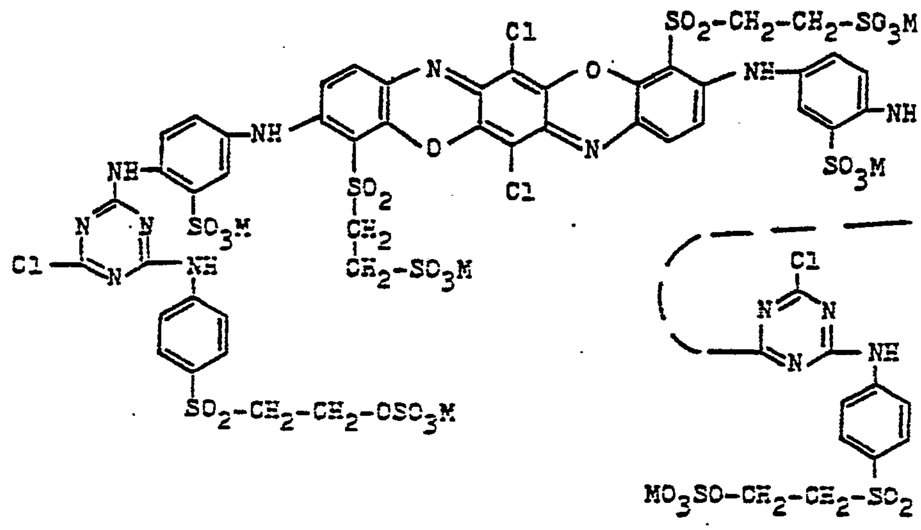

dans laquelle M représente 1 atome d'hydrogène ou un métal alcalin.

6. Composé selon une ou plusieurs des revendications 1 à 4, caractérisé en ce que $X^1$ et $X^2$, ou chacun des deux X représente 1 atome de chlore.

7. Composé selon la revendication 1 ou 2, caractérisé en ce que T représente le groupe sulfo-2 éthyle ou le groupe méthyle.

8. Procédé pour préparer un composé de formule générale (1), défini à la revendication 1 ou 2, procédé caractérisé en ce qu'on fait réagir une molécule d'une dioxazine de formule générale (8)

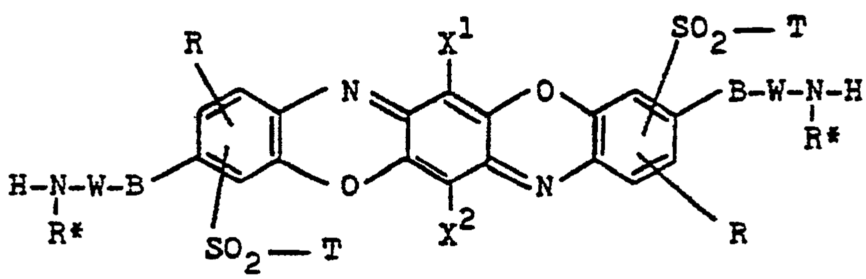

(8)

(dans laquelle R*, R, B, W, T, $X^1$ et $X^2$ ont les sens indiqués à la revendication 1 ou la revendication 2), avec deux molécules d'une dihalogéno-triazine de formule générale

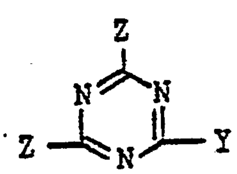

(9)

dans laquelle Z et Y ont les sens indiqués à la revendication 1 ou 2, ou

en ce qu'on fait réagir une molécule d'une dioxazine de formule générale (8) avec deux molécules d'un composé permettant d'introduire, dans le groupe amino –NR*H, le reste acyle d'un groupe non hétérocyclique capable de réagir avec les fibres, ou bien, en ce qu'on fait réagir une molécule d'une dioxazine de formule générale (8) avec deux molécules d'un composé de formule générale (10):

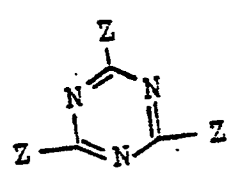

(10)

dans laquelle Z a les sens précités, et l'on fait réagir le composé bis-dihalogénotriazinylamino ainsi obtenu, de formule générale (11)

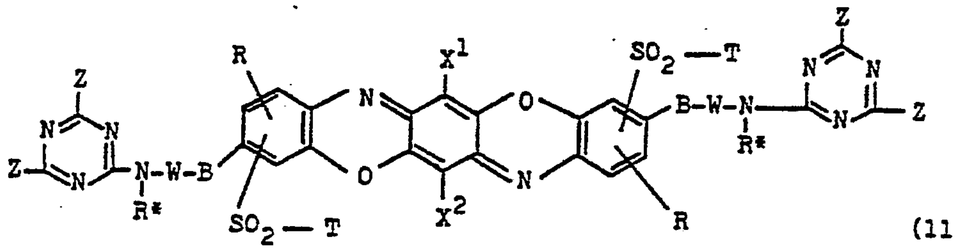

(11)

(dans laquelle R*, R, B, W, T, Z, $X^1$, $X^2$ ont le sens indiqué à la revendication 1 ou la revendication 2) avec la quantité molaire double d'une amine de formule générale H–Y, dans laquelle Y a le sens indiqué à la revendication 1 ou 2.

9. Composé répondant à la formule générale (13)

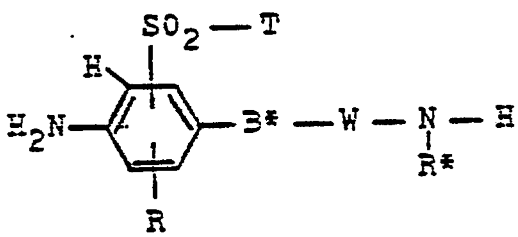

(13)

dans laquelle R*, R, W et T ont les sens indiqués à la revendication 1 et B* représente le reste de formule –NH– ou –N(R″)–, dans laquelle R″ a le sens indiqué à la revendication 1, et les groupes alkyles substitués présents dans ces restes pouvant également être des groupes hydroxy-alkyles, à l'exclusion des composés dans lesquels simultanément R représente un atome d'hydrogène, B* représente le groupe amino–NH–, W représente le reste éthylène, R* représente un atome d'hydrogène et T représente le groupe carboxy-2 éthyle ou le groupe benzyle, ou le groupe hydroxy-2 propyle ou, simultanément, R représente 1 atome d'hydrogène, B* représente le groupe amino–NH–, W représente le reste éthylène, R* représente le groupe hydroxy-2 éthyle et T représente le groupe carboxy-2 éthyle.

10. Composé répondant à la formule générale (17)

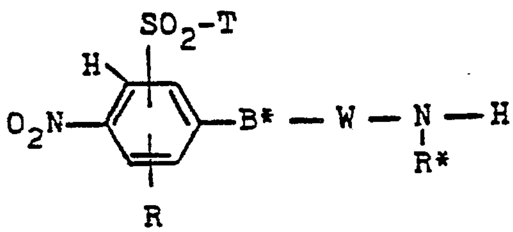

(17)

dans laquelle R, T, W et R* ont les sens indiqués à la revendication 1, et B* représente le reste de formule –NH– ou –N(R″)–, où R″ a le sens indiqué à la revendication 1, et les groupes alkyles substitués présents dans ces restes pouvant également être des groupes hydroxy alkyles, à l'exclusion des composés dans lesquels simultanément R représente 1 atome d'hydrogène, B* représente le groupe amino –NH–, W représente le reste éthylène, R* représente 1 atome d'hydrogène et T représente le groupe carboxy-2 éthyle ou le groupe benzyle ou le groupe hydroxy-2 propyle ou bien, simultanément, R représente 1 atome d'hydrogène, B* représente le groupe amino–NH–, W représente le reste éthylène, R* représente le groupe hydroxy-2 éthyle et T représente le groupe carboxy-2 éthyle.

11. Procédé pour préparer un composé de formule générale (17) de la revendication 10 ou un composé de formule générale (13) de la revendication 9, caractérisé en ce qu'on fait réagir un composé de formule générale (15)

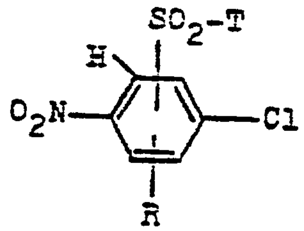

(15)

(dans laquelle R et T ont les sens indiqués à la revendication 9 ou à la revendication 10) avec une amine de formule générale (16)

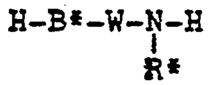

(16)

(dans laquelle B*, W et R* ont les sens indiqués à la revendication 9 ou à la revendication 10), avec addition d'un agent basique de fixation des acides, à une température comprise entre 20 et 100°C, et, éventuellement, on soumet le composé nitré ainsi obtenu, de formule générale (17) à réduction pour obtenir l'aniline de formule générale (13).

12. Utilisation d'un composé de formule générale (13) de la revendication 9 ou d'un composé de formule générale (17) de la revendication 10 pour la synthèse de triphénodioxazines.

13. Utilisation d'un composé de formule générale (1), cité et défini à la revendication 1, ou d'un composé de formule générale (1), préparé selon la revendication 8, pour teindre (ce qui comprend l'impression) d'une matière contenant des groupes hydroxyles et/ou carboxamido, en particulier une matière fibreuse.

14. Procédé pour teindre (ce qui comprend l'impression) d'une matière contenant des groupes hydroxyles et/ou carboxamido, en particulier une matière fibreuse, dans lequel on applique sur la matière un colorant où l'on fait pénétrer dans la matière un colorant que l'on fixe à l'aide de la chaleur et/ou à l'aide d'un agent de fixation des acides, procédé caractérisé en ce qu'on utilise comme colorant un composé de formule générale (1), cité et défini à la revendication 1.

**Revendications pour les Etats Contractants: BE, IT**

1. Triphénodioxazines hydrosolubles répondant à la formule générale (1)

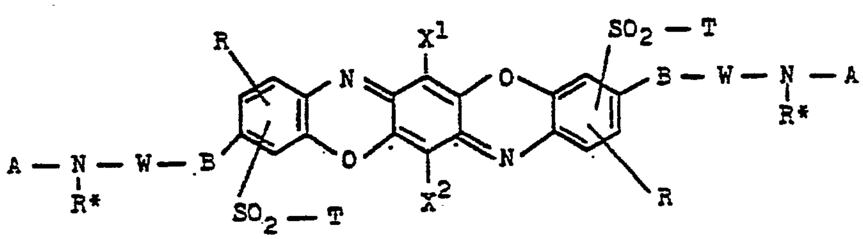

(1)

dans laquelle:
T représente un groupe alkyle, éventuellement substitué, ayant 1 à 6 atomes de carbone, à l'exclusion d'un groupe éthyle substitué en position 2 par un substituant éliminable par voie alcaline, le groupe alkyle pouvant encore être interrompu par des hétérogroupes choisis parmi –O–, –S–, –NH– et –N(R')–, où
R' représente un groupe alkyle ayant 1 à 6 atomes de carbone, qui peut être substitué, ou bien
T représente un groupe aryle éventuellement substitué;
B représente un atome d'oxygène ou de soufre ou un groupe amino de formule –NH– ou –N(R")–, dans laquelle R" est un groupe alkyle ayant 1 à 6 atomes de carbone, qui peut être substitué, ou bien
B forme avec W une liaison directe; W forme avec B une liaison directe ou bien
W représente un reste bivalent aliphatique, araliphatique, hétérocyclique ou carbocyclique aromatique éventuellement substitué, les restes aliphatiques présents dans W pouvant être interrompus par des hétéro-groupes, de préférence par un ou deux hétérogroupes, et ces hétérogroupes étant choisis parmi –O–, –S–, $-SO_2-$, –NH–, $-N(R^O)-$ et un reste hétérocyclique bivalent,
$R^O$ étant un groupe alkyle ayant 1 à 6 atomes de carbone, de préférence 1 à 4 atomes de carbone, qui peut être substitué,
et/ou les restes aliphatiques et les restes aryles pouvant être reliés les uns aux autres par un tel hétérogroupe;

R représente un atome d'hydrogène ou un groupe alkyle ayant 1 à 4 atomes de carbone, qui peut être substitué, ou un groupe alcoxy ayant 1 à 4 atomes de carbone, qui peut être substitué, ou un atome d'halogène;
R* représente un atome d'hydrogène ou un groupe alkyle ayant 1 à 4 atomes de carbone, qui peut être substitué, ou un groupe cycloalkyle ayant 5 à 8 atomes de carbone, ou
R* et le reste bivalent W, dans la mesure où il contient un groupe amino, ou une partie du reste W forment avec les deux atomes d'azote du reste un hétérocycle pentagonal ou hexagonal;
A représente un groupe non hétérocyclique et qui peut réagir avec les fibres, ou bien
A représente un reste répondant à la formule générale (2)

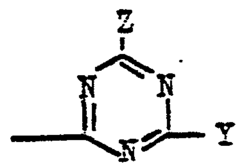

(2)

dans laquelle
Z représente un atome de fluor, de brome ou de chlore, et
Y a l'un des sens de Z ou représente un groupe amino de formule générale (3a)

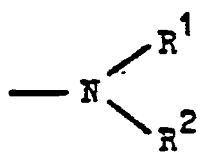

(3a)

dans laquelle
$R^1$ représente un atome d'hydrogène ou un groupe alkyle ayant 1 à 6 atomes de carbone, qui peut être substitué, l'un des substituants pouvant également être un groupe, capable de réagir avec les fibres, ou bien $R^1$ représente un groupe cycloalkyle ayant 5 à 8 atomes de carbone, et
$R^2$ représente un atome d'hydrogène ou un groupe alkyle ayant 1 à 6 atomes de carbone, qui peut être substitué, l'un des substituants pouvant également être un groupe pouvant réagir avec les fibres, ou bien $R^2$ représente un groupe cycloalkyle ayant 5 à 8 atomes de carbone ou est un groupe aryle, qui peut être substitué, un ou deux de ces substituants du reste aryle pouvant également être un groupe capable de réagir avec les fibres, ou bien $R^2$ représente un reste hétérocyclique, ou bien
$R^1$ et $R^2$ forment, avec l'atome de N et éventuellement un autre hétéroatome, le reste d'un hétérocycle, ou
Y représente un reste de formule (3b)

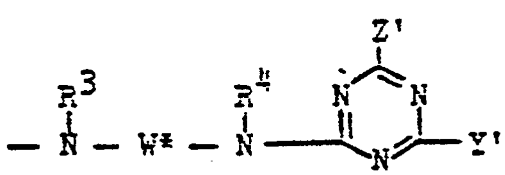

(3b)

dans laquelle $R^3$ et $R^4$ représentent chacun un atome d'hydrogène ou un groupe alkyle ayant 1 à 4 atomes de carbone,
Z' représente un atome de fluor ou de brome ou de préférence un atome de chlore; Y' a l'une des significations de Y, à l'exclusion du sens d'un groupe de formule (3b), et W* a l'un des sens de W;
$X^1$ représente un atome d'hydrogène ou un atome d'halogène, un groupe cycloalkyle ayant 5 à 8 atomes de carbone, un groupe aralkyloxy, un groupe alcoxy ayant 1 à 4 atomes de carbone, un groupe aryloxy, un groupe alkyle ayant 1 à 4 atomes de carbone, un groupe aryle, un groupe aralkyle, un groupe cyano, un groupe carboxy, un groupe carbalcoxy, ayant 2 à 5 atomes de carbone, un groupe arylamino, un groupe carbamoyle, un groupe N-alkyl-carbamoyle ou un groupe N,N-dialkyl-carbamoyle ayant des restes alkyles comportant chacun 1 à 4 atomes de carbone, un groupe N-aryl-carbamoyle, un groupe alcanoylamino ayant 2 à 5 atomes de carbone ou un groupe aroylamino, les restes aryles de ces groupes pouvant encore être substitués par un ou deux substituants choisis parmi un atome d'halogène, un groupe nitro, alkyle ayant 1 à 4 atomes de carbone, alcoxy ayant 1 à 4 atomes de carbone, carboxy et sulfo;
$X^2$ est identique à $X^1$ ou diffère de $X^1$ et a l'un des sens indiqués pour $X^1$;
le groupe $-SO_2-T$ est de préférence fixé en position ortho par rapport au groupe $-B-W-N(R^*)-A$;
parmi les groupes sulfo et sulfato pouvant être contenus dans la molécule (1), cette molécule (1) en contient obligatoirement au moins un, et de préférence au moins deux.

2. Triphénodioxazines selon la revendication 1 de formule générale (1a)

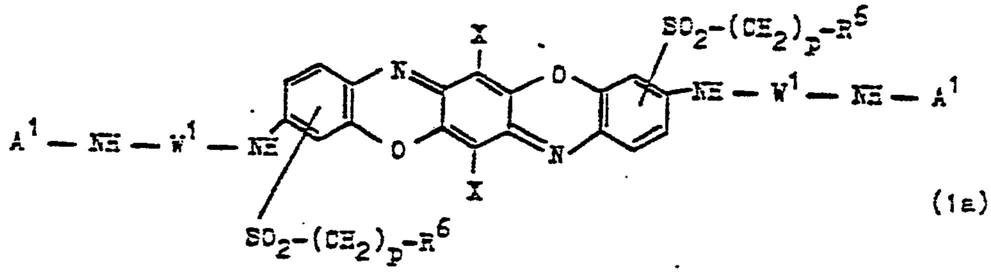

(1a)

dans laquelle
X représente chacun 1 atome de brome ou 1 atome de chlore,
p est un nombre valant 2 ou 3,
$R^6$ représente un groupe sulfato, carboxy ou sulfo mais, si p vaut 2, $R^6$ ne peut pas représenter un groupe sulfato,
ou bien le groupe $-(CH_2)_p-R^6$ représente le groupe méthyle,
$W^1$ représente un groupe méta- ou para- phénylène ou un groupe méta- ou para- phénylène substitués par un ou deux groupes sulfo, et
$A^1$ représente un reste triazine de formule générale (2), dans laquelle Z est 1 atome de fluor ou de chlore et Y est un groupe disulfo-2,5 phényle.

3. Triphénodioxazines selon la revendication 1 de formule générale (1b)

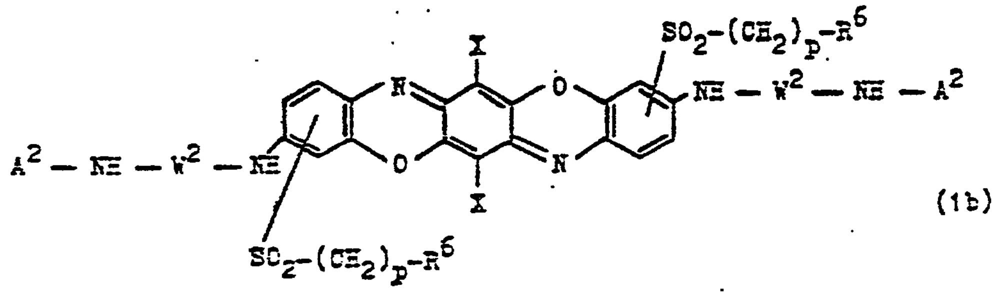

(1b)

dans laquelle
chaque X représente 1 atome de brome ou de chlore,
p est un nombre valant 2 ou 3,
$R^6$ représente un groupe sulfato, carboxy ou sulfo, mais, si p vaut 2, $R^6$ ne peut pas représenter un groupe sulfato;
ou bien le groupe $-(CH_2)_p-R^6$ représente le groupe méthyle;
W représente le reste p-phénylène, qui n'est pas substitué ou qui est substitué par un ou deux groupes sulfo, et
$A^2$ représente un reste triazine de formule générale (2), dans laquelle Z représente l'atome de fluor ou de chlore et Y est un reste de formule générale (7)

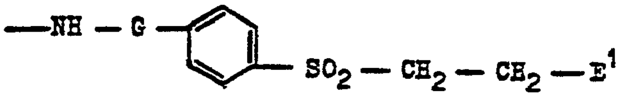

(7)

dans laquelle G représente le groupe méthylène ou le groupe éthylène-1,2 ou est une liaison directe, et $E^1$ représente 1 atome de chlore, un groupe phosphato, acétyloxy ou thiosulfato ou un groupe sulfato.

4. Composé selon la revendication 1, de formule

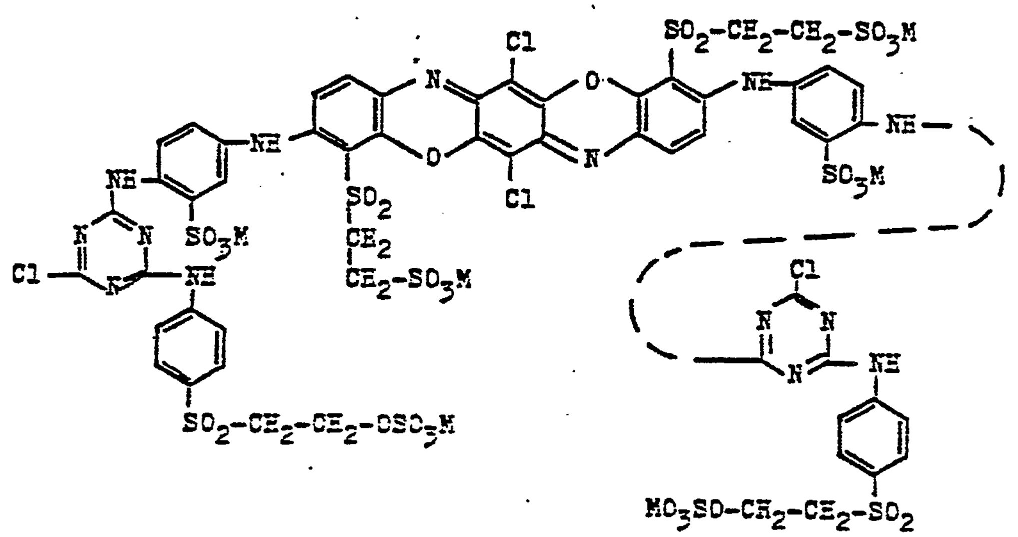

dans laquelle M représente 1 atome d'hydrogène ou un métal alcalin.

5. Composé selon une ou plusieurs des revendications 1 à 4, caractérisé en ce que $X^1$ et $X^2$, ou chacun des deux X représente 1 atome de chlore.

6. Procédé de préparation des composés de formule générale (1), cités et définis à la revendication 1, procédé caractérisé en ce qu'on fait réagir une molécule d'une dioxazine de formule générale (8)

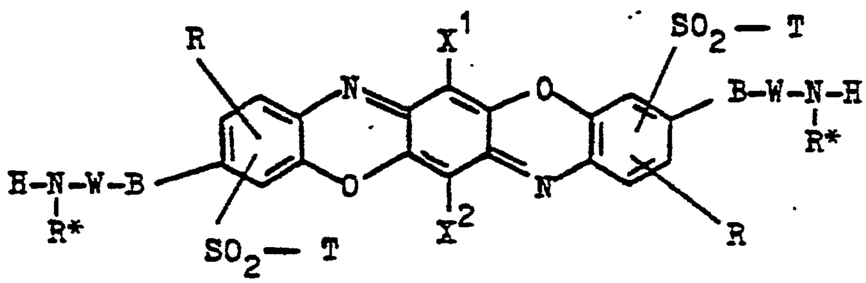

(8)

(dans laquelle R*, R, B, W, T, $X^1$ et $X^2$ ont les sens indiqués à la revendication 1), avec deux molécules d'une dihalogéno-triazine de formule générale:

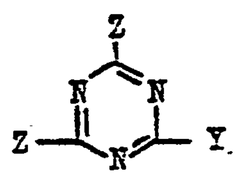

(9)

(dans laquelle Z et Y ont les sens indiqués à la revendication 1), ou bien, en ce qu'on fait réagir une molécule d'une dioxazine de formule générale (8) avec deux molécules d'un composé permettant d'introduire dans le groupe amino-NR*H le reste acyle d'un groupe non hétérocyclique, capable de réagir avec les fibres, ou bien

en ce qu'on fait réagir une molécule d'une dioxazine de formule générale (8) avec deux molécules d'un composé de formule générale (10)

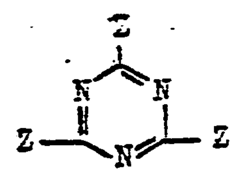

(10)

(dans laquelle les Z ont les sens précités) et l'on fait réagir le composé bis-dihalogéno-triazinylamino ainsi obtenu, de formule générale (11)

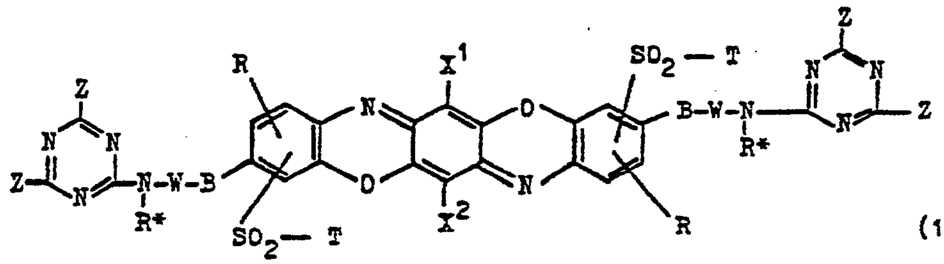

(11)

(dans laquelle R*, R, B, W, T, Z, $X^1$ et $X^2$ ont les sens indiqués à la revendication 1) avec la quantité molaire double d'une amine de formule générale H–Y, dans laquelle Y a le sens indiqué à la revendication 1.

7. Composé selon la revendication 1, caractérisé en ce que T représente le groupe sulfo-2 éthyle ou le groupe méthyle.

8. Composé répondant à la formule générale (13)

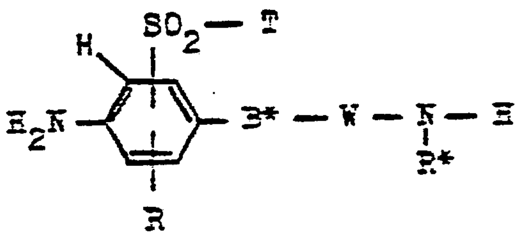

(13)

dans laquelle R*, R, W et T ont les sens indiqués à la revendication 1, et B* représente le reste de formule –NH– ou –N(R″)–, R″ ayant le sens indiqué à la revendication 1, et les groupes alkyles substitués présents dans ces restes pouvant être également des groupes hydroxyalkyles.

9. Composé répondant à la formule générale (17)

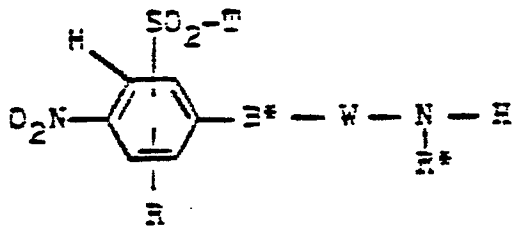

(17)

dans laquelle R, T, W et R* ont les sens indiqués à la revendication 1, et B* représente le reste de formule –NH– ou –N(R″)–, le symbole R″ ayant le sens indiqué à la revendication 1, et les groupes alkyles substitués présents dans ces restes pouvant être également des restes hydroxyalkyles.

10. Procédé pour préparer un composé de formule générale (17) selon la revendication 9, ou un composé de formule générale (13) selon la revendication 8, caractérisé en ce qu'on fait réagir un composé de formule générale (15)

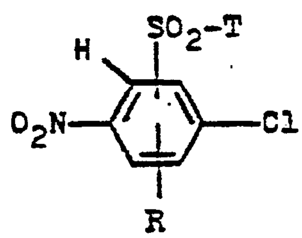

(15)

(dans laquelle R et T ont les sens indiqués à la revendication 8 ou à la revendication 9) avec une amine de formule générale (16)

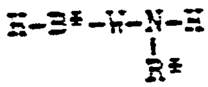

(16)

(dans laquelle B*, W et R* ont les sens indiqués à la revendication 8 ou à la revendication 9), avec addition d'un agent basique de fixation des acides, à une température comprise entre 20 et 100°C et, éventuellement, on soumet le composé nitré de formule (17), ainsi obtenu, à une réduction pour obtenir l'aniline de formule générale (13).

11. Utilisation d'un composé de formule générale (13) de la revendication 8 ou d'un composé de formule générale (17) de la revendication 9, pour effectuer la synthèse de triphénodioxazines.

12. Utilisation d'un composé de formule générale (1), cité et défini à la revendication 1, ou d'un composé préparé selon la revendication 6, de formule générale (1), pour teindre (ce qui comprend l'impression) d'une matière contenant des groupes hydroxyles et/ou carboxamides, notamment une matière fibreuse.

13. Procédé pour teindre (ce qui comprend l'impression) d'une matière contenant des groupes hydroxyles et/ou carboxamido, en particulier une matière fibreuse, dans lequel on applique sur la matière un colorant où l'on fait pénétrer dans la matière un colorant que l'on fixe à l'aide de la chaleur et/ou à l'aide d'un agent de fixation des acides, procédé caractérisé en ce qu'on utilise comme colorant un composé de formule générale (1), cité et défini à la revendication 1.